(19) Europäisches Patentamt
European Patent Office
Office européen des brevets

(11) **EP 4 716 176 A1**

(12) **EUROPEAN PATENT APPLICATION**
published in accordance with Art. 153(4) EPC

(43) Date of publication:
**25.03.2026 Bulletin 2026/13**

(21) Application number: **24830106.1**

(22) Date of filing: **22.04.2024**

(51) International Patent Classification (IPC):
**H04L 45/74** *(2022.01)*

(52) Cooperative Patent Classification (CPC):
**H04L 45/74**

(86) International application number:
**PCT/CN2024/089064**

(87) International publication number:
**WO 2025/001457 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.06.2023 CN 202310784326
19.07.2023 CN 202310892814**

(71) Applicant: **Huawei Technologies Co., Ltd.
Shenzhen, Guangdong 518129 (CN)**

(72) Inventors:
• **LIU, Chunchi**
  **Shenzhen, Guangdong 518129 (CN)**
• **ZHANG, Yijiong**
  **Shenzhen, Guangdong 518129 (CN)**
• **LI, Min**
  **Shenzhen, Guangdong 518129 (CN)**
• **WU, Qin**
  **Shenzhen, Guangdong 518129 (CN)**

(74) Representative: **Maiwald GmbH
Elisenhof
Elisenstraße 3
80335 München (DE)**

(54) **FORWARDING PROOF ACQUISITION METHOD AND DEVICE, AND FORWARDING PROOF VERIFICATION METHOD AND DEVICE**

(57) Embodiments of this application provide a proof of transit obtaining method, a proof of transit verification method, and an apparatus, to obtain a proof of transit based on a location of a forwarding node on a forwarding path and an identity of the forwarding node, so that location binding of the proof of transit is implemented. The proof of transit is not only related to the identity of the forwarding node, but also related to the location of the forwarding node on the forwarding path. A correct proof of transit can be computed only by a correct node when a data packet is forwarded to a correct location on the forwarding path, so that the proof of transit is strongly bound to an actual forwarding status of the data packet. In a forwarding process, if a data packet skips a node on the path, or passes through an extra or unspecified node, verification on the proof of transit obtained based on the identity of the node and the location of the node cannot succeed because the identity of the node and the location of the node no longer correspond to each other, so that trustworthiness of the proof of transit is improved.

FIG. 3

## Description

This application claims priorities to Chinese Patent Application No. 202310784326.7, filed on June 28, 2023 and entitled "PACKET FORWARDING PATH LOCKING AND ORDER-PRESERVING FORWARDING VERIFICATION METHOD", and to Chinese Patent Application No. 202310892814.X, filed on July 19, 2023 and entitled "PROOF OF TRANSIT OBTAINING METHOD, PROOF OF TRANSIT VERIFICATION METHOD, AND APPARATUS", both of which are incorporated herein by reference in its entirety.

## TECHNICAL FIELD

This application relates to the field of network technologies, and specifically, to a proof of transit obtaining method, a proof of transit verification method, and an apparatus.

## BACKGROUND

A proof of transit refers to a type of data generated for verifying a forwarding status of a data packet in a process of forwarding the data packet. The proof of transit helps reduce a probability that the data packet is tampered with or forged in the forwarding process, to improve transmission security of the data packet.

Currently, if a data packet is not forwarded hop by hop along a designated path, but skips a node on the forwarding path, or passes through an extra or unspecified node, verification on a proof of transit obtained in this scenario can still succeed at a probability. This indicates that trustworthiness of the proof of transit is insufficient.

## SUMMARY

Embodiments of this application provide a proof of transit obtaining method, a proof of transit verification method, and an apparatus, to improve trustworthiness of a proof of transit. Technical solutions are as follows.

According to a first aspect, a proof of transit obtaining method is provided. The method includes: A first forwarding node obtains a first data packet, where a forwarding path of the first data packet includes at least two forwarding nodes, and the at least two forwarding nodes include the first forwarding node. The first forwarding node obtains location information of the first forwarding node and identity information of the first forwarding node, where the location information of the first forwarding node indicates a first location of the first forwarding node on the forwarding path, and the identity information of the first forwarding node indicates an identity of the first forwarding node. The first forwarding node obtains a first proof of transit based on the location information of the first forwarding node and the identity information of the first forwarding node, where the first proof of transit is for proving that the first forwarding node is at the first location on the forwarding path.

Based on the method provided in the first aspect, a proof of transit is obtained based on a location of a forwarding node on the forwarding path and an identity of the forwarding node, so that location binding of the proof of transit is implemented. That is, the proof of transit is not only related to the identity of the forwarding node, but also related to the location of the forwarding node on the forwarding path. Therefore, a correct proof of transit can be computed only by a correct node when a data packet is forwarded to a correct location on the forwarding path, so that the proof of transit is strongly bound to an actual forwarding status of the data packet. For example, in a forwarding process, if a data packet skips a node on the path, or passes through an extra or unspecified node, verification on the proof of transit obtained based on the identity of the node and the location of the node cannot succeed because the identity of the node and the location of the node no longer correspond to each other, so that trustworthiness of the proof of transit is improved.

In some possible implementations, the at least two forwarding nodes further include a second forwarding node, the second forwarding node is an upstream node of the first forwarding node on the forwarding path, and that the first forwarding node obtains the first proof of transit based on the location information of the first forwarding node and the identity information of the first forwarding node includes: The first forwarding node obtains the first proof of transit based on the location information of the first forwarding node, the identity information of the first forwarding node, location information of the second forwarding node, and identity information of the second forwarding node, where the location information of the second forwarding node indicates a second location of the second forwarding node on the forwarding path, and the identity information of the second forwarding node indicates an identity of the second forwarding node.

Because the proof of transit is obtained based on locations of a plurality of forwarding nodes and identities of the plurality of forwarding nodes, the obtained proof of transit can be for verifying, at a time, whether the plurality of nodes are at corresponding locations on the forwarding path, overall verification performance of the forwarding path is improved by using an advantage of batch processing, and time for proof computation and verification is saved. In addition, in this manner, time consumed for obtaining the proof of transit almost does not linearly increase as a quantity of nodes on the forwarding path increases, so that the manner is more applicable to large-scale networking, and scalability is improved.

In some possible implementations, the second forwarding node includes at least one of a 1st forwarding node on

the forwarding path to a previous forwarding node of the first forwarding node on the forwarding path. For example, the second forwarding node includes each of the 1st forwarding node on the forwarding path to the previous forwarding node of the first forwarding node on the forwarding path.

The proof of transit is obtained based on a location and an identity of each of the head node to a previous node of a current node on the forwarding path, so that the location and the identity of each node that the packet has passed through on the forwarding path can be verified at a time, time costs and computation costs are reduced, verification efficiency is improved, and verification is more complete.

In some possible implementations, after the first forwarding node obtains the first proof of transit based on the location information of the first forwarding node and the identity information of the first forwarding node, the method further includes: The first forwarding node verifies the first proof of transit based on a vector commitment, the location information of the first forwarding node, the identity information of the first forwarding node, the location information of the second forwarding node, and the identity information of the second forwarding node, where the vector commitment indicates correspondences between locations of the at least two forwarding nodes and identities of the at least two forwarding nodes.

The proof of transit related to the plurality of nodes is verified based on the vector commitment, so that whether the plurality of nodes are all at the corresponding correct locations on the forwarding path can be verified at a time, and verification does not need to be separately performed on a proof of transit of each node. In this way, a quantity of times of verification that needs to be performed on the forwarding path as a whole is reduced, and a verification speed is accelerated. In addition, a verification scope covers locations and identities of the plurality of nodes, and more comprehensive verification is implemented.

In some possible implementations, after the first forwarding node obtains the first proof of transit based on the location information of the first forwarding node and the identity information of the first forwarding node, the method further includes: The first forwarding node obtains a second data packet based on the first data packet and the first proof of transit, where the first data packet includes payload data, and the second data packet includes the first proof of transit and the payload data. The first forwarding node sends the second data packet to a third forwarding node, where the third forwarding node is a next node of the first forwarding node on the forwarding path.

Because a proof of transit of the current node is carried in a data packet transmitted by the current node to a next node, the next node verifies a data source based on the proof of transit of the current node, to improve network security. If attackers hijack and/or divert the data packet from the current node to a device controlled by the attackers, and then forwards the data packet back to a downstream node of the current node on the forwarding path, the downstream node of the current node can identify a problem of the data source based on a proof of transit verification failure, to reduce risks of further transmission of the attack packet.

In some possible implementations, the first data packet further includes a second proof of transit, and that the first forwarding node obtains the second data packet based on the first data packet and the first proof of transit includes: The first forwarding node replaces the second proof of transit in the first data packet with the first proof of transit, to obtain the second data packet; or the first forwarding node adds the first proof of transit to the first data packet, to obtain the second data packet.

A proof of transit of a previous hop is replaced with a proof of transit of a current node, so that the packet does not need to store the proof of transit of each node that has been passed through, to avoid that a quantity of packet bytes occupied by the proof increases as a quantity of nodes increases, and save space of the packet. In addition, in the forwarding process, the data packet only needs to carry a proof of one node, and does not need to carry proofs of the plurality of nodes, so that a network resource that needs to be occupied for proof transmission is saved.

In some possible implementations, the second data packet further includes a vector commitment, and the vector commitment indicates a correspondence between the location of the first forwarding node and the identity of the first forwarding node and a correspondence between the location of the second forwarding node and the identity of the second forwarding node.

The vector commitment is carried in the data packet transmitted by the current node to the next node, so that the next node verifies the data source based on the vector commitment, to improve the network security.

In some possible implementations, the second data packet includes an internet protocol version 6 IPv6 extension header, and the IPv6 extension header includes the first proof of transit and the vector commitment. This is applicable to a scenario like an IPv6 network, and a function of verifying the data source based on the proof of transit in the IPv6 network is provided.

In some possible implementations, the second data packet includes a network service header NSH, the NSH includes a metadata field, and the metadata field includes the first proof of transit and the vector commitment. This is applicable to a scenario like service function chaining, to facilitate verification of whether the data packet is sequentially forwarded based on an order specified by the service function chaining.

In some possible implementations, the second data packet includes a multi-protocol label switching MPLS header, and the MPLS header includes the first proof of transit and the vector commitment. This is applicable to a scenario like MPLS protocol-based communication, and provides a mechanism for verifying the data source in an MPLS network, to facilitate verification of whether the data packet is sequentially forwarded based on an order specified by an MPLS tunnel.

In some possible implementations, the second data packet includes a virtual extensible local area network VXLAN header, and the VXLAN header includes the first proof of transit and the vector commitment. This is applicable to a scenario like a VXLAN protocol-based virtualized network or cross-data center interconnection, and provides a function of verifying the data source on a VXLAN tunnel, to facilitate verification of whether the data packet is sequentially forwarded based on an order specified by the VXLAN tunnel.

In some possible implementations, the second data packet includes an internet protocol security IPsec header, and the IPsec header includes the first proof of transit and the vector commitment. This is applicable to a scenario like IPsec protocol-based virtual private network (VPN) or secure communication, and provides a capability of verifying the data source on an IPsec tunnel, to facilitate verification of whether the data packet is sequentially forwarded based on an order specified by the IPsec tunnel.

In some possible implementations, the IPv6 extension header includes a segment routing header SRH, the SRH includes a first type-length-value TLV and a second TLV, the first TLV in the SRH includes the first proof of transit, and the second TLV in the SRH includes the vector commitment; the IPv6 extension header includes an application-aware networking APN packet header, the APN packet header includes an application-aware networking identifier APN ID, and the APN ID includes the first proof of transit and the vector commitment; the IPv6 extension header includes a destination options header DOH, the DOH includes a first TLV and a second TLV, the first TLV in the DOH includes the first proof of transit, and the second TLV in the DOH includes the vector commitment; or the IPv6 extension header includes a hop-by-hop options header HBH, the HBH includes a first TLV and a second TLV, the first TLV in the HBH includes the first proof of transit, and the second TLV in the HBH includes the vector commitment.

The foregoing manners provide a plurality of manners of carrying the proof of transit in the IPv6 network, and match richer application scenarios.

In some possible implementations, the first data packet includes a first encrypted route table entry, and that the first forwarding node sends the second data packet to the third forwarding node includes: The first forwarding node decrypts the first encrypted route table entry by using a key of the first forwarding node, to obtain an identifier of the third forwarding node; and the first forwarding node sends the second data packet to the third forwarding node based on the identifier of the third forwarding node; or the first forwarding node decrypts the first encrypted route table entry by using a key of the first forwarding node, to obtain an egress interface of the first forwarding node; and the first forwarding node sends the second data packet based on the egress interface of the first forwarding node, where the egress interface of the first forwarding node is configured to communicate with the third forwarding node.

Because an identifier of the next forwarding node can be learned of only through decryption based on a key of the current node, confidentiality of the identifier of the next forwarding node is improved, and the attackers cannot learn of a next-hop node of a node without a key of the node, so that the attackers cannot compute a proof of transit in advance by using a known location and identity of the node, difficulty in cracking the proof of transit is increased, and the network security is further improved. In addition, when the attackers attempt to skip a node and directly forward data to a subsequent node of the node, an identifier of the subsequent node cannot be decrypted because the attackers cannot obtain a key of the node, so that violation forwarding of the data is suspended, and an effect of passive interception is achieved.

In some possible implementations, the second data packet includes a second encrypted route table entry, the second encrypted route table entry is obtained through encryption based on a key of the third forwarding node, and the second encrypted route table entry indicates a forwarding subpath, within the forwarding path, from the third forwarding node to a fifth forwarding node.

Because information about a subsequent path of the next node is encrypted based on a key of the next node, the current node cannot learn of an identifier of any subsequent node after the next hop in advance because the current node does not have the key of the next node. In this manner, a structure of a route table is similar to that of an onion stripped layer by layer. Each layer (a node) can learn of only information about a next layer (a next node) but cannot learn of information about a node at a deeper layer, so that path hiding is implemented, and a possibility that the attackers compute the proof of transit in advance in a transmission process is reduced. In this way, the attackers cannot obtain a complete path and identity information at the beginning and compute the proof of transit in advance.

In some possible implementations, the second encrypted route table entry includes at least one of node identifier ciphertext or egress interface ciphertext, the node identifier ciphertext is ciphertext obtained by encrypting an identifier of the fifth forwarding node based on the key of the third forwarding node, the egress interface ciphertext is ciphertext obtained by encrypting an identifier of an egress interface of the third forwarding node based on the key of the third forwarding node, and the egress interface of the third forwarding node is configured to communicate with the fifth forwarding node.

In some possible implementations, the first data packet includes a second proof of transit, and that the first forwarding node obtains the first data packet includes: receiving, by the first forwarding node, the first data packet from the second forwarding node, where the second forwarding node is the upstream node of the first forwarding node on the forwarding path; and the method further includes: The first forwarding node verifies the second proof of transit based on a vector commitment, the identity information of the second forwarding node, and the location information of the second forwarding node, where the vector commitment indicates a correspondence between the location of the first forwarding node and the identity of the first forwarding node and a correspondence between the location of the second forwarding node and the identity of the second forwarding node.

In some possible implementations, that the first forwarding node verifies the second proof of transit based on the vector commitment, the identity information of the second forwarding node, and the location information of the second forwarding node includes: The first forwarding node verifies the second proof of transit based on the vector commitment, the identity information of the second forwarding node, the location information of the second forwarding node, identity information of a fourth forwarding node, and location information of the fourth forwarding node, where the fourth forwarding node includes at least one of the head node on the forwarding path to a previous forwarding node of the second forwarding node on the forwarding path.

A proof of transit of a previous-hop node is verified based on the vector commitment, so that whether a location of the previous-hop node corresponds to an identity thereof can be determined, and a risk caused by an incorrect data source is reduced. In addition, verification on each node is based on verification on a previous hop. This is equivalent to forming a continuous verification chain, so that a probability that any-hop node on the forwarding path forges the data packet, deceives about the data packet, or tampers with the data packet is reduced, and network security is improved.

In some possible implementations, after the first forwarding node verifies the second proof of transit based on the vector commitment, the identity information of the second forwarding node, and the location information of the second forwarding node, the method further includes: In response to determining that the verification on the second proof of transit fails, the first forwarding node discards the first data packet, or outputting alert information; or in response to determining that the verification on the second proof of transit succeeds, the first forwarding node forwards the first data packet.

A data packet including a proof on which verification fails is discarded, to avoid that the packet with a problematic data source is further transmitted from the current node to a next node, so that further propagation of the data packet with the problematic data source is quickly prevented, a probability of unauthorized data access and tampering is reduced, a possibility of a network attack is reduced, and the network security is improved. The alert information is output, so that a management plane or a control plane learns, in time, of a case in which the verification on the proof fails, and a risk of the network attack is reduced.

In some possible implementations, the vector commitment includes at least one of a KZG polynomial commitment, a fast Reed-Solomon interactive oracle proof FRI commitment, a succinct non-interactive argument of knowledge SNARK proof, an RSA accumulator, an FC function commitment, a Pedersen commitment, a Merkle tree Merkle tree commitment, or a Verkle tree commitment.

Because the KZG polynomial commitment has constant-time computation complexity during commitment computation and proof opening, and is almost not affected by a quantity of pieces of committed information, to avoid that verification time of the proof of transit super-linearly increases as the quantity of nodes on the forwarding path increases, so that the verification time of the proof of transit is as short as possible.

In some possible implementations, after the first forwarding node obtains the first proof of transit based on the location information of the first forwarding node and the identity information of the first forwarding node, the method further includes: The first forwarding node sends the first proof of transit to a verification node.

The proof of transit is transmitted to the verification node, so that the verification node verifies the proof of transit in real time in the forwarding process of the packet.

In some possible implementations, a packet header in the first data packet includes a trusted-path identifier, the trusted-path identifier indicates to obtain a proof of transit, and that the first forwarding node obtains the first proof of transit based on the location information of the first forwarding node and the identity information of the first forwarding node includes: In response to identifying the trusted-path identifier in the first data packet, the first forwarding node obtains the first proof of transit based on the location information of the first forwarding node and the identity information of the first forwarding node.

In some possible implementations, the packet header in the first data packet includes an IPv6 base header, a destination address field in the IPv6 base header includes a segment identifier SID of the first forwarding node, and the SID of the first forwarding node includes the trusted-path identifier.

The trusted-path identifier is included in a packet header in the data packet, so that the forwarding node determines, depending on whether there is an identifier, whether the proof of transit needs to be generated. In this way, a proof of transit does not need to be generated for each data packet, and proofs of transit need to be generated for which packets does not need to be preconfigured on the forwarding node, so that a configuration procedure is simplified, and configuration complexity is reduced.

In some possible implementations, the SID of the first forwarding node includes a function field, and the function field includes the trusted-path identifier; or the SID of the first forwarding node includes an arguments field, and the arguments field includes the trusted-path identifier.

Because the trusted-path identifier is carried in the SID, this is more applicable to an SRv6 scenario. For example, a SID carried in SRv6 encapsulation may be reused, and no additional field or packet header needs to be added to the packet to carry the trusted-path identifier. This helps simplify a packet format and reduce packet transmission overheads.

In some possible implementations, the identity information of the first forwarding node includes an address, a certificate, a public key, the segment identifier SID, a multi-protocol label switching MPLS label, an access control token token, a router identifier router ID, or a host name.

The proof of transit is computed and verified by using public and verifiable identity information, so that difficulty in obtaining the identity information is reduced, and complexity of computing and verifying the proof of transit based on the identity information is reduced.

In some possible implementations, the identity information of the first forwarding node includes identity information obtained through encryption based on the key of the first forwarding node.

The proof of transit is computed or verified by using the encrypted identity information. Because security and privacy of the identity information is higher, security and privacy of computing and verifying the proof of transit are further improved.

In some possible implementations, the identity information obtained through encryption based on the key of the first forwarding node includes at least one of a signature, a message authentication code MAC tag, a zero-knowledge NIZK proof, or a Sigma protocol proof.

The NIZK proof is used as the identity information to compute and verify the proof of transit. This can hide a real identity of the forwarding node, and reduce a probability that the real identity of the forwarding node is disclosed. In addition, the NIZK proof used as the identity information can be verified, to further reduce a probability that the proof of transit is tampered with and forged, and enhance the security and the trustworthiness of the proof of transit.

In some possible implementations, the forwarding path includes a service function chain, and at least one forwarding node includes a service function SF node on the service function chain; the forwarding path includes a segment list segment list path, and the at least two forwarding nodes include a segment routing SR endpoint on the segment list path; or the forwarding path includes a label switched path, and the at least two forwarding nodes include a label switching router LSR on the label switched path.

The foregoing manner can be applied to scenarios in which the data packet needs to be forwarded based on a specific order, for example, the service function chaining, SRv6, and MPLS.

According to a second aspect, a proof of transit verification method is provided. The method includes: A verification node obtains a vector commitment, identity information of a first forwarding node, location information of the first forwarding node, and a first proof of transit, where the location information of the first forwarding node indicates a first location of the first forwarding node on a forwarding path, the forwarding path includes at least two forwarding nodes, the at least two forwarding nodes include the first forwarding node, the identity information of the first forwarding node indicates an identity of the first forwarding node, the vector commitment indicates a correspondence between the location of the first forwarding node and the identity of the first forwarding node, and the first proof of transit is for proving that the first forwarding node is at the first location on the forwarding path. The verification node verifies the first proof of transit based on the vector commitment, the identity information of the first forwarding node, and the location information of the first forwarding node.

Because a proof of transit is verified based on the vector commitment, a location of a forwarding node on the forwarding path, and an identity of the forwarding node, if a data packet skips a node on the path, or passes through an extra or unspecified node, verification on the proof of transit obtained based on the identity of the node and the location of the node cannot succeed because the identity of the node and the location of the node no longer correspond to each other.

In some possible implementations, the at least two forwarding nodes further include a second forwarding node, the second forwarding node is an upstream node of the first forwarding node included on the forwarding path, and that the verification node verifies the first proof of transit based on the vector commitment, the identity information of the first forwarding node, and the location information of the first forwarding node includes: The verification node verifies the first proof of transit based on the vector commitment, the location information of the first forwarding node, the identity information of the first forwarding node, location information of the second forwarding node, and identity information of the second forwarding node, where the vector commitment further indicates a correspondence between a location of the second forwarding node and an identity of the second forwarding node.

Because the proof of transit is verified based on locations of a plurality of forwarding nodes and identities of the plurality of forwarding nodes, whether the plurality of nodes are at corresponding locations on the forwarding path can be verified at a time, overall verification performance of the forwarding path is improved by using an advantage of batch processing, and time for proof computation and verification is saved. In addition, in this manner, time consumed for verifying the proof of transit almost does not linearly increase as a quantity of nodes on the forwarding path increases, so that the manner is more applicable to large-scale networking, and scalability is improved.

According to a third aspect, a proof of transit verification method is provided. The method includes: A controller obtains identity information of a first forwarding node, location information of the first forwarding node, identity information of a second forwarding node, and location information of the second forwarding node, where the identity information of the first forwarding node indicates an identity of the first forwarding node, the location information of the first forwarding node indicates a location of the first forwarding node on a forwarding path, the identity information of the second forwarding node indicates an identity of the second forwarding node, the location information of the second forwarding node indicates a location of the second forwarding node on the forwarding path, and the forwarding path includes the first forwarding node and the second forwarding node. The controller obtains a vector commitment based on the identity information of the first forwarding node, the location information of the first forwarding node, the identity information of the second forwarding node, and the location information of the second forwarding node, where the vector commitment indicates a correspondence between the location of the first forwarding node and the identity of the first forwarding node and a correspondence between the location of the second forwarding node and the identity of the second forwarding node, and the vector commitment is for verifying a proof of transit.

The vector commitment is obtained based on identity information of forwarding nodes and location information of the forwarding nodes, so that the vector commitment is related to both the identity information and the location information of the forwarding nodes. The vector commitment can reflect correspondences between the location information and the identity information of the forwarding nodes on the forwarding path. Therefore, when the proof of transit is verified based on the vector commitment, the verification can succeed only when the identity information, the location information, and the proof of transit correspond to each other, and the verification fails because the proof of transit is obtained when the identity information does not correspond to the location information. In addition, because the vector commitment is in a form of ciphertext, the identity information and the location information that are of the forwarding nodes and that are included in the vector commitment cannot be directly obtained by using the vector commitment, and it is also difficult to decrypt or reversely infer the vector commitment to obtain the identity information and the location information of the forwarding nodes. In this way, the identity information and the location information of the forwarding nodes on the forwarding path are hidden, so that privacy and confidentiality of the identity information and the location information of the forwarding nodes are improved.

In some possible implementations, after the controller obtains the vector commitment based on identity information of at least two forwarding nodes and location information of the at least two forwarding nodes, the method further includes: The controller sends the vector commitment to the first forwarding node, the second forwarding node, or a verification node; or the controller stores a correspondence between an identifier of the forwarding path and the vector commitment in a database.

The vector commitment is sent to the forwarding nodes and the verification node, or is stored in the database, so that the forwarding nodes and the verification node obtain the vector commitment, to verify the proof of transit by using the vector commitment.

According to a fourth aspect, a proof of transit obtaining apparatus is provided. The apparatus is disposed on a first forwarding node, and includes: an obtaining unit, configured to: obtain a first data packet, where a forwarding path of the first data packet includes at least two forwarding nodes, and the at least two forwarding nodes include the first forwarding node; and obtain location information of the first forwarding node and identity information of the first forwarding node, where the location information of the first forwarding node indicates a first location of the first forwarding node on the forwarding path, and the identity information of the first forwarding node indicates an identity of the first forwarding node; and a processing unit, configured to obtain a first proof of transit based on the location information of the first forwarding node and the identity information of the first forwarding node, where the first proof of transit is for proving that the first forwarding node is at the first location on the forwarding path.

In some possible implementations, the at least two forwarding nodes further include a second forwarding node, the second forwarding node is an upstream node of the first forwarding node on the forwarding path, and the processing unit is configured to obtain the first proof of transit based on the location information of the first forwarding node, the identity information of the first forwarding node, location information of the second forwarding node, and identity information of the second forwarding node, where the location information of the second forwarding node indicates a second location of the second forwarding node on the forwarding path, and the identity information of the second forwarding node indicates an identity of the second forwarding node.

In some possible implementations, the second forwarding node includes at least one of a $1^{st}$ forwarding node on the forwarding path to a previous forwarding node of the first forwarding node on the forwarding path.

In some possible implementations, the apparatus further includes a verification unit, configured to verify the first proof of transit based on a vector commitment, the location information of the first forwarding node, the identity information of the first forwarding node, the location information of the second forwarding node, and the identity information of the second forwarding node, where the vector commitment indicates correspondences between locations of the at least two forwarding nodes and identities of the at least two forwarding nodes.

In some possible implementations, the obtaining unit is further configured to obtain, for the first forwarding node, a second data packet based on the first data packet and the first proof of transit, where the first data packet includes payload data, and the second data packet includes the first proof of transit and the payload data; and the apparatus further includes a sending unit, configured to send the second data packet, where a third forwarding node is a next node of the first forwarding node on the forwarding path.

In some possible implementations, the first data packet further includes a second proof of transit, and the obtaining unit is configured to: replace the second proof of transit in the first data packet with the first proof of transit, to obtain the second data packet; or add the first proof of transit to the first data packet, to obtain the second data packet.

In some possible implementations, the second data packet further includes a vector commitment, and the vector commitment indicates a correspondence between the location of the first forwarding node and the identity of the first forwarding node and a correspondence between the location of the second forwarding node and the identity of the second forwarding node.

In some possible implementations, the second data packet includes an internet protocol version 6 IPv6 extension header, and the IPv6 extension header includes the first proof of transit and the vector commitment;

> the second data packet includes a network service header NSH, the NSH includes a metadata field, and the metadata field includes the first proof of transit and the vector commitment;
> the second data packet includes a multi-protocol label switching MPLS header, and the MPLS header includes the first proof of transit and the vector commitment;
> the second data packet includes a virtual extensible local area network VXLAN header, and the VXLAN header includes the first proof of transit and the vector commitment; or
> the second data packet includes an internet protocol security IPsec header, and the IPsec header includes the first proof of transit and the vector commitment.

In some possible implementations, the IPv6 extension header includes a segment routing header SRH, the SRH includes a first type-length-value TLV and a second TLV, the first TLV in the SRH includes the first proof of transit, and the second TLV in the SRH includes the vector commitment;

> the IPv6 extension header includes an application-aware networking APN packet header, the APN packet header includes an application-aware networking identifier APN ID, and the APN ID includes the first proof of transit and the vector commitment;
> the IPv6 extension header includes a destination options header DOH, the DOH includes a first TLV and a second TLV, the first TLV in the DOH includes the first proof of transit, and the second TLV in the DOH includes the vector commitment; or
> the IPv6 extension header includes a hop-by-hop options header HBH, the HBH includes a first TLV and a second TLV, the first TLV in the HBH includes the first proof of transit, and the second TLV in the HBH includes the vector commitment.

In some possible implementations, the first data packet includes a first encrypted route table entry, and the sending unit is configured to: decrypt the first encrypted route table entry by using a key of the first forwarding node, to obtain an identifier of the third forwarding node; and send, for the first forwarding node, the second data packet to the third forwarding node based on the identifier of the third forwarding node; or decrypt the first encrypted route table entry by using a key of the first forwarding node, to obtain an egress interface of the first forwarding node; and send, for the first forwarding node, the second data packet based on the egress interface of the first forwarding node, where the egress interface of the first forwarding node is configured to communicate with the third forwarding node.

In some possible implementations, the second data packet includes a second encrypted route table entry, the second encrypted route table entry is obtained through encryption based on a key of the third forwarding node, and the second encrypted route table entry indicates a forwarding subpath, within the forwarding path, from the third forwarding node to a fifth forwarding node.

In some possible implementations, the second encrypted route table entry includes at least one of node identifier ciphertext or egress interface ciphertext, the node identifier ciphertext is ciphertext obtained by encrypting an identifier of the fifth forwarding node based on the key of the third forwarding node, the egress interface ciphertext is ciphertext obtained by encrypting an identifier of an egress interface of the third forwarding node based on the key of the third forwarding node, and the egress interface of the third forwarding node is configured to communicate with the fifth forwarding node.

In some possible implementations, the first data packet includes a second proof of transit, and the obtaining unit is configured to receive the first data packet from the second forwarding node, where the second forwarding node is the upstream node of the first forwarding node on the forwarding path; and the processing unit is further configured to verify the second proof of transit based on the vector commitment, the identity information of the second forwarding node, and the location information of the second forwarding node, where the vector commitment indicates a correspondence between the location of the first forwarding node and the identity of the first forwarding node and a correspondence between the location of the second forwarding node and the identity of the second forwarding node.

In some possible implementations, the processing unit is configured to verify the second proof of transit based on the vector commitment, the identity information of the second forwarding node, the location information of the second forwarding node, identity information of a fourth forwarding node, and location information of the fourth forwarding node, where the fourth forwarding node includes at least one of the head node on the forwarding path to a previous forwarding node of the second forwarding node on the forwarding path.

In some possible implementations, the processing unit is further configured to: in response to determining that the verification on the second proof of transit fails, discard the first data packet, or output alert information; or in response to determining that the verification on the second proof of transit succeeds, indicate the sending unit to forward the first data packet.

In some possible implementations, the vector commitment includes at least one of a KZG polynomial commitment, a fast Reed-Solomon interactive oracle proof FRI commitment, a succinct non-interactive argument of knowledge SNARK proof, an RSA accumulator, an FC function commitment, a Pedersen commitment, a Merkle tree Merkle tree commitment, or a Verkle tree commitment.

In some possible implementations, the apparatus further includes a sending unit, configured to send the first proof of transit to a verification node.

In some possible implementations, a packet header in the first data packet includes a trusted-path identifier, the trusted-path identifier indicates to obtain a proof of transit, and the processing unit is configured to: in response to identifying the trusted-path identifier in the first data packet, obtain the first proof of transit based on the location information of the first forwarding node and the identity information of the first forwarding node.

In some possible implementations, the packet header in the first data packet includes an IPv6 base header, a destination address field in the IPv6 base header includes a segment identifier SID of the first forwarding node, and the SID of the first forwarding node includes the trusted-path identifier.

In some possible implementations, the SID of the first forwarding node includes a function field, and the function field includes the trusted-path identifier; or
the SID of the first forwarding node includes an arguments field, and the arguments field includes the trusted-path identifier.

In some possible implementations, the identity information of the first forwarding node includes at least one of an address, a certificate, a public key, the segment identifier SID, a multi-protocol label switching MPLS label, an access control token token, a router identifier router ID, a host name, or identity information obtained through encryption based on the key of the first forwarding node.

In some possible implementations, the identity information obtained through encryption based on the key of the first forwarding node includes at least one of a signature, a message authentication code MAC tag, a zero-knowledge NIZK proof, or a Sigma protocol proof.

In some possible implementations, the forwarding path includes a service function chain, and at least one forwarding node includes a service function SF node on the service function chain;

> the forwarding path includes a segment list segment list path, and the at least two forwarding nodes include a segment routing SR endpoint on the segment list path; or
> the forwarding path includes a label switched path, and the at least two forwarding nodes include a label switching router LSR on the label switched path.

According to a fifth aspect, a proof of transit verification apparatus is provided. The apparatus includes:

> an obtaining unit, configured to obtain a vector commitment, identity information of a first forwarding node, location information of the first forwarding node, and a first proof of transit, where the location information of the first forwarding node indicates a first location of the first forwarding node on a forwarding path, the forwarding path includes at least two forwarding nodes, the at least two forwarding nodes include the first forwarding node, the identity information of the first forwarding node indicates an identity of the first forwarding node, the vector commitment indicates a correspondence between the location of the first forwarding node and the identity of the first forwarding node, and the first proof of transit is for proving that the first forwarding node is at the first location on the forwarding path; and
> a verification unit, configured to verify the first proof of transit based on the vector commitment, the identity information of the first forwarding node, and the location information of the first forwarding node.

In some possible implementations, the at least two forwarding nodes further include a second forwarding node, the second forwarding node is an upstream node of the first forwarding node included on the forwarding path, and the verification unit is configured to verify the first proof of transit based on the vector commitment, the location information of the first forwarding node, the identity information of the first forwarding node, location information of the second forwarding node, and identity information of the second forwarding node, where the vector commitment further indicates a correspondence between a location of the second forwarding node and an identity of the second forwarding node.

According to a sixth aspect, a proof of transit verification apparatus is provided. The apparatus includes:

an obtaining unit, configured to obtain identity information of a first forwarding node, location information of the first forwarding node, identity information of a second forwarding node, and location information of the second forwarding node, where the identity information of the first forwarding node indicates an identity of the first forwarding node, the location information of the first forwarding node indicates a location of the first forwarding node on a forwarding path, the identity information of the second forwarding node indicates an identity of the second forwarding node, the location information of the second forwarding node indicates a location of the second forwarding node on the forwarding path, and the forwarding path includes the first forwarding node and the second forwarding node; and

a processing unit, configured to obtain a vector commitment based on the identity information of the first forwarding node, the location information of the first forwarding node, the identity information of the second forwarding node, and the location information of the second forwarding node, where the vector commitment indicates a correspondence between the location of the first forwarding node and the identity of the first forwarding node and a correspondence between the location of the second forwarding node and the identity of the second forwarding node, and the vector commitment is for verifying a proof of transit.

In some possible implementations, the apparatus further includes: a sending unit, configured to send, for the controller, the vector commitment to the first forwarding node, the second forwarding node, or a verification node; or a storage unit, configured to store a correspondence between an identifier of the forwarding path and the vector commitment in a database.

According to a seventh aspect, a computing device is provided. The computing device includes a processor, the processor is coupled to a memory, the memory stores at least one computer program instruction, and the at least one computer program instruction is loaded and executed by the processor, so that the computing device performs the method according to any one of the first aspect or the optional manners of the first aspect. A network interface is configured to receive or send a packet. For details of the computing device provided in the seventh aspect, refer to any one of the first aspect or the optional manners of the first aspect. Details are not described herein again.

According to an eighth aspect, a computing device is provided. The computing device includes a processor, the processor is coupled to a memory, the memory stores at least one computer program instruction, and the at least one computer program instruction is loaded and executed by the processor, so that the computing device implements the method according to any one of the second aspect or the optional manners of the second aspect. For details of the computing device provided in the eighth aspect, refer to any one of the second aspect or the optional manners of the second aspect. Details are not described herein again.

According to a ninth aspect, a computing device is provided. The computing device includes a processor, the processor is coupled to a memory, the memory stores at least one computer program instruction, and the at least one computer program instruction is loaded and executed by the processor, so that the computing device implements the method according to any one of the third aspect or the optional manners of the third aspect. For details of the computing device provided in the ninth aspect, refer to any one of the third aspect or the optional manners of the third aspect. Details are not described herein again.

According to a tenth aspect, a computer-readable storage medium is provided. The storage medium stores at least one instruction. When the instruction is run on a computer, the computer is enabled to perform the method according to any one of the first aspect or the optional manners of the first aspect.

According to an eleventh aspect, a computer-readable storage medium is provided. The storage medium stores at least one instruction. When the instruction is run on a computer, the computer is enabled to perform the method according to any one of the second aspect or the optional manners of the second aspect.

According to a twelfth aspect, a computer-readable storage medium is provided. The storage medium stores at least one instruction. When the instruction is run on a computer, the computer is enabled to perform the method according to any one of the third aspect or the optional manners of the third aspect.

According to a thirteenth aspect, a computer program product is provided. The computer program product includes one or more computer program instructions. When the computer program instruction is loaded and run by a computer, the computer is enabled to perform the method according to any one of the first aspect or the optional manners of the first aspect.

According to a fourteenth aspect, a computer program product is provided. The computer program product includes one or more computer program instructions. When the computer program instruction is loaded and run by a computer, the computer is enabled to perform the method according to any one of the second aspect or the optional manners of the second aspect.

According to a fifteenth aspect, a computer program product is provided. The computer program product includes one or more computer program instructions. When the computer program instruction is loaded and run by a computer, the computer is enabled to perform the method according to any one of the third aspect or the optional manners of the third aspect.

According to a sixteenth aspect, a chip is provided, and includes a memory and a processor. The memory is configured to store computer instructions. The processor is configured to invoke the computer instructions from the memory and run the computer instructions, to perform the method according to any one of the first aspect or the possible implementations of the first aspect.

According to a seventeenth aspect, a chip is provided, and includes a memory and a processor. The memory is configured to store computer instructions. The processor is configured to invoke the computer instructions from the memory and run the computer instructions, to perform the method according to any one of the second aspect or the possible implementations of the second aspect.

According to an eighteenth aspect, a chip is provided, and includes a memory and a processor. The memory is configured to store computer instructions. The processor is configured to invoke the computer instructions from the memory and run the computer instructions, to perform the method according to any one of the third aspect or the possible implementations of the third aspect.

According to a nineteenth aspect, a network system is provided. The network system includes the apparatus in the fourth aspect, the apparatus in the fifth aspect, and the apparatus in the sixth aspect.

According to a twentieth aspect, a network system is provided. The network system includes the apparatus in the seventh aspect, the apparatus in the eighth aspect, and the apparatus in the ninth aspect.

## BRIEF DESCRIPTION OF DRAWINGS

FIG. 1 is a diagram of a proof of transit verification scenario in a real-time verification mode according to an embodiment of this application;

FIG. 2 is a diagram of a proof of transit obtaining and verification method in a real-time verification mode according to an embodiment of this application;

FIG. 3 is a diagram of a proof of transit verification scenario in an in-situ verification mode according to an embodiment of this application;

FIG. 4 is a diagram of a proof of transit obtaining and verification method in an in-situ verification mode according to an embodiment of this application;

FIG. 5 is a diagram of a proof of transit verification scenario in a destination verification mode according to an embodiment of this application;

FIG. 6 is a diagram of a proof of transit obtaining and verification method in a destination verification mode according to an embodiment of this application;

FIG. 7 is a diagram of a service function chaining scenario according to an embodiment of this application;

FIG. 8 is a diagram of a packet encapsulation format in a service function chaining scenario according to an embodiment of this application;

FIG. 9 is a diagram of a proof of transit verification scenario in an in-situ verification mode in a service function chaining scenario according to an embodiment of this application;

FIG. 10 is a diagram of a packet encapsulation format in an SRv6 scenario according to an embodiment of this application;

FIG. 11 is a diagram of a proof of transit obtaining and verification method in an in-situ verification mode in an SRv6 scenario according to an embodiment of this application;

FIG. 12 is a diagram of a proof of transit verification scenario in a destination verification mode in an SRv6 scenario according to an embodiment of this application;

FIG. 13 is a diagram of a structure of a proof of transit obtaining apparatus according to an embodiment of this application;

FIG. 14 is a diagram of a structure of a proof of transit verification apparatus according to an embodiment of this application;

FIG. 15 is a diagram of a structure of a proof of transit verification apparatus according to an embodiment of this application; and

FIG. 16 is a diagram of a structure of a computing device according to an embodiment of this application.

## DESCRIPTION OF EMBODIMENTS

To make the objectives, technical solutions, and advantages of this application clearer, the following further describes the implementations of this application in detail with reference to the accompanying drawings.

The following describes application scenarios of embodiments of this application by using examples.

In a routing security scenario, network attacks include route hijacks (route hijack), route injection (route injection), and traffic detour (traffic detour). Route hijack attacks mean that attackers maliciously hijack and/or divert network traffic to network devices, autonomous systems (autonomous system, AS), or the like controlled by the attackers, and then perform monitoring, tampering, interception, or the like. Route hijack attacks are also commonly referred to as prefix hijack attacks, internet protocol (Internet Protocol, IP) hijack attacks, or the like. Another possible reason except a malicious intent for the route hijack is an incorrect network configuration. The route injection means inputting forged routing information into a network device like a router, to enable the forged routing information to be propagated to an entire network. Attackers may change a routing path of the network through the route injection. Consequently, the traffic is redirected to a path controlled by the attackers. The traffic detour means that the attackers tamper with a configuration of the network device to enable the traffic to detour an expected path. Consequently, the traffic is redirected to a path specified by the attackers. This type of attack can be for bypassing a security measure or implementing a specific network attack.

For either maliciousness or non-maliciousness, a main objective of a trusted-path (trusted-path) mechanism (which is also referred to as a secure-routing secure-routing mechanism or a path validation (path validation) mechanism) is to resolve a network attack problem, ensure that a data packet can only be forwarded hop by hop based on a forwarding path planned by a network controller, a terminal, or the like, and provide proof of transit that can be publicly verified. The trusted-path mechanism is a key supporting technology that ensures routing security at all layers of the Internet and implements cutting-edge architectures and applications, including path-aware networking (path-aware networking, PAN), application-aware networking (application-aware networking, APN), and the like, in the network field. Current trusted-path mechanisms all have a limitation to some extent in terms of security. Consequently, a routing security issue is still an international open network security puzzle.

A complete trusted-path mechanism includes two technical parts: a path locking mechanism and a path validation mechanism. Path locking is also referred to as path binding, and is a mechanism that can ensure that the data packet is forwarded based on a determined forwarding path. Path validation is a mechanism that can validate whether the data packet is forwarded based on a specified forwarding path.

If the path locking is implemented in a non-cryptographic traversal proof manner, for example, a head node adds a field with an initial value to a packet header in the data packet, and then each forwarding node that is passed through adds identity information of the forwarding node to the packet, that is, identity information of all forwarding nodes is used as proofs of transit, in this manner, because there is no strong binding relationship between the proof of transit and a location of the forwarding node on a forwarding path, a proof of transit with strong location binding cannot be generated, for example, it cannot be implemented that only a node at an $i^{th}$ location on the forwarding path can generate an $i^{th}$ proof. Consequently, trustworthiness of the proof of transit is low, and it is extremely easy to forge and tamper with the proof of transit. For example, if the data packet is not forwarded hop by hop based on the specified path, but skips the node on the forwarding path, or passes through a redundant and unspecified node, and verification on a proof of transit obtained in this scenario can still succeed at a probability, it can be learned that trustworthiness of the proof of transit is insufficient. In addition, even if the data packet carries proofs of all nodes on the path, because the proof is irrelevant to the location of the forwarding node on the forwarding path, it cannot be ensured that data is definitely forwarded based on the path. For example, a traversal proof may be added by a device outside the forwarding path after packet forwarding ends. In other words, there is no strong binding relationship between the proof of transit and an actual packet forwarding status. Consequently, the data packet may be randomly forwarded and then given a forged traversal proof, and a traversal proof obtained at a destination is untrusted.

If path locking is implemented in a cryptographic traversal proof manner, for example, each forwarding node establishes a key pair with one controller, and then each routing node generates a proof with identity binding by using cryptography, and then transfers the proof, although a problem of forgery is slightly alleviated, a proof of transit with strong location binding cannot be generated because a location of the forwarding node on the forwarding path is not considered during obtaining of the proof of transit. Consequently, there is a problem that is the same as that in the non-cryptographic traversal proof manner: The proof of transit is irrelevant to an actual forwarding status of the data packet, and there is no strong binding relationship. The data packet may be randomly forwarded and then associated with the forwarding node, and a forged traversal proof is added at a tail node. Consequently, a traversal proof obtained from the tail node is untrusted, and it cannot be ensured that forwarding is definitely performed based on the specified forwarding path in a transit process.

In view of this, for the problem of the low proof trustworthiness in the path locking mechanism caused because the proof of transit is irrelevant to the location of the forwarding node on the forwarding path, in some embodiments of this application, the proof of transit is obtained and the proof of transit is verified based on the location of the forwarding node on the forwarding path and an identity of the forwarding node, to implement location binding of the proof of transit. That is, the proof of transit is not only related to the identity of the forwarding node, but also related to the location of the forwarding node on the forwarding path. Therefore, a correct proof of transit can be computed only by a correct node when the data packet is forwarded to a correct location on the forwarding path, so that the proof of transit is strongly bound to the actual forwarding status of the data packet, and the proof of transit is difficult to be tampered with, and is public and verifiable.

Location correctness means that a location of each forwarding node on a forwarding path that the data packet actually passes through in a forwarding process is the same as an expected location of each forwarding node on a selected forwarding path.

Proof of transit correctness means that verification on a proof of transit obtained based on an identity of a node and a location of the node with the identity of the node and the location of the node corresponding to each other can succeed. For example, a proof of transit $p_i$ computed by a node i at a location i on a forwarding path is correct, and verification on the proof of transit $p_i$ can succeed, where i is a positive integer, i is less than or equal to N, N indicates a total quantity of forwarding nodes on the forwarding path, and N is a positive integer greater than or equal to 2. Verification on a proof of transit obtained based on an identity of a node and a location of the node with the identity of the node and the location of the node not corresponding to each other cannot succeed. For example, in the forwarding process, if a data packet skips a node on the path, or passes through an extra or unspecified node, the verification on the proof of transit obtained based on the identity of the node and the location of the node cannot succeed because the identity of the node and the location of the node no longer correspond to each other.

For example, if a selected forwarding path is forwarding node A→forwarding node B→forwarding node C→ forwarding node D, a correct location of the forwarding node A is 1, a correct location of the forwarding node B is 2, a correct location of the forwarding node C is 3, and a correct location of the forwarding node D is 4. When the data packet is indeed forwarded hop by hop based on the path, a proof of transit 1 obtained based on at least one of an identity of the forwarding node A and the correct location (1) of the forwarding node A, an identity of the forwarding node B and the correct location (2) of the forwarding node B, an identity of the forwarding node C and the correct location (3) of the forwarding node C, or an identity of the forwarding node D and the correct location (4) of the forwarding node D is correct, and verification on the proof of transit 1 can succeed. If the forwarding node C is skipped in the forwarding process, an actual forwarding path 2 is forwarding node A→forwarding node B→forwarding node D. The forwarding node D is used as an example. The forwarding node D obtains a proof of transit 2 based on the location (3) and the identity (D). Because the location (3) and the identity (D) on which the proof of transit 2 is based do not match each other, verification on the proof of transit 2 cannot succeed based on a vector commitment. For another example, when an extra or unspecified node is passed through, a redundant node e is added to the forwarding path 1, and an actual forwarding path 2 is forwarding node A→ forwarding node B→forwarding node C→forwarding node E→forwarding node D. If a proof of transit 2 is computed based on a location (5) of the forwarding node D on the forwarding path 2 and the identity (D), and verification is performed based on an originally generated commitment, verification on the proof of transit 2 cannot succeed either because the location (5) and the identity (D) on which the proof of transit 2 is based do not match each other.

For brevity, in embodiments of this application, i is subsequently for representing a specific location of a node on a forwarding path, N is for representing a quantity of forwarding nodes included on the forwarding path, $r_i$ is for representing identity information of a node at a location i on the forwarding path, $p_i$ is for representing a proof of transit generated by the node at the location i on the forwarding path, C is for representing a commitment, P is for representing the forwarding path, and B is for representing a segment of the forwarding path, namely, a set of at least two nodes on the forwarding path, an OP (opening proof) is for representing a proof of transit related to a single forwarding node (referred to as a single-node proof of transit hereinafter), and an MP (multiproof) is for representing a proof of transit related to a plurality of forwarding nodes (referred to as a multi-node proof of transit hereinafter). In addition, a form of "forwarding node+underline+location" is for simply representing a specific node on the forwarding path. For example, a forwarding node_i is for representing the forwarding node at the location i on the forwarding path. A form of "OP+underline+location" is for simply representing a single-node proof of transit obtained by a node. For example, an OP_i is for representing a single-node proof of transit obtained by the forwarding node at the location i on the forwarding path. A form of "MP+underline+location" is for simply representing a multi-node proof of transit obtained by the node. For example, an MP_i is for representing a multi-node proof of transit obtained by the forwarding node at the location i on the forwarding path.

In a possible implementation, after the forwarding node_i obtains a data packet, the forwarding node_i obtains location information of the forwarding node_i and the identity information of the forwarding node_i; and the forwarding node_i obtains a proof of transit $r_i$ based on the location information of the forwarding node_i and the identity information of the forwarding node_i, where the proof of transit $r_i$ is for proving that the forwarding node_i is at the location i on the forwarding path.

The identity information of the forwarding node_i indicates an identity of the forwarding node_i. The identity information of the forwarding node_i is, for example, an identifier of the forwarding node_i. The location information of the forwarding node_i indicates the location i of the forwarding node_i on the forwarding path of the data packet. The location information of the forwarding node_i is, for example, a sequence number of the forwarding node_i. The location information is optionally represented in a form of a positive integer. For example, location information of a head node is 1, location information of a 2nd forwarding node is 2, location information of a 3rd forwarding node is 3, and so on.

Optionally, an order of values for representing location information of different forwarding nodes indicates an order of the forwarding nodes on the forwarding path. For example, smaller location information of a forwarding node indicates that a location of the forwarding node is closer to an upstream of the forwarding path, and larger location information of a forwarding node indicates that a location of the forwarding node is closer to a downstream of the forwarding path. For example, the forwarding path includes n nodes, where n is a positive integer greater than or equal to 2. The location information of the 1st node (the head node) on the forwarding path is 1, location information of an ith node on the forwarding path is i, and location information of an nth node (a tail node) on the forwarding path is n.

In a possible implementation, a proof of transit is obtained and the proof of transit is verified based on a vector commitment technology. Because a vector commitment has a property of order preserving, that is, information $m\_i$ about the commitment and the opening proof needs to have a binding relationship with the location i, obtaining and verification of a proof of transit with location binding are implemented.

The vector commitment is a cryptography technology, and is for proving correctness of a value and a location of each piece of information in a set of ordered information (for example, a vector, an array, or a list that includes at least two elements) while supporting maintaining hiding of the information for original content of the information usually does not need to be exposed. Specifically, the vector commitment allows each piece of information in the set of ordered information to be committed and a corresponding proof to be generated, and other participants may verify the proof to confirm integrity of the ordered information.

The vector commitment mainly includes three functions: commit (commit), open (open), and verify (verify).

The commit function means that an entity A secretly selects N pieces of ordered information M=($m\_1$, $m\_2$, ..., $m\_N$) at a time, computes a commitment (commitment) based on the information M, and makes the commitment public. The commitment includes the information M and an order relationship among the N pieces of information in the information M. However, the outside cannot infer plaintext of the N pieces of information by using the commitment, and cannot infer a location corresponding to each of the N pieces of information by using the commitment. Generally, after the commitment is computed based on the information M, the entity A cannot modify the information M any longer.

The open function is for obtaining a proof, to prove information at a specific location. Specifically, the entity A computes the opening proof (opening proof, OP), and makes the opening proof public, to prove, by using the opening proof, that information originally committed at the location i is $m\_i$. The open function includes a single-node open (open) function and a batchopen (batchopen) function.

The single-node open (open) function means that the entity A computes a single-node opening proof (opening proof, $OP\_i$) for the single location i, and can prove, by using the single-node opening proof, that information at the location i is $m\_i$.

The batch open function means that the entity A computes a multi-node opening proof (multiproof, $MP\_B$) at a time, and the multi-node opening proof is for proving that a set of a plurality of pieces of information $m\_i$ is B, where each $m\_i$ is at the corresponding location i. The multi-node opening proof may be for verifying information at a plurality of locations simultaneously.

Verification (verification) means that a verifier uses the commitment and the opening proof to verify that an object committed or selected by the entity A originally is indeed the information M. The verification includes single-node verification and batch verification (batch verification).

The single-node verification means that for the single-node opening proof (opening proof, $OP\_i$), the verifier may use the commitment, the single-node opening proof $OP\_i$, and corresponding $m\_i$ to verify whether the information on the location i is consistent with that declared by the single opening proof.

The batch verification means that for the multi-node opening proof, the verifier may use the commitment C, the multi-node opening proof $MP\_B$, and the set B to verify whether the information at the plurality of locations is consistent with that declared by the opening proof.

In an optional implementation of this application, a node device (for example, a controller or user equipment) responsible for path selection is used as the entity A, the information M is for representing a trusted path P=($r\_1$, $r\_2$, ..., $r\_i$, ..., $r\_N$), each piece of information $m\_i$ in the information M is for representing the identity $r\_i$ of the forwarding node_i, the set B is for representing a segment of the trusted path, the commitment is obtained based on the commit function, the proof of transit is obtained based on the open function, and the proof of transit is verified based on the verify function.

In a possible implementation, a proof of transit related to a single forwarding node is obtained based on the single-node open function, and the proof of transit related to the single forwarding node is verified based on the single-node verify function, to verify the proof of the single node. In another possible implementation, a proof of transit related to all of a plurality of forwarding nodes is verified based on a batch verify function. The proof of transit related to all of the plurality of forwarding nodes is obtained based on the multi-node open function, to verify the plurality of nodes on the path at a time.

Benefits achieved by using the vector commitment to verify the proof of transit include at least the following several aspects.

First, this helps verify that the data is sequentially forwarded based on a specified order on the forwarding path.

Specifically, the vector commitment has location binding, that is, can reflect a binding relationship between a value of information and a location of the information in a vector. Therefore, the vector commitment is obtained based on identity information of forwarding nodes and location information of the forwarding nodes, so that the vector commitment is related to both the identity information and the location information of the forwarding nodes. The vector commitment can reflect correspondences between the location information and the identity information of the forwarding nodes on the forwarding path. Therefore, when the proof of transit is verified based on the vector commitment, the verification can succeed only when the identity information, the location information, and the proof of transit correspond to each other, and the verification fails because the proof of transit is obtained when the identity information does not correspond to the location information. In other words, the correct proof of transit $p\_i$ can be computed by only the node i at the correct location i, and cannot be forged by others.

Second, this helps implement path hiding. Because the vector commitment is in a form of ciphertext, the identity information and the location information that are of the forwarding nodes and that are included in the vector commitment cannot be directly obtained by using the vector commitment, and it is also difficult to decrypt or reversely infer the vector commitment to obtain the identity information and the location information of the forwarding nodes. In this way, the identity information and the location information of the forwarding nodes on the forwarding path are hidden, so that privacy and confidentiality of the identity information and the location information of the forwarding nodes are improved.

Third, this reduces time for obtaining the commitment and time for verifying the commitment, and improves efficiency of obtaining the commitment and efficiency of verifying the commitment. If a single-node commitment manner is used, a location of each node and an identity of the node need to be committed one by one. If the forwarding path includes n nodes, it takes n times of time to obtain and verify the commitment. However, in a vector commitment manner, a forwarding path (equivalent to a vector) including at least two nodes is allowed to be committed at a time. If the forwarding path includes n nodes, it only takes time of log n or constant time to obtain and verify the commitment, so that a risk that an amount of to-be-committed data super-linearly increases as the quantity of nodes on the forwarding path increases is reduced, a process of obtaining and verifying the commitment can be completed more quickly, and efficiency can be greatly improved. The manner is more applicable to a case in which the forwarding path includes a large quantity of nodes. In addition, the identity information and the location information of the forwarding nodes cannot be bound in the single-node commitment manner, and location binding needs to be implemented in another manner. For example, the location information is recorded by using a list. Because the vector commitment has a location binding capability, a plurality of pieces of identity information may be directly bound to corresponding location information, so that a verification process is simplified.

The three functions, namely, commit, open, and verify, listed above are only examples of several functions that are available for obtaining and verifying the proof of transit. In another possible implementation, the proof of transit is obtained and verified by using another type of function in the vector commitment. For example, the proof of transit is obtained by using a create witness (create witness, whose function is equivalent to the open function) function, the proof of transit is verified by using a verify eval (verify eval, whose function is equivalent to the verify function) function, and the multi-node proof of transit is obtained by using a create witness batch (create witness batch, whose function is equivalent to the batch open function) function, and the multi-node proof of transit is verified by using verify eval batch (verify eval batch, which is equivalent to the batch verify function).

If necessary, in embodiments of this application, optionally, the forwarding node verifies a source of the received data packet based on the vector commitment and the proof of transit, to implement correctness of the source of the data packet to some extent. In a possible implementation, the data packet carries the proof of transit in a forwarding process along the path. When the forwarding node_i receives a data packet_i, the forwarding node_i verifies, based on the vector commitment, a proof of transit carried in the data packet_i.

Manners of verifying the source of the data packet based on the vector commitment and the proof of transit specifically include the following several implementations.

Manner 1 of verifying the source of the data packet: The single-node proof of transit (the OP) is verified based on location information of a single forwarding node and identity information of the single forwarding node. For example, the data packet received by the forwarding node_i carries a single-node proof of transit related to a forwarding node_k, and the forwarding node_i verifies the single-node proof of transit of the forwarding node_k based on the vector commitment, identity information of the forwarding node_k, and location information of the forwarding node_k. The forwarding node_k is an upstream node of the forwarding node_i on the forwarding path, and the single-node proof of transit of the forwarding node_k is for proving that the node_k forwards the data packet at a location k on the forwarding path. The single-node proof of transit of the forwarding node_k is obtained based on the location k and the identity information of the forwarding node_k, where k is a positive integer less than or equal to i.

Optionally, a forwarding node verifies a single-node proof of transit of a previous-hop node, to verify correctness of the previous hop. For example, the data packet received by the forwarding node_i carries a single-node proof of transit generated by a previous-hop node (a node_i-1) of the forwarding node i, and the single-node proof of transit is for proving that the node_i-1 forwards the data packet at a location i-1 on the forwarding path. The forwarding node_i verifies, based on the vector commitment, identity information of the node_i-1, and location information of the node_i-1, the single-node proof of transit carried in the data packet. By analogy, each-hop node is responsible for verifying a single-node proof of transit of a previous-hop node.

Benefits achieved by that each-hop node is responsible for verifying the single-node proof of transit of the previous-hop node include but are not limited to the following several aspects.

First, a probability of deceiving and tampering is further reduced. Specifically, verification on each node is based on verification on a previous hop. This is equivalent to forming a continuous verification chain. Once a node is verified as spoofing, a subsequent node may immediately stop forwarding, so that a probability that any-hop node on the forwarding path forges the data packet, deceives about the data packet, or tampers with the data packet is reduced, and network security is improved.

Second, integrity of the path is verified. A single-node proof of transit of each hop is verified by a next hop, so that a risk of verification omitting of a proof of a node on the forwarding path is reduced, that each-hop node on the entire forwarding path is at a correct location can be gradually verified, and there is almost no skipping or interruption.

Third, privacy is protected. Because identity information and location information of a node other than a previous-hop node do not need to be used when a single-node proof of transit of the previous-hop node is verified, identity information and location information of each-hop node only need to be exposed to a next-hop node, and do not need to be exposed to a node other than the next-hop node, so that privacy of the node is protected to some extent, and a risk of leakage of the identity information and the location information is reduced.

Fourth, correctness of a location of a node can be verified. Because a proof of transit of each forwarding node is obtained based on identity information and location information, verifying a single-node proof of transit of each node can be for verifying whether the node forwards the data packet at a correct location on the path.

Manner 2 of verifying the source of the data packet: The multi-node proof of transit (the MP) is verified based on location information of at least two forwarding nodes and identity information of the at least two forwarding nodes. For example, the data packet received by the forwarding node_i carries a multi-node proof of transit related to a forwarding node_k and a forwarding node_m, and the forwarding node_i verifies, based on the vector commitment, identity information of the forwarding node_k, location information of the forwarding node_k, identity information of the forwarding node_m, and location information of the forwarding node_m, the multi-node proof of transit related to the forwarding node_k and the forwarding node_m. The forwarding node_k is an upstream node of the forwarding node_i on the forwarding path, the forwarding node_m is an upstream node of the forwarding node_k on the forwarding path, and the multi-node proof of transit is for proving that the forwarding node_k forwards the data packet at a location k on the forwarding path and that the forwarding node_m forwards the data packet at a location m on the forwarding path. The multi-node proof of transit is obtained based on the location k, the identity information of the forwarding node_k, the location m, and the identity information of the forwarding node_m, where k is a positive integer less than or equal to i, and m is a positive integer less than or equal to k.

Benefits achieved by verifying the multi-node proof of transit (the MP) based on location information and identity information of a plurality of forwarding nodes include but are not limited to the following several aspects.

First, efficiency is improved. Compared with separately verifying the single-node proof of transit of each node, verifying the multi-node proof of transit can be for verifying proofs of transit of the plurality of nodes at a time, overall verification performance for the forwarding path is improved by using an advantage of batch processing, and time for proof computation and verification is saved.

Second, a quantity of verifications is reduced. Verifying the multi-node proof of transit can be for reducing a quantity of actual verifications. For example, for m nodes on the forwarding path, when the single-node proof of transit of each node is verified, m verifications need to be performed. Verifying a multi-node proof of transit of the m nodes can be for verifying the m nodes at a time, so that a quantity of verifications can be reduced to 1. In this way, a quantity of verifications that need to be performed on the entire forwarding path is reduced, and a verification speed is accelerated.

Third, scalability is better: Compared with a manner of the single-node proof of transit, in a manner of the multi-node proof of transit, time costs of proof computing and proof verification almost do not linearly increase as the quantity of nodes on the forwarding path increases. Therefore, even if the forwarding path includes more nodes that need to be verified, verification costs almost do not increase greatly. Because there is an efficiency advantage of batch processing for a verification process, overall performance can still maintain at a high level.

Fourth, verification results of the plurality of nodes are integrated. This is similar to an effect of the single-node proof of transit. The verification results of the plurality of nodes on the forwarding path may be integrated, so that a verification range covers the location and the identity of each node on the entire forwarding path, and the entire forwarding path is comprehensively verified.

In a possible implementation, the proof of transit carried in the data packet is verified based on location information and identity information of each node that the data packet has passed through on the forwarding path. For example, the data packet received by the forwarding node_i carries the multi-node proof of transit, where the multi-node proof of transit is obtained based on identity information of each of the head node to the previous node on the forwarding path and location information of each of the head node to the previous node_i-1. The forwarding node_i verifies, based on the vector commitment, the identity information of each of the head node to the previous node_i-1, and the location information of each of the head node to the previous node_i-1, the multi-node proof of transit carried in the data packet. Benefits achieved by performing verification based on a location and an identity of each forwarding node that the data packet passes through include but are not limited to the following several aspects.

First, from a perspective of verifying a path source, the node_i is allowed to verify a 1st half path that the data packet has passed through, including a location and an identity of each of the head node to the previous node _i-1, so that a probability that verification on a data packet passing through an untrusted node succeeds and a probability that verification on a data packet passing through no node on the trusted path succeeds are further reduced.

Second, from a perspective of efficiency improvement, proofs of transit of all nodes that the packet has passed through on the forwarding path may be verified at a time, and the proof of transit of each node that has been passed through does not need to be verified separately, so that the overall verification performance is improved by using the advantage of batch processing, time costs and computation costs are reduced, and verification efficiency is improved.

Third, from a perspective of integrity verification, each node that the packet has passed through on the forwarding path is verified, and no node that has been passed through is omitted. Therefore, verification is more complete. If any node that is before the node_i and that is on the forwarding path is deleted or replaced, in a process of verifying the multi-node proof of transit by the node_i, the verification on the multi-node proof of transit fails because the multi-node proof of transit no longer matches an identity and a location of the deleted or replaced node, so that a risk of data tampering or deceptive forwarding is further reduced.

Verification based on the identity information and the location information of each-hop node on the forwarding path is merely an example. In some other implementations of this application, tracing and verification can be performed on a node in a specific range before a current node on the forwarding path. The verifier may flexibly specify, based on an actual requirement, a range that needs to be traced, and different nodes may be responsible for verifying different parts of the forwarding path, so that a more flexible and adjustable tracing capability is provided. The following provides descriptions by using an example in which two hops or three hops of nodes that are before the forwarding node are verified.

In another possible implementation, the forwarding node_i verifies a proof of transit based on the vector commitment, identity information of two hops of nodes that are before the forwarding node_i on the forwarding path, and location information of the two hops of nodes that are before the forwarding node_i, to support tracing and verification of correctness of the two hops of nodes that are before the current node. For example, the 3rd node verifies, based on the vector commitment, identity information of the 1st node, the location information of the 1st node, identity information of the 2nd node, and the location information of the 2nd node, a proof of transit received by the 3rd node; and a 5th node verifies, based on the vector commitment, identity information of the 3rd node, the location information of the third node, identity information of a 4th node, and location information of the 4th node, a proof of transit received by the 5th node.

In another possible implementation, the forwarding node_i verifies a proof of transit based on identity information of three hops of nodes that are before the forwarding node_i on the forwarding path, location information of the three hops of nodes that are before the forwarding node_i, and the vector commitment, to support tracing and verification of correctness of the three hops of node that are before the current node. For example, a 4th node verifies, based on identity information of the 1st node, the location information of the 1st node, identity information of the 2nd node, the location information of the 2nd node, identity information of the 3rd node, the location information of the 3rd node, and the vector commitment, a proof of transit received by the 4th node; and a 7th node verifies, based on identity information of the 4th node, location information of the 4th node, identity information of a 5th node, location information of the 5th node, identity information of a 6th node, location information of the 6th node, and the vector commitment, a proof of transit received by the 7th node.

In a possible implementation, in the forwarding process of the data packet, each forwarding node verifies the proof of transit hop by hop in real time. In another possible implementation, when the data packet is forwarded to the tail node, the tail node verifies, at a time, that the data packet does and only sequentially passes through each forwarding node on the forwarding path.

In a possible implementation, in response to determining that the verification on the proof of transit carried in the data packet fails, the forwarding node discards the received data packet. Discarding the data packet including the proof of transit on which the verification fails helps block further transmission of data from an invalid source, and improves the network security. Specifically, if the forwarding node finds that the verification on the proof of transit carried in the data packet fails, it proves that a data source may be problematic, for example, before the data packet is forwarded to the current node, the data packet skips the node on the path or passes through a redundant and unspecified node. The forwarding node discards the data packet, to avoid further transmission of the packet with the problematic data source from the current node to a next node, so that further propagation of the data packet with the problematic data source is quickly prevented, a probability of unauthorized data access and tampering is reduced, a possibility of a network attack is reduced, and the network security is improved.

In a possible implementation, in response to determining that the verification on the proof of transit carried in the data packet fails, the forwarding node outputs alert information, where the alert information indicates that the verification on the proof of transit fails. In a possible implementation, the forwarding node advertises the alert information to a network management system (Network Management System, NMS), an element management system (Element Management System, EMS), or the controller by using a management plane protocol. For example, the forwarding node sends a network configuration protocol (Network Configuration Protocol, NETCOF) packet to the controller, where the NETCOF packet includes the alert information, and the NETCOF packet indicates that the verification on the proof of transit fails. For another example, the forwarding node sends a simple network management protocol (Simple Network Management Protocol, SNMP) packet to the controller, where the SNMP packet includes the alert information, and the SNMP packet indicates that the verification on the proof of transit fails. For another example, the forwarding node sends, to the controller based on telemetry (Telemetry), the alert information indicating that the verification on the proof of transit fails. For another example, the forwarding node sends, to the controller based on a representational state transfer (Representational State Transfer, RESTful) principle, the alert information indicating that the verification on the proof of transit fails. For another example, the forwarding node sends, to the controller in a form of a log based on a log management protocol, the information indicating that the verification on the proof of transit fails. For example, the forwarding node sends a system log (System Logging Protocol, Syslog) protocol packet to the controller, where the Syslog protocol packet includes the alert information indicating that the verification on the proof of transit fails. Syslog is a standard UNIX system log management protocol for sending log information generated by a device or an application to a remote server. In a possible implementation, the forwarding node outputs the alert information via an alert notification. The alert notification may be sent via an SMS message, an email, and an instant messaging tool, so that an administrator or a network security team can receive the alert notification in time, and take a corresponding measure. In another possible implementation, the forwarding node outputs the alert information through log recording. For example, the forwarding node_i records, in a system log, information about the data packet_i on which the verification fails. In still another possible implementation, the forwarding node_i sends the alert information to the controller. The controller provides visualized alert information display, to help an administrator quickly find a problem and take a measure.

In a possible implementation, in response to determining that the verification on the proof of transit carried in the data packet succeeds, the forwarding node further forwards the received data packet.

If necessary, in embodiments of this application, optionally, a commitment is obtained and verified based on the identity information of the forwarding node and the location information of the forwarding node in a KZG polynomial commitment (kate-zaverucha-goldberg polynomial commitment) manner, to further reduce time for obtaining the commitment, improve efficiency of obtaining the commitment, and avoid that the verification time of the proof of transit super-linearly increases as the quantity of nodes on the forwarding path increases, so that the verification time of the proof of transit is as short as possible.

The KZG polynomial commitment is a specific construction manner of a vector commitment mechanism with a good characteristic. The polynomial commitment can be for committing N points (for example, N pieces of identity information) on a curve of a polynomial at a time, and proving and verifying, by using constant time, that one or N points (for example, the N pieces of identity information) are on the polynomial, and an amount of committed data and a data amount of each proof of transit are a constant $O(1)$. In the polynomial commitment, the information $m\_i$ is converted into a form of a point $(x\_i, y\_i)$ for storage. That is, the information M is converted into $<(x\_1, y\_1), (x\_2, y\_2), ..., (x\_N, y\_N)>$, where $x\_i=i$, $y\_i=m\_i$. $x\_i$ indicates the location information of the forwarding node. For example, $x\_i$ is a subscript (usually an integer 1, 2, 3, ..., that is, $x\_i=i$), and $y\_i$ indicates the identity information of the forwarding node. The KZG polynomial commitment can be for implementing that commitment computation time for committing the N pieces of information by the entity A at a time, time for computing a single opening proof or a plurality of opening proofs by others, time for verifying the N pieces of information by the others at a time, and the like are all sublinear time (actually constant time).

The commitment is obtained and verified in the KZG polynomial commitment manner. Because in the KZG polynomial commitment, computation of the commitment and the opening proof takes constant time computation complexity, and is almost not affected by the quantity N of pieces of committed information, it means that the time needed for the computation of the commitment and the opening proof is the constant time regardless of an increase of the quantity of pieces of information. Therefore, constant time of proof computation and verification, and a size that is of data of an additional proof and that is a constant size are irrelevant to the quantity N of nodes included on the path. In other words, the time needed for obtaining the commitment and the time needed for verifying the commitment remain constants, a data amount of the proof of transit remains a constant, and none of the time needed for obtaining the commitment, the time needed for verifying the commitment, or the data amount of the proof of transit increases as a length of the forwarding path increases. In scenarios where a networking scale is complex, and the forwarding path includes massive nodes, the commitment can still be quickly obtained and verified, so that efficiency of obtaining and verifying the commitment is greatly improved.

Implementation details of the KZG polynomial commitment are specifically described in embodiments. The KZG polynomial commitment is merely a possible implementation of obtaining the vector commitment, and not only can achieve an effect of binding of the proof of transit and a location, but also has an advantage of high efficiency. A vector commitment obtained in another manner can also achieve the effect of binding of the proof of transit and the location.

In some other possible implementations, a commitment is obtained and verified based on the identity information of the forwarding node and the location information of the forwarding node in a fast Reed-Solomon interactive oracle proof (fast reed-solomon interactive, FRI) commitment manner. The FRI commitment is a commitment mechanism, is for verifying integrity of a polynomial in an interactive proof system, and can be for quickly verifying, without a need of computing the entire polynomial item by item, whether the polynomial satisfies a set of constraints. The FRI commitment greatly reduces complexity of polynomial verification by constructing a plurality of small-scale Reed-Solomon codes and related proofs based on the Reed-Solomon code and an interactive proof protocol.

In some other possible implementations, a commitment is obtained and verified based on the identity information of the forwarding node and the location information of the forwarding node in a succinct non-interactive argument of knowledge (succinct non-interactive argument of knowledge, SNARK) commitment manner. The SNARK commitment is a protocol for proving correctness of one time of computation and that an input owned by a party satisfies a specific condition. The SNARK proof is non-interactive. That is, a prover does not need to interact with the verifier, and only needs to generate a proof and send the proof to the verifier. The SNARK proof is compact, a size of the proof is small, and verification time is short.

In some other possible implementations, a proof of transit or a vector commitment is obtained based on the identity information of the forwarding node and the location information of the forwarding node in a scalable transparent argument of knowledge (scalable transparent argument of knowledge, STARK) manner; or a proof of transit is verified based on a vector commitment in a STARK commitment manner. A STARK is a zero-knowledge proof technology. Starting of the STARK does not need to be set by a trusted third party. Therefore, the STARK is more decentralized and distributed, impact of a single point of failure on obtaining the proof of transit or the vector commitment is reduced, and there is high security. In addition, the STARK is post-quantum secure. Therefore, using the STARK helps improve a capability of resisting a quantum computation attack for the proof of transit, and is more reliable in security protection of the proof of transit and of identity information. In addition, a data amount of the proof of transit generated based on the STARK is small. This means that small storage space is needed for transmission of the proof, and there is an advantage in verification efficiency. For example, a next-hop forwarding node or the verification node can verify validity of the proof of transit in short time.

In some other possible implementations, a proof of transit or a vector commitment is obtained based on the identity information of the forwarding node and the location information of the forwarding node in a bulletproof manner; or a proof of transit is verified based on a vector commitment in a bulletproof manner. The bulletproof is a zero-knowledge proof technology. The bulletproof is an encryption primitive used in a zero-knowledge proof, and is for proving that a value satisfies a relationship, and no additional proof information needs to be provided. Starting of the bulletproof also does not need to be set by a trusted third party. Therefore, the bulletproof is more decentralized and distributed, impact of a single point of failure on obtaining the proof of transit or the vector commitment is reduced, and there is high security.

In some other possible implementations, a commitment is obtained and verified based on the identity information of the forwarding node and the location information of the forwarding node in an RSA accumulator manner. The RSA accumulator is a data structure, and is for accumulating elements in a set to the accumulator, so that whether an element belongs to the set can be verified subsequently. Based on an RSA additively homomorphic property, the RSA accumulator may verify, without disclosing the elements in the set, whether a specific element is included in the accumulator.

In some other possible implementations, a commitment is obtained and verified based on the identity information of the forwarding node and the location information of the forwarding node in an FC function commitment manner. An FC function commitment is a commitment mechanism that binds an input to a computation result of a function, so that the computation result can be verified with the input not being exposed. The FC function commitment can be implemented by combining a zero-knowledge proof system and a commitment mechanism, and may be for protecting computer privacy and verifying correctness of a computation result.

In some other possible implementations, a commitment is obtained and verified based on the identity information of the forwarding node and the location information of the forwarding node in a Pedersen commitment manner. A Pedersen commitment is a commitment mechanism, and is for committing a value or vector to a hidden value. A Pedersen commitment is based on a discrete logarithm difficult problem, so that only a committer that learns of a hidden value can verify correctness of the commitment without exposing an actual value.

In some other possible implementations, a commitment is obtained and verified based on the identity information of the forwarding node and the location information of the forwarding node in a Merkle tree (merkle tree) commitment manner. A Merkel tree commitment is a commitment mechanism, and is for binding a plurality of elements in a set into a tree-like structure. In a Merkel tree, a hash function is used to combine the elements level by level and a root hash is generated. The root hash is a commitment to the entire tree. In a verification phase, to verify whether an element belongs to the tree, only some elements in the set and a hash value on an associated path need to be learned of.

In some other possible implementations, a commitment is obtained and verified based on the identity information of the forwarding node and the location information of the forwarding node in a Verkle tree (verkle tree) commitment manner. A Verkle tree commitment is a commitment mechanism, and is for binding a plurality of elements in a set into a non-binary tree-like structure. In a Verkle tree, a path from a root node to a leaf node in the tree is committed by using a polynomial commitment, and a plurality of paths are aggregated. In a verification phase, to verify whether an element belongs to the tree, only some elements in the set and a polynomial commitment on an associated path need to be learned of.

In some other possible implementations, the source of the data packet is verified based on an aggregate signature. For example, the data packet includes a digital signature. The signature may be a signature of the previous-hop node _i-1, or may be an aggregate signature of all of the node_1 to the node_i-1 in an upper half segment. The aggregate signature is characterized by that a length of an aggregation result of an infinite quantity of signatures is equal to a length of one signature. It is known that there is a public key infrastructure (Public Key Infrastructure, PKI). That is, a public identity of the node is known, and the node_i may verify correctness of the signature.

In some other possible implementations, the source of the data packet is verified based on a symmetric key message authentication code (Message Authentication Code, MAC) tag. For example, the data packet includes the MAC tag, and the node_i may verify correctness of the MAC tag.

If necessary, in embodiments of this application, optionally, path hiding is implemented based on an encrypted route table.

The path hiding is, for example, that the node_i can learn of only an address of a next node_i+1 that is of the node_i and that is on the forwarding path, so as to determine a next hop to which forwarding is performed. It is difficult for the node_i to learn of an address of each of a node_i+2 on the forwarding path to the tail node_N on the forwarding path.

The encrypted route table is for guiding the data packet to be forwarded hop by hop based on the specified forwarding path. Content of the encrypted route table is in a form of ciphertext. To distinguish between the entire encrypted route table and a part that is of the encrypted route table and that corresponds to a single forwarding node, the part that is of the encrypted route table and that corresponds to the single forwarding node is referred to as an encrypted route table entry below. The encrypted route table includes at least one encrypted route table entry.

In some possible implementations, an encrypted route table entry that is in the encrypted route table and that corresponds to the node_i on the forwarding path is obtained through encryption based on a key of the node_i. The encrypted route table entry corresponding to the node_i is for guiding the node_i to forward the data packet to the next node_i+1 that is of the node_i and that is on the forwarding path. The encrypted route table entry corresponding to the node_i is obtained through encryption based on, for example, a symmetric key of the node_i or a private key of the node_i.

In some possible implementations, the encrypted route table entry includes node identifier ciphertext. For example, the encrypted route table entry corresponding to the node_i includes ciphertext obtained by encrypting an identifier of the node_i+1 based on the key of the node_i.

For example, in a scenario of an IP network, the encrypted route table entry corresponding to the node_i includes ciphertext obtained by encrypting an IP address of the node_i+1 based on the key of the node_i. In a scenario of an internet protocol version 4 (Internet Protocol version 4, IPv4) network, the encrypted route table entry corresponding to the node_i includes ciphertext obtained by encrypting an IPv4 address of the node_i+1 based on the key of the node_i. In a scenario of an internet protocol version 6 (Internet Protocol version 6, IPv6) network, the encrypted route table entry corresponding to the node_i includes ciphertext obtained by encrypting an IPv6 address of the node_i+1 based on the key of the node_i.

For example, in a scenario of a segment routing over IPv6 (Segment Routing over IPv6, SRv6) network, the encrypted route table entry corresponding to the node_i includes ciphertext obtained by encrypting a SID of the node_i+1 based on the key of the node_i.

For example, in a scenario of a multi-protocol label switching (Multi-Protocol Label Switching, MPLS) network, the encrypted route table entry corresponding to the node_i includes ciphertext obtained by encrypting an MPLS label of the node_i+1 based on the key of the node_i.

For example, in a scenario of layer 2 forwarding, address ciphertext of the node_i+1 is ciphertext obtained by encrypting a medium access control (Medium Access Control, MAC) address of the node_i+1 based on the key of the node_i.

In some possible implementations, the encrypted route table includes identifier ciphertext of each node on the forwarding path. Optionally, encrypted route table entries in the encrypted route table are sequentially arranged based on an order of the nodes on the forwarding path. For example, the encrypted route table entries in the encrypted route table are sequentially arranged (in a forward order) based on a front-to-back order of the nodes on the forwarding path. A last table entry in the encrypted route table includes node identifier ciphertext of the tail node, a 2nd last table entry in the encrypted route table includes node identifier ciphertext of a 2nd last node, and so on. A 1st table entry in the encrypted route table includes node identifier ciphertext of the head node. For another example, the encrypted route table entries in the encrypted route table are sequentially arranged (in a reverse order) based on a back-to-front order of the nodes on the forwarding path.

An example in which a node identifier is an address is used. For example, for a forwarding path including N nodes, starting from a previous-hop node N-1 of a tail node, an address of the tail node N is encrypted by using a key of the node N-1; then, an address of the node N-1 is added after address ciphertext of the tail node N, and the address of the node N-1 is encrypted by using a key of a node N-2; and so on, until an identifier of a 2nd node is encrypted by using a key of a head node on the forwarding path.

Because the encrypted route table entry that is in the encrypted route table and that corresponds to the node_i includes the ciphertext obtained by encrypting the identifier of the node_i+1 based on the key of the node_i, a structure of the route table is similar to that of an onion stripped layer by layer. Specifically, in the encrypted route table, each node can only decrypt, based on a key of the current node, a table entry that is in the encrypted route table and that corresponds to the current node. Therefore, the node learns of only an identifier of a next hop of the current node based on the encrypted route table, and cannot learn of an identifier of any subsequent node of the next hop in advance. Each node performs decryption based on a key of the node, to obtain an address of a next hop. A hop-by-hop decryption process is similar to stripping off an onion layer by layer. Each layer can learn of only information about a next layer, but cannot learn of an identifier of a node at a deeper layer. In this manner, path hiding can be implemented on a premise that a packet forwarding task is completed. Benefits of path hiding include but are not limited to the following aspects:

First, a probability of computing the proof of transit in advance before forwarding is reduced. If the forwarding path or the route table is public, the attackers may compute the proof of transit in advance based on a location and identity information that are known, to break data security. The encrypted route table is used, so that an identifier of each-hop node on a complete path is hidden, and the identifier of the node is gradually disclosed hop by hop in a transmission process. In a forwarding process of each hop, only an identifier of a next hop is learned of, and an identifier of a subsequent node cannot be learned of in advance. This reduces the possibility that the attackers compute the proof of transit in advance in the transmission process, so that the attackers cannot obtain the complete path and identity information at the beginning, and compute the proof of transit in advance.

Second, after the data is diverted by the malicious attackers, the attackers cannot learn of where the data is forwarded to, so that violation forwarding of the data is suspended, and an effect of passive interception is achieved. Specifically, when the attackers attempt to skip a node and directly forward the data to a subsequent node, an address of the subsequent node cannot be decrypted because the attackers cannot obtain a key of the node. Therefore, the attackers cannot learn of which node the data is forwarded to, and cannot compute the proof of transit correctly. For example, the forwarding path includes forwarding node A→forwarding node B→forwarding node C→forwarding node D. The attackers divert a data packet that was originally received by the forwarding node B to a forwarding node B'. However, the forwarding node B' does not have a key of the forwarding node B. Therefore, the forwarding node B' cannot decrypt an identifier of the forwarding node C based on an encrypted route table carried in the data packet, the forwarding node B' cannot forward the data packet to the forwarding node C, and it is difficult for the forwarding node C to compute a correct proof of transit, so that the forwarding stops because verification on the proof of transit carried in the data packet cannot succeed. In this way, a macro observer may observe that the forwarding of the data packet stops at the node b', so that the effect of passive interception is achieved, and malicious behavior is detected and prevented in time.

Third, after diverting the data by skipping a segment of nodes on the trusted path, the attackers cannot forward the data back to a subsequent node on the trusted path and pretend that the data never leaves the trusted path. Specifically, even if the attackers forward the data to a node on an untrusted path, the attackers cannot continue to forward the data to the subsequent node on the trusted path due to a lack of a key of the subsequent node and a correct proof of transit, and cannot compute the correct proof of transit.

In some possible implementations, a part of the route table entries in the encrypted route table are in an encrypted state, and the part of the route table entries include identifier ciphertext of a downstream node of the node_i on the forwarding path; and the other part of the route table entries are in a decrypted state, and the part of the route table entries include identifier plaintext of an upstream node of the node_i on the forwarding path. For example, in the encrypted route table carried in the data packet received by the node_i, a route table entry corresponding to each of the node_1 to the node_i-1 is in a decrypted state. A route table entry corresponding to the node_1 includes an identifier of the node_1. A route table entry corresponding to the node_2 includes an identifier of the node_2. By analogy, a route table entry corresponding to the node_i-1 includes an identifier of the node_i-1. A route table entry corresponding to each of the node_i to the node_N is in an encrypted state. In this manner, it is equivalent to that the complete forwarding path is divided into two segments, and a 1st half path (corresponding to the route table entry corresponding to each of the node_1 to the node_i-1) that the packet has passed through is public to the node_i, so that the node_i verifies the proof of transit based on an identifier of each node in the 1st half path; and a 2nd half path (corresponding to a route table entry corresponding to each of the node_i+1 to the node_N) that the packet has not passed through is confidential to the node_i, to keep path hiding. In particular, because the forwarding path of the data packet is relatively confidential before forwarding, a risk that the data packet suffers a prepared timing attack and a risk that the data packet skips some nodes and returns to the 2nd half of the trusted path after being diverted in the 1st half of the path that has been passed through are reduced.

In some possible implementations, the encrypted route table is in a key-value pair format, where a key (an index keyword based on which the table lookup is performed) is location information of a node, and a value (a search result corresponding to an index) is identity information of the node.

In some possible implementations, when the single-node proof of transit is used, when the data packet is transferred to the node_i, a format of the encrypted route table carried in the data packet is shown in the following table.

| Identity information of a node r_i-1 |
| T: ciphertext encrypted by using a key of a node r_i (including address information or identity information of a node r_i+1) |

In some possible implementations, when the multi-node proof of transit is used, when the data packet is transferred to the node_i, a format of the encrypted route table carried in the data packet is shown in the following table.

| T: ciphertext encrypted by using a key of a node r_i (including address information or identity information of a node r_i+1) |

Then, the node r_i obtains identity information of each of the node_1 to the node r_i-1 through a channel other than the data packet.

In some other possible implementations, the encrypted route table entry corresponding to the node_i includes egress interface ciphertext of the node_i+1. The egress interface ciphertext of the node_i+1 is ciphertext obtained by encrypting an identifier of a specified egress interface of the node_i based on the key of the node_i, and the specified egress interface of the node_i is an interface that is of the node_i and that is for communicating with the node _i+1. For example, for a forwarding path including N nodes, starting from a previous-hop node_N-1 of a tail node, an identifier of an egress interface that is of the node_N-1 and that is configured to communicate with the tail node is encrypted by using a key of the node N-1. Then, an identifier of an egress interface that is of a node_N-2 and that is configured to communicate with the node_N-1 is encrypted by using a key of the node_N-2, ciphertext of the egress interface of the node_N-2 is added to ciphertext of the egress interface of the node_N-1, and so on, until an identifier of an egress interface that is of a head node and that is configured to communicate with a $2^{nd}$ node is encrypted by using a key of the head node on the forwarding path. In this manner, the forwarding node can also learn of only how the current node forwards the packet to the next node, and does not learn of in advance information about any subsequent node of the next node, so that path hiding is protected on the premise that the forwarding task is completed.

In some possible implementations, the controller generates the encrypted route table. For example, before the data packet is forwarded, the controller distributes a symmetric key to each node on the forwarding path in advance. For example, the controller sends a symmetric key of the head node to the head node, sends a symmetric key of the $2^{nd}$ forwarding node to the $2^{nd}$ forwarding node, and by analogy, sends, to the node_i, a symmetric key corresponding to the node_i. Then, the controller encrypts the identifier of the node_i+1 based on the symmetric key of the node_i, to obtain identifier ciphertext of the node _i+1. The identifier ciphertext of the node_i+1 is the encrypted route table entry corresponding to the node_i. The controller adds the identifier ciphertext of the node_i+1 to the route table. The encryption step is repeatedly performed, to obtain the encrypted route table. In a data packet forwarding phase, each forwarding node decrypts, based on the symmetric key received from the controller, a route table entry corresponding to the current node, to obtain an identifier of a next node.

In some possible implementations, in a process of generating the encrypted route table, the network controller is not used, and key distribution is performed by exchanging keys between forwarding nodes, to generate the encrypted route table. For example, the node_i and the previous-hop node or the next node_i+1 perform key distribution, and then a subsequent procedure is the same as a procedure when the encrypted route table is generated by the controller.

In some other possible implementations, the encrypted route table is not used to implement path hiding. In some embodiments, the entire path is public in advance on a control plane, a service plane, or the like, and is still available although security is reduced. In other words, technical effects of three aspects, namely, an effect of binding the proof of transit and the location, correctness of the source of the data packet, and efficiency of obtaining a commitment and verifying the commitment, are not necessarily bound to the encrypted route table. When the forwarding path is public, the technical effects of the three aspects, namely, the effect of binding the proof of transit and the location, the correctness of the source of the data packet, and the efficiency of obtaining and verifying the commitment, can still be implemented to some extent by obtaining the proof of transit based on the location, by verifying the source of the data packet based on the vector commitment, by using the KZG polynomial commitment, or in another manner.

The following uses examples to describe the identity information that can be for obtaining or verifying the proof of transit.

In some possible implementations, the identity information of the forwarding node is public and verifiable identity information. The proof of transit is computed and verified by using public and verifiable identity information, so that difficulty in obtaining the identity information is reduced, and complexity of computing and verifying the proof of transit based on the identity information is reduced. In some other possible implementations, the identity information of the forwarding node_i is a public, verifiable, and unforgeable identity that can be obtained only by the forwarding node_i through computation and that can be verified by a plurality of parties. For example, the identity information of the forwarding node_i includes identity information obtained through encryption based on the key of the forwarding node_i. Optionally, the identity information obtained through encryption based on the key of the forwarding node_i is identity information obtained through encryption based on the symmetric key of the forwarding node_i; or the identity information obtained through encryption based on the key of the forwarding node_i is identity information obtained through encryption based on the private key of the forwarding node_i. The proof of transit is computed or verified by using the encrypted identity information. Because security and privacy of the identity information is higher, security and privacy of computing and verifying the proof of transit are further improved.

For example, the identity information of the forwarding node_i includes an address of the forwarding node_i. The address used as the identity information of the forwarding node_i is optionally an IP address of the forwarding node_i. For example, the address used as the identity information of the forwarding node_i is an internet protocol version 4 (internet protocol version 4, IPv4) address of the forwarding node_i or an internet protocol version 6 (internet protocol version 6, IPv6) address of the forwarding node_i. Alternatively, the address used as the identity information of the forwarding node_i is a MAC address of the forwarding node_i.

For example, the identity information of the forwarding node_i includes a segment identifier (segment ID, SID) of the forwarding node_i. A SID is an identifier used in the SRv6 (Segment Routing over IPv6) network, and is for defining a function or instructions in the network. A form of the SID is the IPv6 address, and the SID has 128 bits. The SID is used as the identity information to compute and verify the proof of transit. This is more applicable to the scenario of the SRv6 network. While the path binding is implemented, a SID carried in SRv6 encapsulation may be reused, and no additional field needs to be added to the packet to carry the identity information. This helps simplify a packet format and reduce packet transmission overheads.

For example, the identity information of the forwarding node_i includes a multi-protocol label switching (multi-protocol label switching, MPLS) label of the forwarding node_i. The MPLS label is a short and fixed-length connection identifier, and is for replacing an IP for forwarding in an MPLS network or an SR-MPLS network. The MPLS label is used as the identity information to compute and verify the proof of transit. This is more applicable to a scenario of the MPLS network or the SR-MPLS network. While the path binding is implemented, an MPLS label carried in MPLS encapsulation or SR-MPLS encapsulation may be reused, and no additional field needs to be added to the packet to carry the identity information. This helps simplify a packet format and reduce packet transmission overheads.

For example, the identity information of the forwarding node_i includes a certificate of the forwarding node_i. The certificate is a digital credential or an electronic file, and is for proving an identity or permission of an entity. The certificate is issued by a trusted third-party authority, such as a digital certificate authority (Certificate Authority, CA for short), and includes identity information (for example, a public key) for verifying and identifying the specified entity. Content of the certificate includes the public key, certificate holder information (for example, a name and an organization), and a certificate validity period. The certificate is used as the identity information to compute and verify the proof of transit. Because authenticity and integrity of the certificate can be verified, this helps reduce a risk caused by tampering, eavesdropping, or forging of the identity information, and further improves security and credibility of the proof of transit.

For example, the identity information of the forwarding node_i includes the key of the forwarding node_i. For example, the identity information of the forwarding node_i includes a public key of the forwarding node_i. For another example, the identity information of the forwarding node_i includes the private key of the forwarding node_i.

For example, the identity information of the forwarding node_i includes an access control token (token) of the forwarding node_i. The access control token is a digital credential for verifying access permission on a protected resource. The access control token includes authorization information and access permission information of the forwarding node. The access control token may be generated by an access control server and issued to the forwarding node. The access control token is used as the identity information to compute and verify the proof of transit. Because each forwarding node can verify validity and permission of the access control token, a risk of tampering with the identity information and leaking data is reduced, and the security and the trustworthiness of the proof of transit are further improved.

For example, the identity information of the forwarding node_i includes a router identifier (router ID) of the forwarding node_i.

For example, the identity information of the forwarding node_i includes a host name of the forwarding node_i.

For example, the identity information of the forwarding node_i includes a signature of the forwarding node_i. For example, the forwarding node_i encrypts the identity information of the forwarding node_i by using the private key of the forwarding node_i, to generate the signature of the forwarding node_i. The signature of the forwarding node_i is used as the identity information to compute and verify the proof of transit, so that a risk of tampering with the identity information and leaking data is reduced, and the security and the trustworthiness of the proof of transit are further improved.

For example, the identity information of the forwarding node_i includes a message authentication code (Message Authentication Code, MAC) tag (tag). The MAC tag is an authentication code for verifying message integrity and authenticity. The MAC tag is a fixed-length value obtained by encrypting and computing a message, so that a probability that the message is tampered with or forged in a transmission process is reduced. For example, the forwarding node_i performs an operation by using a shared key and message content between the forwarding node_i and another forwarding node on the forwarding path to generate the MAC tag, and uses the MAC tag as the identity information to compute and verify the proof of transit, to further reduce a probability that the proof of transit is tampered with and forged, and enhance the security and the trustworthiness of the proof of transit.

For example, the identity information of the forwarding node_i includes a zero-knowledge (Non-Interactive Zero-Knowledge, NIZK) proof. Zero knowledge is a cryptography technology for proving authenticity of a statement without disclosing information behind the statement. The proof allows a prover to present a proof of a fact to the verifier without disclosing any other information related to the fact. The zero-knowledge proof used as the identity information is, for example, a Schnorr proof. The Schnorr proof is a zero-knowledge NIZK proof protocol that is based on a discrete logarithm problem, and was proposed by Claude Schnorr. The NIZK proof is used as the identity information to compute and verify the proof of transit. This can hide a real identity of the forwarding node, and reduce a probability that the real identity of the forwarding node is disclosed. In addition, the NIZK proof used as the identity information can be verified, to further reduce a probability that the proof of transit is tampered with and forged, and enhance the security and the trustworthiness of the proof of transit.

For example, the identity information of the forwarding node_i includes a Sigma protocol proof. The Sigma protocol proof is an interactive protocol that is based on a zero-knowledge proof (Zero-Knowledge Proof), and allows the prover to prove a statement true in interaction with the verifier without disclosing real information of the statement. In the Sigma protocol proof, the prover and verifier interact with each other for a plurality of rounds to implement mutual authentication. The prover attempts to prove authenticity of a statement to the verifier; and the verifier wishes to confirm the authenticity of the statement, and believes that the prover indeed can prove the statement. However, a special property of the protocol is that the prover cannot disclose the real information of the statement to the verifier, so that privacy of the prover is protected.

The following uses examples to describe a trigger condition for computing the proof of transit by the forwarding node.

In a possible implementation, after the forwarding node_i obtains the data packet, in response to identifying that the data packet carries a trusted-path identifier, the forwarding node_i performs a step of obtaining the proof of transit. The packet header in the data packet includes the trusted-path identifier.

The trusted-path identifier indicates to obtain the proof of transit. For example, the trusted-path identifier is for distinguishing whether the forwarding node now needs to compute the proof of transit.

The trusted-path identifier is included in the packet header in the data packet, so that the forwarding node determines, depending on whether there is an identifier, whether the proof of transit needs to be computed. For example, if the forwarding node_i determines that the data packet does not carry the trusted-path identifier, the forwarding node_i uses an original forwarding mechanism, and does not need to compute the proof of transit. Specifically, effects achieved by including the trusted-path identifier in the packet header include but are not limited to the following aspects.

First, flexibility is improved. Specifically, the trusted-path identifier provides an optional mechanism, allowing the forwarding node to determine, based on a specific requirement and a change of the requirement, whether the proof of transit needs to be computed, to improve flexibility and scalability.

Second, a configuration is simplified, and a possibility of a configuration error is reduced. Compared with a static-configuration manner of configuring, on the forwarding node, for which packets proofs of transit are generated, a manner in which the packet header in the data packet includes the trusted-path identifier makes it unnecessary to preconfigure, on the forwarding node, for which packets proofs of transit need to be generated, so that a configuration procedure is simplified, and configuration complexity is reduced. In addition, a probability of omitting, during manual configuration, a task of configuring that proofs of transit are obtained for some packets is also reduced.

Third, a computing resource is saved. When the data packet does not carry the trusted-path identifier, the forwarding node may determine that the proof of transit does not need to be computed, so that a computing resource and time can be saved, and overall network performance and efficiency are improved.

In another possible implementation, after the forwarding node_i obtains the data packet, the forwarding node_i identifies a service type carried in the data packet; and in response to identifying that the data packet carries data of a specific service type, performs a step of obtaining the proof of transit, to implement the proof of transit for a specific service. For example, in response to identifying that the data packet includes a network service header (network service header, NSH) in a service function chaining protocol, the forwarding node_i determines that the data packet carries data of service function chaining, and performs the step of obtaining the proof of transit. For another example, the forwarding node_i performs application identification on payload data in the data packet, to obtain an application type corresponding to the payload data; and in response to that the application type is a target application, performs the step of obtaining the proof of transit. Effects achieved by performing the step of obtaining the proof of transit for the specific service include but are not limited to the following aspects.

First, a service requirement is flexibly and accurately matched. Whether to compute the proof of transit is determined depending on whether the packet includes data related to the specific service, so that the proof of transit needs to be computed only for the data related to the specific service, to flexibly compute the proof of transit based on requirements of different services. In this way, personalized proof of transit requirements of the different services can be satisfied, and flexibility and customizability of the network are improved.

Second, a configuration is simplified, and a possibility of a configuration error is reduced. Compared with a static-configuration manner of configuring, on the forwarding node, for which packets proofs of transit are generated, the forwarding node automatically determines, by identifying a service carried in the data packet, whether to generate the proof of transit, and it is unnecessary to preconfigure, on the forwarding node, for which packets proofs of transit need to be generated, so that a configuration procedure is simplified, and configuration complexity is reduced. In addition, a probability of omitting, during manual configuration, a task of configuring that proofs of transit are obtained for some packets is also reduced.

Third, a computing resource is saved. When the data packet does not carry the data related to the specific service, the forwarding node may determine that proof of transit does not need to be computed, to avoid wasting the computing resource for other data for which a proof does not need to be computed, save the computing resource and time, and improve overall network performance and efficiency.

In another possible implementation, after the forwarding node_i obtains the data packet, in response to identifying that the data packet includes an identifier of each node on a specific tunnel, the forwarding node_i performs a step of obtaining the proof of transit, to verify whether the data packet is forwarded through the specific tunnel. For example, the implementation is applied to an SRv6 scenario. In response to identifying that the data packet includes a segment list (segment list), the forwarding node_i performs a step of obtaining the proof of transit. For another example, the implementation is applied to an MPLS scenario. In response to identifying that the data packet includes a label stack, the forwarding node_i performs a step of obtaining the proof of transit.

The following uses examples to describe a manner in which the forwarding node obtains location information of the current node or location information of an upstream node. In a possible implementation, the forwarding node obtains the location information of the current node or the location information of the upstream node based on the received data packet. For example, the forwarding node obtains the location information of the current node carried in the data packet; or the forwarding node further processes data related to the location information and carried in the data packet, to obtain the location information of the current node.

In a possible implementation, the data packet includes an IPv4 header (IPv4 header), and the IPv4 header includes time to live (time to live, TTL). The forwarding node_i identifies a value of the TTL, and obtains the location i of the forwarding node_i on the forwarding path based on the value of the TTL.

The TTL is a field in a packet header (the IPv4 header) in an IPv4 protocol, and is for limiting transmission time or a hop count of the data packet in the network. The TTL is represented in a form of an integer. The TTL decreases by 1 each time a data packet passes through one forwarding node. When the value of the TTL decreases to 0, the data packet is discarded, and a timeout message is returned to a source node. The TTL is located in a 9th byte of the IPv4 header, and occupies one byte (8 bits), for storing the value of the TTL. A method for determining, based on the TTL, the location of the current node on the forwarding path is, for example, as follows: If an initial value of the TTL is k, because the value of the TTL decreases by 1 each time the data packet passes through one node, when the node_i receives the data packet and identifies that the value of the TTL carried in the data packet is n-i, the node_i determines that the current node is the $i^{th}$ node on the forwarding path.

In a possible implementation, the data packet includes an IPv6 header (IPv6 header), and the IPv6 header includes a hop limit (hop limit). The forwarding node_i identifies a value of TTL, and obtains the location i of the forwarding node_i on the forwarding path based on the value of the TTL.

In an IPv6 protocol, the TTL is referred to as the hop limit (hop limit), and the hop limit is also carried in a field in the IPv6 header (IPv6 header). The hop limit is similar to TTL in IPv4, and is for limiting a hop count of the data packet in the network. The TTL is located in a 7th byte of the IPv6 header, and occupies one byte (8 bits), for storing a value of the hop limit. To determine a location of the current node on the forwarding path, the node_i identifies the value of the hop limit field in the IPv6 header. If the hop limit is 255, it may be determined that the current node is a 1st hop. If the hop limit is 254, it may be determined that the current node is a 2nd hop. By analogy, each time the hop limit decreases by one, a sequence number of the location of the current node increases by one correspondingly.

In a possible implementation, the data packet includes a service index (service index, SI), and the forwarding node obtains the location information of the current node based on the SI carried in the data packet. The service index (SI) is a field in the network service header (network service header, NSH). A value of the SI ranges from 255 to 0, decreasing by 1. Therefore, after identifying the value of the SI in the NSH, the forwarding node may use a value of 256-SI as the location information of the current node.

In a possible implementation, the data packet includes a segment list. The forwarding node_i obtains the location information of the node_i on the forwarding path based on an arrangement ranking of the SID of the node_i in the segment list.

The segment list is information indicating the forwarding path in the SRv6 scenario. The segment list includes a series of SIDs. Each SID represents a node or link in the network. Arrangement in the segment list is in a reverse order. That is, the SIDs in the segment list are arranged in an order from the tail node to the head node on the forwarding path. A segment list [0] indicates a SID corresponding to the tail node on the forwarding path, a segment list [1] indicates a SID corresponding to the 2nd last node on the forwarding path, and by analogy, a segment list [N] indicates a SID corresponding to the head node on the forwarding path. In a possible implementation, the forwarding node_i obtains the location information of the node_i on the forwarding path based on an offset of the SID of the node_i relative to the segment list [N]. Similarly, the forwarding node_i may obtain the location information of the upstream node on the forwarding path based on an offset of a SID of the upstream node relative to the segment list [N].

In another possible implementation, the data packet includes an address list, the address list includes an address of each forwarding node, and addresses of different forwarding nodes in the address list are sequentially arranged based on an arrangement sequence of the forwarding nodes on the forwarding path. The forwarding node_i obtains the location information of the node_i on the forwarding path based on an arrangement ranking of the address of the node_i in the address list. The address list is, for example, the foregoing encrypted route table.

In another possible implementation, the controller delivers, to each forwarding node on the forwarding path, location information of each upstream forwarding node of the forwarding node on the forwarding path. For example, the controller sends location information of each forwarding node at a location 1 to the location i on the forwarding path to the forwarding node_i, and the forwarding node_i receives the location information that is of each forwarding node at the location 1 to the location i on the forwarding path and that is sent by the controller.

In another possible implementation, different forwarding nodes advertise location information to each other. For example, the forwarding node_i advertises the location information of the current node to each of the forwarding node_i to the forwarding node_N. An upstream node advertises location information of the current node to a downstream node, so that the downstream node obtains or verifies a proof of transit based on the location information of the upstream node.

In another possible implementation, the location information of the current node and the location information of the upstream forwarding node of the current node on the forwarding path are preconfigured on the forwarding node. For example, configuration information stored by the forwarding node_i includes location information of each of the forwarding node_1 to the forwarding node_i on the forwarding path, and the forwarding node_i obtains the location information of each of the forwarding node_1 to the forwarding node_i from the configuration information.

That the location information of the forwarding node is plaintext (for example, a positive integer) is merely an example. In another possible implementation, a specific obfuscation mechanism may alternatively be used for the location information of the forwarding node, so that the location information obtained and used by the forwarding node is in a form of ciphertext, and a risk that the data source is leaked due to leakage of the location information and that the attackers identify a key forwarding node is reduced.

The following uses examples to describe a manner in which the forwarding node obtains identity information of the current node or identity information of an upstream node.

In a possible implementation, the data packet carries the identity information of the forwarding node. For example, after obtaining the data packet_i, the forwarding node_i obtains the identity information that is of the forwarding node_i and that is carried in the data packet_i. If necessary, the forwarding node_i further obtains identity information that is of each of the forwarding node_1 to the forwarding node_i and that is carried in the data packet_i.

In another possible implementation, different forwarding nodes advertise identity information to each other. For example, when the single-node proof of transit is verified, the forwarding node_i advertises the identity information of the forwarding node_i to the forwarding node_i+1. When the multi-node proof of transit is verified, the forwarding node_i advertises the identity information of the forwarding node_i to each of the forwarding node_i+1 to the forwarding node_N. The identity information of the current node is advertised to the downstream node, so that the downstream node obtains or verifies the proof of transit based on the identity information of the upstream node.

In another possible implementation, the controller distributes the identity information to each forwarding node on the forwarding path. For example, when the single-node proof of transit is verified, the controller advertises the identity information of the forwarding node_i-1 to the forwarding node_i, and the forwarding node_i receives the identity information of the forwarding node_i-1 from the controller, to verify a single-node proof of transit of the forwarding node_i-1 based on the identity information of the forwarding node_i-1. When the multi-node proof of transit is verified, the controller advertises, to the forwarding node_i, identity information of each of the head node to the forwarding node_i-1, and the forwarding node_i receives the identity information of each of the head node to the forwarding node_i-1 from the controller, to verify a multi-node proof of transit of the forwarding node_i-1 based on the identity information of each of the head node to the forwarding node_i-1.

In another possible implementation, the forwarding node_i obtains the identity information of the forwarding node_i-1 from the configuration information stored by the forwarding node_i. Alternatively, the forwarding node_i obtains identity information of each of the head node to the forwarding node_i-1 from the configuration information stored by the forwarding node_i.

In a possible implementation, the forwarding node adds a proof of transit of the current node to each obtained data packet in a manner of including the proof of transit by packet. For example, each data packet in a data flow sent by the forwarding node_i to the forwarding node_i-1 carries a proof of transit of the forwarding node_i. Because each data packet has an independent proof of transit, each data packet can be independently controlled and verified, so that monitoring and verification on the data packet are increased, and a data transmission process is more secure and reliable.

In another possible implementation, the forwarding node adds a proof of transit of the current node to a 1st data packet in a data flow in a manner of including the proof of transit by flow. For example, after obtaining a first data flow, the forwarding node_i generates a proof of transit p_i of the forwarding node_i, adds the proof of transit p_i to a 1st data packet in the first data flow, and does not need to add the proof of transit p_i to each data packet after the 1st data packet in the first data flow. After receiving the 1st data packet in the first data flow, in response to determining that verification on the proof of transit p_i carried in the 1st data packet succeeds, the forwarding node_i+1 stores, in a session table, an identifier of the first data flow and an identifier (for example, permit) indicating that passing of the data flow is allowed. When receiving each data packet that is after the 1st data packet in the first data flow, the forwarding node_i+1 looks up the session table based on the identifier that is of the first data flow and that is carried in the data packet. If the identifier indicating that passing of the data flow is allowed is obtained, the forwarding node_i+1 further forwards the data packet to the next forwarding node_i+2. Alternatively, after receiving the 1st data packet in the first data flow, in response to determining that verification on the proof of transit p_i carried in the 1st data packet fails, the forwarding node_i+1 stores, in a session table, an identifier of the first data flow and an identifier (for example, a term, namely, deny) indicating that passing of the data flow is rejected. When receiving each data packet that is after the 1st data packet in the first data flow, the forwarding node_i+1 looks up the session table based on the identifier that is of the first data flow and that is carried in the data packet. If the identifier indicating that passing of the data flow is rejected is obtained, the forwarding node_i+1 discards the data packet. Because the proof of transit is carried in a 1st data packet of each data flow, bandwidth and computing resource consumption caused by including the proof of transit in each data packet is avoided, and network transmission efficiency is improved.

In another possible implementation, the forwarding node_i adds the proof of transit p_i of the current node to data packets at an interval of a specific quantity of data packets in a data flow. For example, the interval is three data packets. For example, when a 1st data packet, a 4th data packet, and a 7th data packet in a data flow pass through the forwarding node_i, the forwarding node_i adds the proof of transit p_i of the current node to these data packets. Because the proof of transit does not need to be added to each data packet, but a specific quantity of data packets are skipped to add the proof of transit, network traffic and transmission overheads can be reduced, and a quantity of proofs of transit is reduced.

In another possible implementation, the forwarding node_i records a quantity of obtained data packets in a first data flow; and in response to that the quantity of obtained data packets in the first data flow reaches a quantity threshold, adds the proof of transit p_i to a next obtained data packet.

The following describes a system architecture in embodiments of this application by using an example.

Embodiments of this application provide a general-purpose trusted path protection technology, to protect a data plane forwarding path. Therefore, the technology can be applied to any scenario in which trusted path protection is needed. The scenario to which embodiments of this application are applied includes any layer of a computer network. For example, a link layer is applicable to an Ethernet or MPLS protocol; a network layer is applicable to an IPv4 or IPv6 protocol; a tunnel layer is applicable to SRv6, an APN, a virtual extensible local area network (Virtual Extensible LAN, VXLAN), or internet protocol security (internet protocol security, IPsec); and a service layer is applicable to a service function chaining (service function chaining, SFC) protocol.

A difference between different protocol scenarios lies in packet headers carrying a commitment and a proof of transit and specific carrying locations.

The following first describes general-purpose trusted path protocol steps, functions, and roles, and then uses examples to describe the difference of application between the different protocol scenarios.

In any scenario in which a trusted path is needed, there are the following roles: a controller, a forwarding node, and an observer.

The controller is configured to generate, for a specified forwarding path, a vector commitment corresponding to the forwarding path, and output the vector commitment.

In a possible implementation of outputting the vector commitment, the controller sends the vector commitment to the observer, so that the observer verifies the proof of transit based on the received vector commitment. For example, the controller sends a data packet to the observer, where the data packet includes the vector commitment; and the observer obtains the vector commitment carried in the received data packet. For another example, the controller sends a control plane packet to the observer, where the control plane packet includes the vector commitment; and the observer obtains the vector commitment carried in the received control plane packet.

In another possible implementation of outputting the vector commitment, the controller stores a correspondence between an identifier of the forwarding path and the vector commitment in a database, so that the observer obtains the vector commitment through searching the database based on the identifier of the forwarding path, and then verifies the proof of transit based on the vector commitment.

Optionally, the controller stores, in a blockchain system, the correspondence between the identifier of the forwarding path and the vector commitment. Because a blockchain system stores data in a decentralized manner, to reduce a probability that the vector commitment is tampered with or eavesdropped, improve data security of the vector commitment, and effectively protect integrity of the vector commitment. In addition, a manner in which the vector commitment is stored publicly provides traceability and auditability of the path and a computation result. Alternatively, the controller stores the correspondence between the identifier of the forwarding path and the vector commitment in a distributed shared database of another type other than a blockchain.

The controller is, for example, a computing device. For example, the controller is a server. The controller optionally obtains identity information of all forwarding nodes in advance before generating the commitment.

If necessary, the controller may choose to perform one-to-N key pre-distribution to forwarding nodes, so that the forwarding node decrypts the encrypted route table based on a delivered key to determine a next hop of the current node. If necessary, the controller may choose to perform remote attestation secret distribution, where a secret is identity information of a forwarding node in a form of ciphertext.

The forwarding node is a node device included on the forwarding path. The forwarding node is, for example, a network device. For example, the forwarding node is a switch, a router, or a firewall. The forwarding node is, for another example, a computing device. For example, the forwarding node is a server or a terminal. The forwarding node is a physical device or a virtual device. The forwarding node is a smallest atomic node. At a network layer at which the forwarding node is located, there is no secondary node that is at a lower level than that of the forwarding node and through which data is forwarded without being discovered.

In a possible implementation, after obtaining a data packet, in response to determining that the data packet needs to be forwarded through a trusted forwarding path, the forwarding node participates in computation of a proof of transit. In a possible implementation, when the forwarding node_i obtains a data packet, in response to identifying that a packet header in the data packet includes the trusted-path identifier, the forwarding node_i computes the proof of transit p_i, and makes the proof of transit p_i public to the observer.

In a possible implementation, the proof of transit p_i is a single-node proof, and the proof of transit p_i is for proving that the forwarding node_i at the location i forwards the data packet.

In another possible implementation, the proof of transit p_i is a multi-node proof, and the proof of transit p_i is for proving that each forwarding node (r_1, r_2, ..., r_i) at the location 1 to the location i on the forwarding path forwards the data packet at a correct location.

The observer represents a world that knows public information. The observer may be any device that cares about reliability of the forwarding path. The observer is configured to verify, based on the commitment C generated by the controller, the identity of the forwarding node, and the location of the forwarding node, the proof of transit computed by the forwarding node. In a possible implementation, the observer is unbiased. That is, observation and verification results of the observer are both the same as outputs of a protocol in a correct case.

In a possible implementation, the observer and the forwarding node on the forwarding path are separately disposed on different hardware devices. The observer does not need to undertake a packet forwarding task. The observer is deployed outside the forwarding path.

In another possible implementation, the observer and the forwarding node are integrated on a same hardware device. The device undertakes a packet forwarding task and a proof of transit verification task. In other words, the forwarding node also serves as the observer.

In a possible implementation, a proof of transit obtaining process includes the following step 1 to step 4.

Step 1: Select a path. In a possible implementation, the controller selects the forwarding path. In another possible implementation, the terminal selects the forwarding path, and the terminal advertises the selected forwarding path to the controller.

Step 2: Compute a commitment. For example, the controller obtains the vector commitment of the forwarding path based on location information of each node on the forwarding path and identity information of the node on the forwarding path.

For example, a forwarding path including N forwarding nodes is represented as a vector $P=(r\_1, r\_2, ..., r\_N)$, where r_i represents the identity information of the forwarding node. The controller computes, based on the identity information r_i of each of the N forwarding nodes, the location information of each forwarding node, and a commit function $C=Commit(P)$, the vector commitment C corresponding to the path.

In a possible implementation, based on a vector commitment verification algorithm, if a verification result for the proof of transit based on the commitment C, the location i, the identity r_i, and related auxiliary data is 1, it indicates that verification on the proof of transit succeeds. If a verification result for the proof of transit based on the commitment C, the location i, the identity r_i, and related auxiliary data is 0, it indicates that the verification on the proof of transit fails. The auxiliary data is, for example, a cryptography parameter based on which the commitment is computed.

In a possible implementation, before forwarding the data packet, the controller distributes a public parameter and the auxiliary data that are needed for computing the proof of transit to each forwarding node on the forwarding path.

Step 3: Compute the proof of transit.

In a possible implementation, the data packet that carries the trusted-path identifier starts to be transmitted. When the forwarding node_i receives the data packet, and identifies the trusted-path identifier, the forwarding node_i computes the proof of transit p_i. In a possible implementation, the forwarding node_i adds the proof of transit p_i to the data packet, so that the proof of transit p_i continues to be transferred along with the data packet. In another possible implementation, the forwarding node_i separately discloses the proof of transit p_i. For example, the forwarding node_i generates a packet based on the proof of transit p_i, where the packet includes the proof of transit p_i; and the forwarding node_i sends the packet including the proof of transit p_i to the observer, to advertise the proof of transit p_i to the observer.

In a possible implementation, the forwarding node_i obtains the proof of transit p_i based on identity information of the forwarding node_i, location information of the forwarding node_i, and the cryptography parameter, where the proof of transit p_i is a single-node proof of transit, and the proof of transit p_i is for proving that the forwarding node_i forwards the data packet at the location i. Optionally, the forwarding node_i obtains the proof of transit p_i by using a single open (Open) function, where p_i=Open(i, r_i).

In another possible implementation, the forwarding node_i obtains the proof of transit p_i based on identity information of each of a node_1 to the node_i, location information of each of the node_1 to the node_i, and the cryptography parameter, where the proof of transit p_i is a multi-node proof of transit, and the proof of transit p_i is for proving that the node_1 forwards the data packet at the location 1, a node_2 forwards the data packet at a location 2, ..., and the node_i forwards the data packet at the location i. Optionally, the forwarding node_i obtains the proof of transit p_i by using a batch open (BatchOpen) function, where p_i=BatchOpen(r_1, ..., r_i).

Step 4: Verify the proof of transit.

The observer receives the commitment C, the proof of transit p_i, and a node set B corresponding to the proof of transit p_i. The node set B includes one or more nodes on the forwarding path. The observer verifies correctness of the proof of transit based on the commitment C, the proof of transit p_i, the node set B, and other auxiliary data.

For example, in a scenario in which verification is performed on the single-node proof of transit, the observer verifies the proof of transit p_i based on the commitment C, the identity information of the forwarding node_i, the location information of the forwarding node_i, and the cryptography parameter, where the proof of transit p_i is the single-node proof of transit. Optionally, the forwarding node_i verifies the proof of transit p_i by using a verify (verify) function. For example, if Verify(C, p_i, i, r_i)=1, the verification succeeds; or if Verify(C, p_i, i, r_i)=0, the verification fails, where C represents the commitment, p_i represents the proof of transit of the forwarding node_i, r_i represents the identity information of the forwarding node_i, i represents the location information of the forwarding node_i, Verify(C, p_i, i, r_i)=1 represents that the commitment, the proof of transit of the forwarding node_i, the identity information of the forwarding node_i, and the location information of the forwarding node_i correspond to each other, and Verify(C, p_i, i, r_i)=0 represents that the commitment, the proof of transit of the forwarding node_i, the identity information of the forwarding node_i, and the location information of the forwarding node_i do not correspond to each other.

For example, in a scenario in which verification is performed on the multi-node proof of transit, the observer verifies the proof of transit p_i based on the commitment C, identity information of each forwarding node in the node set B, location information of each forwarding node in the node set B, and the cryptography parameter, where the proof of transit p_i is the multi-node proof of transit. Optionally, the forwarding node_i verifies the proof of transit p_i by using a batch verify (batch verify) function. For example, if batch verify(C, p_i, B, r_B)=1, the verification succeeds; or if batch verify(C, p_i, B, r_B)=1=0, the verification fails, where C represents the commitment, p_i represents the proof of transit of the forwarding node_i, B represents the location information of each forwarding node in the node set B, r_B represents the identity information of each forwarding node in the node set B, batch verify(C, p_i, B, r_B)=1 represents that the commitment, the proof of transit of the forwarding node_i, the identity information of each forwarding node in the node set B, and the location information of each forwarding node in the node set B correspond to each other, and batch verify(C, p_i, B, r_B)=0 represents that the commitment, the proof of transit of the forwarding node_i, the identity information of each forwarding node in the node set B, and the location information of each forwarding node in the node set B do not correspond to each other.

For an occasion of verifying the proof of transit, in a possible implementation, a real-time verification manner is used. Each time a forwarding step is performed on the data packet, a step of verifying the proof of transit is performed along with the forwarding step. Real-time in real-time verification means that a time point of verifying the proof of transit is real-time relative to a time point of receiving the data packet. For example, if any forwarding node on a trusted forwarding path receives a data packet including a proof of transit, the forwarding node verifies the proof of transit carried in the data packet. For another example, if any forwarding node on a trusted forwarding path receives a data packet, the forwarding node generates a proof of transit, and sends the proof of transit to the observer. In another possible implementation, verification may alternatively be performed at a time after all data packet forwarding steps are completed.

The following uses examples to describe a carrying location of the proof of transit in the packet when the data packet carries the proof of transit.

When data transmission is performed based on an IPv6 protocol, in a possible implementation, the proof of transit is carried by using an IPv6 extension header. For example, the proof of transit is carried by using a segment routing header (segment routing header, SRH). For another example, the proof of transit is carried by using a hop-by-hop options header (hop-by-hop options header, HBH). For another example, the proof of transit is carried by using a destination option header (destination options header, DOH). The SRH, the HBH, and the DOH are specific examples of three IPv6 extension headers that can carry the proof of transit.

Optionally, the proof of transit is carried by using a type-length-value (type-length-value, TLV) in the IPv6 extension header. For example, the proof of transit is carried by using a TLV in the SRH. For another example, the proof of transit is carried by using a TLV in the HBH. For another example, the proof of transit is carried by using a TLV in the DOH.

When data transmission is performed based on an APN6 protocol, in a possible implementation, the proof of transit is carried by using an APN packet header. For example, the proof of transit is carried by using an application-aware networking identifier (APN ID) in the APN packet header. When data transmission is performed based on a VXLAN protocol, in a possible implementation, the proof of transit is carried by using a VXLAN header. This is applicable to a scenario like a VXLAN protocol-based virtualized network or cross-data center interconnection, and a function of verifying a data source on a VXLAN tunnel is provided. When data transmission is performed based on an IPsec protocol, in a possible implementation, the proof of transit is carried by using an IPsec header, so that a data source can be verified and secure transmission can be implemented in the IPsec protocol. This manner is applicable to a scenario like an IPsec protocol-based virtual private network (VPN) or secure communication, and a capability of verifying the data source on an IPsec tunnel is provided. When data transmission is performed based on an MPLS protocol, in a possible implementation, the proof of transit is carried by using an MPLS header. For example, the forwarding path includes, for example, a label switched path, and each of the node_1, the node_2, ..., the node_N on the forwarding path includes an LSR on the label switched path, so that a data source can be verified and secure transmission can be implemented in the MPLS protocol. This manner is applicable to a scenario like multi-layer label switching, a service provider network, or cross-domain communication that is based on the MPLS protocol, and a mechanism for verifying the data source in an MPLS network is provided. When data transmission is performed based on an SFC protocol, in a possible implementation, the proof of transit is carried by using an NSH. For example, the proof of transit is carried by using a metadata field in the NSH.

The following uses examples to describe a carrying location of the vector commitment in the packet when the data packet carries the vector commitment.

When data transmission is performed based on an IPv6 protocol, in a possible implementation, the vector commitment is carried by using an IPv6 extension header. For example, the vector commitment is carried by using an SRH. For another example, the vector commitment is carried by using an HBH. For another example, the vector commitment is carried by using a DOH. The SRH, the HBH, and the DOH are specific examples of three IPv6 extension headers that can carry the vector commitment.

Optionally, the vector commitment is carried by using a TLV in the IPv6 extension header. For example, the vector commitment is carried by using a TLV in the SRH. For another example, the vector commitment is carried by using a TLV in the HBH. For another example, the vector commitment is carried by using a TLV in the DOH.

When data transmission is performed based on an APN6 protocol, in a possible implementation, the vector commitment is carried by using an APN packet header. For example, the vector commitment is carried by using an APN ID in the APN packet header. When data transmission is performed based on a VXLAN protocol, in a possible implementation, the vector commitment is carried by using a VXLAN header. When data transmission is performed based on an IPsec protocol, in a possible implementation, the vector commitment is carried by using an IPsec header. When data transmission is performed based on an MPLS protocol, in a possible implementation, the vector commitment is carried by using an MPLS header. When data transmission is performed based on an SFC protocol, in a possible implementation, the vector commitment is carried by using an NSH. For example, the vector commitment is carried by using a metadata field in the NSH.

In a possible implementation, the proof of transit and the vector commitment are carried in different fields in a same packet header. For example, the forwarding node_i sends a data packet_i+1 to the forwarding node_i+1.

For example, the data packet_i+1 includes an IPv6 extension header, and the IPv6 extension header includes the proof of transit of the forwarding node_i and the vector commitment. For example, the IPv6 extension header in the data packet_i+1 includes an SRH, the SRH includes a first TLV and a second TLV, the first TLV in the SRH includes the proof of transit of the forwarding node_i, and the second TLV in the SRH includes the vector commitment; the IPv6 extension header in the data packet_i+1 includes an APN packet header, the APN packet header includes an APN ID, and the APN ID includes the proof of transit of the forwarding node_i and the vector commitment; the IPv6 extension header in the data packet_i+1 includes a DOH, the DOH includes a first TLV and a second TLV, the first TLV in the DOH includes the proof of transit of the forwarding node_i, and the second TLV in the DOH includes the vector commitment; or the IPv6 extension header in the data packet_i+1 includes an HBH, the HBH includes a first TLV and a second TLV, the first TLV in the HBH includes the proof of transit of the forwarding node_i, and the second TLV in the HBH includes the vector commitment.

For example, the data packet_i+1 includes an NSH, the NSH includes a metadata field, and the metadata field includes the proof of transit of the forwarding node_i and the vector commitment; the data packet_i+1 includes an MPLS header, and the MPLS header includes the proof of transit of the forwarding node_i and the vector commitment; the data packet_i+1 includes a VXLAN header, and the VXLAN header includes the proof of transit of the forwarding node_i and the vector commitment; or the data packet_i+1 includes an IPsec header, and the IPsec header includes the proof of transit of the forwarding node_i and the vector commitment.

Placing the proof of transit and the vector commitment in the same packet header helps simplify a format and a structure of the packet. In this way, no additional header is needed to separately carry the proof of transit and the vector commitment, so that packet complexity and redundancy are reduced. In addition, placing the proof of transit and the vector commitment in the same packet header can simplify packet processing logic of the node. For example, after receiving the data packet_i+1, the node_i needs to parse the packet header only once to obtain the proof of transit and the vector commitment information. In this way, processing logic of the node_i is clearer and simpler, and complexity in a processing process is reduced.

The following describes proof of transit verification modes provided in embodiments of this application. Embodiments of this application provide three proof of transit verification modes, and protocol steps and data packet headers in different verification modes are slightly different. The three proof of transit verification modes include a real-time verification (Postcard) mode, an in-situ verification (Passport) mode, and a destination verification (Final_only) mode. The real-time verification mode includes an OP sub-mode and an MP sub-mode. The in-situ verification mode includes an OP sub-mode and an MP sub-mode. The destination verification mode includes an MP sub-mode. The following describes each mode by using an example. To distinguish between and describe a case in which the forwarding node and the observer are integrated on a same hardware device and a case in which the forwarding node and the observer are separately disposed on different hardware devices, a device that is deployed outside the forwarding path and that is used as the observer is referred to as a verification node below. The verification node is, for example, a computing device. For example, the forwarding node is a server or a terminal.

Verification mode 1: Real-time verification (Postcard) mode

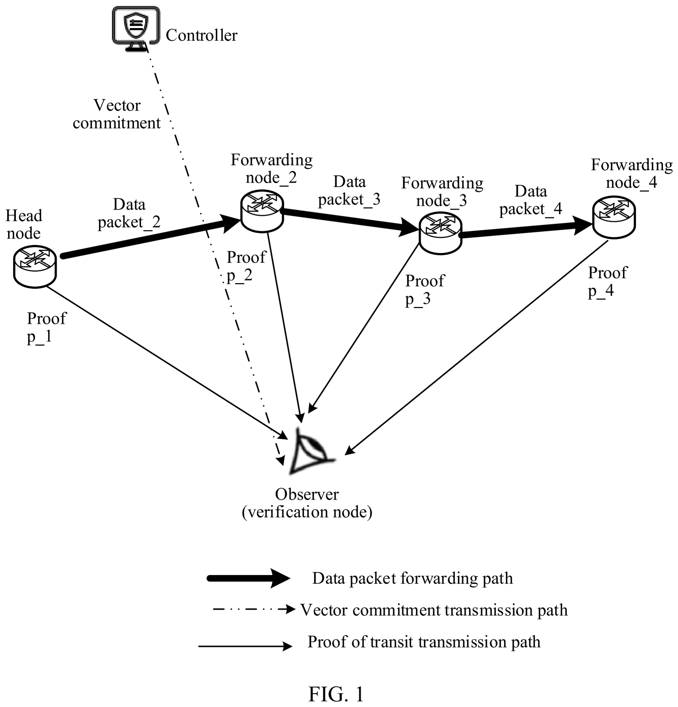

In the real-time verification mode, the verification node is deployed outside the forwarding path, and the verification node and the forwarding node on the forwarding path are separately disposed on different hardware devices. For example, refer to FIG. 1. The verification node is, for example, an observer in FIG. 1, and the verification node is connected to a head node, a forwarding node_2, a forwarding node_3, and a forwarding node_4 in FIG. 1 through a communication network. In a possible implementation, the verification node is a controller in FIG. 1.

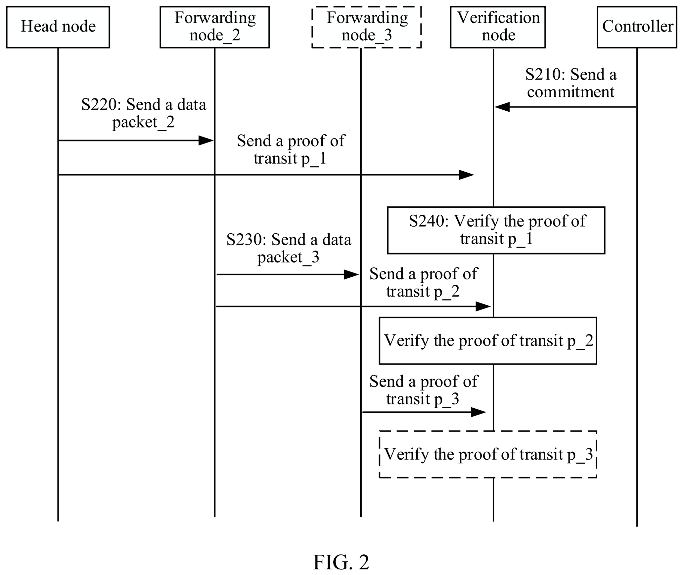

In a method shown in FIG. 2, the verification node is, for example, a device other than each node (for example, the head node, the forwarding node_2, and the forwarding node_3) on the forwarding path. Optionally, a controller and the verification node in the method shown in FIG. 2 are integrated on a same device. In other words, the controller not only performs a step of obtaining a vector commitment and sending the vector commitment in S210, but also performs a step of verifying a proof of transit in S240.

In a process in which the forwarding node_i processes the data packet, the forwarding node_i obtains the proof of transit p_i, and sends the proof of transit p_i to the verification node. When receiving the proof of transit p_i from the forwarding node_i, the verification node verifies the proof of transit p_i in real time. A downstream forwarding node of the forwarding node_i on the forwarding path does not need to verify the proof of transit p_i. Optionally, the downstream forwarding node of the forwarding node_i verifies correctness of a source of the data packet in another manner, for example, an aggregate signature or a symmetric key MAC tag, other than the vector commitment.

When the OP sub-mode included in the real-time verification mode is used, each node on the forwarding path obtains a single-node proof of transit OP of the current node based on a location of the current node and an identity of the current node, and sends the single-node proof of transit OP of the current node to the verification node. To compute the single-node proof of transit OP of the current node, the identity of the current node is needed, and an identity of one or more nodes that are before the forwarding node_i and that are on the forwarding path is not needed.

When the MP sub-mode included in the real-time verification mode is used, each node on the forwarding path obtains an identity (for example, identity information r_1 to identity information r_i-1) of each upstream node of the current node on the forwarding path and an identity of the current node based on a control plane, a data packet, or other means, and obtains a multi-node proof of transit MP of the current node based on the identity of the current node and the identity (for example, the identity information r_1 to the identity information r_i) of each upstream node of the current node, and sends the multi-node proof of transit MP of the current node to the verification node.

FIG. 1 is a diagram of a proof of transit verification scenario in a real-time verification mode according to an embodiment of this application. In the scenario shown in FIG. 1, an example in which a forwarding path includes four forwarding nodes is used for description. There may be more or fewer forwarding nodes on the forwarding path. For example, there may be only two forwarding nodes on the forwarding path, or there are dozens of, hundreds of, or more forwarding nodes on the forwarding path.

FIG. 2 is a diagram of a proof of transit obtaining and verification method in a real-time verification mode according to an embodiment of this application. Optionally, FIG. 1 shows a network deployment scenario on which the method shown in FIG. 2 is based. A forwarding node_3 shown in FIG. 2 is an optional node device, and a forwarding path may alternatively include only a head node and a forwarding node_2.

A proof of transit processing procedure shown in FIG. 2 includes the following S210 to S240.

S210: A controller sends a vector commitment to a verification node.

In (a) in S210, the controller obtains identity information and location information of each forwarding node on a forwarding path whose length is N. The controller obtains a vector $P=(r\_1, r\_2, ..., r\_N)$ constituted by N forwarding nodes. $r\_i$ represents identity information of a forwarding node_i, and i represents location information of the forwarding node_i. The controller computes the vector commitment based on the identity information and the location information of each forwarding node on the forwarding path.

In (b) in S210, the controller computes, by using a vector commitment mechanism, a commitment $C=commit(P)$ bound to the forwarding path $P=(r\_1, r\_2, ..., r\_N)$. In addition, the controller computes an encrypted route table T of the forwarding path $P=(r\_1, r\_2, ..., r\_N)$. The controller pre-distributes another public parameter and auxiliary data that are needed for proof of transit computation to each node on the forwarding path.

In (c) in S210, the controller sends the commitment C to the verification node. A length of the commitment C is k. k is related to a security parameter lambda.

S220: The head node on the forwarding path sends a data packet to the 2nd forwarding node on the forwarding path, and sends a proof of transit to the verification node.

In (a) in S220, the head node obtains the commitment C, the encrypted route table T, and payload (payload) data. The head node generates a data packet_1 based on the payload data, where the data packet_1 includes the payload data.

In (b) in S220, the head node computes a proof of transit OP_1 of the head node by using an Open function; or the head node computes a proof of transit MP_1 of the head node by using a BatchOpen function.

In (c) in S220, the head node sends the single-node proof of transit OP_1 of the head node to the verification node; or the head node sends the multi-node proof of transit MP_1 of the head node to the verification node.

In a possible implementation, the head node decrypts a 1st route table entry in the encrypted route table T based on a key of the head node, to obtain an identifier of the forwarding node_2; and the head node adds, to the data packet_1, a remaining encrypted route table T that is after the 1st route table entry and that is in the encrypted route table T, to obtain a data packet_2. The head node sends the data packet 2 to the forwarding node_2 based on the identifier of the forwarding node_2, where the data packet 2 includes a protocol packet header, and the protocol packet header includes a trusted-path identifier. In addition, the head node sends the single-node proof of transit OP_1 or the multi-node proof of transit MP_1 to the verification node.

S230: The forwarding node_i sends a data packet_i+1 to a forwarding node_i+1, and sends a proof of transit_i to the verification node.

In (a) in S230, the forwarding node_i receives a data packet_i, where the data packet_i includes a protocol packet header, and the protocol packet header includes a trusted-path identifier. Optionally, the data packet_i further includes the identity information r_i of the forwarding node_i and the location information i of the forwarding node_i. Optionally, the data packet_i further includes identity information and location information of the node_1 to a node_i-1.

In (b) in S230, the forwarding node_i verifies correctness of a source of the data packet_i in another aggregate proving manner (for example, a cryptography accumulator accumulator, an aggregate signature, or a MAC tag) other than vector commitment. When the verification succeeds, an intermediate node computes a single-node proof of transit OP_i based on identity information r_i of the current node and a location i of the current node on the path as an input. Alternatively, when the verification succeeds, the forwarding node_i computes a multi-node proof of transit MP_i based on identity information of each of the node r_1 to the node r_i. When the verification fails, the forwarding node_i discards the data packet. In addition, the forwarding node_i decrypts, based on a key of the forwarding node_i, a route table entry corresponding to the forwarding node_i in the encrypted route table T, to obtain an identifier of the next node r_i+1. In addition, the forwarding node_i replaces the encrypted route table T in the data packet_i with a remaining encrypted route table entry that is after the route table entry corresponding to the forwarding node_i and that is in the encrypted route table T, to obtain the data packet_i+1.

In (c) in S230, the forwarding node_i sends the data packet_i+1 to the next node_i+1 based on the identifier of the next node_i+1, where the data packet_i+1 includes a protocol packet header, and the protocol packet header includes a trusted-path identifier. In addition, the forwarding node_i sends the single-node proof of transit OP_i or the multi-node proof of transit MP_i to the verification node.

S240: The verification node verifies the proof of transit from the forwarding node.

In (a) in S240, the verification node obtains input data, where the input data includes the commitment C, the single-node proof of transit OP_i from the forwarding node_i, the current location i of the forwarding node_i on the path, and the identity information of the forwarding node_i. Alternatively, the input data includes the commitment C, the multi-node proof of transit MP_i from the forwarding node_i, a current location of each of the head node_1 to the forwarding node_i on the path, and identity information of each of the head node_1 to the forwarding node_i.

In (b) in S240, the verification node verifies the proof of transit based on the input data.

If the proof of transit is the single-node proof of transit OP_i, the verification node verifies Verify(C, i, r_i, OP_i) based on the vector commitment mechanism, that is, verifies that an identity of an i$^{th}$ node is r_i.

If the proof of transit is a multi-node proof of transit MP_i, the verification node verifies batch verify(C, B, r_B, MP_i) based on the vector commitment mechanism, where B=(r_1, r_2, ..., r_i).

In (c) in S240, the verification node controls data packet forwarding or outputs alert information based on a verification result.

For a manner in which the verification node controls data packet forwarding, in some possible implementations, in response to that verification on the proof of transit P_i fails, the verification node sends a first advertisement packet to the forwarding node_i from which the proof of transit P_i comes, where the first advertisement packet indicates the forwarding node_i to discard the data packet. The forwarding node_i discards the obtained data packet_i in response to the received first advertisement packet, to block further transmission of data from an invalid source from the forwarding node_i to the forwarding node_i+1, and improve network security. In some other possible implementations, in response to that verification on the proof of transit P_i succeeds, the verification node sends a second advertisement packet to the forwarding node_i from which the proof of transit P_i comes. The second advertisement packet indicates the forwarding node_i to forward the data packet. In response to the received second advertisement packet, the forwarding node_i performs the step of sending the data packet_i+1 to the next node_i+1 based on the identifier of the next node _i+1.

For a protocol packet based on which the verification node interacts with the forwarding node_i, in some possible implementations, the verification node advertises, based on a control plane protocol like a border gateway protocol flow specification (border gateway protocol flow spec, BGP flow specification, BGP flow spec or BGP FS for short), a path computation element protocol (path computation element protocol, PCEP), a BGP monitoring protocol (BGP monitoring protocol, BMP), a netstream (netstream) protocol, or a border gateway protocol (border gateway protocol, BGP), the forwarding node_i to discard or forward the data packet. For example, the first advertisement packet or the second advertisement packet is a BGP flow spec packet, a PCEP packet, a BMP packet, a netstream protocol packet, or a BGP packet.

An example in which the verification node interacts with the forwarding node_i based on the BGP flow spec protocol is used. For example, the first advertisement packet and the second advertisement packet are BGP flow spec protocol packets. The first advertisement packet includes a network layer reachability information (network layer reachability information, NLRI) field and an extended community attribute field, where the NLRI field includes an identifier of a data packet including a proof of transit on which verification fails, and the extended community attribute field includes an identifier indicating to discard the packet. The second advertisement packet includes an NLRI field and an extended community attribute field, where the NLRI field includes an identifier of a data packet including a proof of transit on which verification succeeds, and the extended community attribute field includes an identifier indicating to forward the packet.

In a possible implementation, in response to determining that the verification on the proof of transit fails, the verification node outputs the alert information. For details about outputting the alert information by the verification node, refer to the foregoing descriptions about outputting the alert information by the forwarding node.

In a possible implementation, if the verification succeeds, the verification node outputs 1, indicating that the data packet is on a trusted path and passes through a correct location. If the verification fails, the verification node outputs 0, indicating that the data packet is not on the trusted path or does not pass through the correct location.

The forwarding node repeatedly performs S230, and the verification node repeatedly performs S240 until packet transmission ends.

In the real-time verification mode, each forwarding node computes and discloses a proof of transit, so that an identity of each node is verified, hop-by-hop guaranteed security is provided, and security is high. Because each forwarding node computes and discloses the proof of transit when processing a data packet, an observer may obtain and verify the proof of transit in real time, to implement real-time transparent tracking in a data transmission process. In addition, an attack window is small. Further, public audit of the commitment and the proof of transit can be implemented by using the vector commitment mechanism and an appropriate verification algorithm. The observer may verify correctness of the commitment and whether the proof of transit of each node matches the identity of the node and a location of the node, to improve security of the data transmission process.

Verification mode 2: In-situ verification (Passport) mode

In the in-situ verification mode, the forwarding node_i also serves as the observer. Before computing the proof of transit p_i of the forwarding node_i, the forwarding node_i verifies a proof of transit p_i-1 of the previous node _i-1, to reduce a risk of a data packet source error.

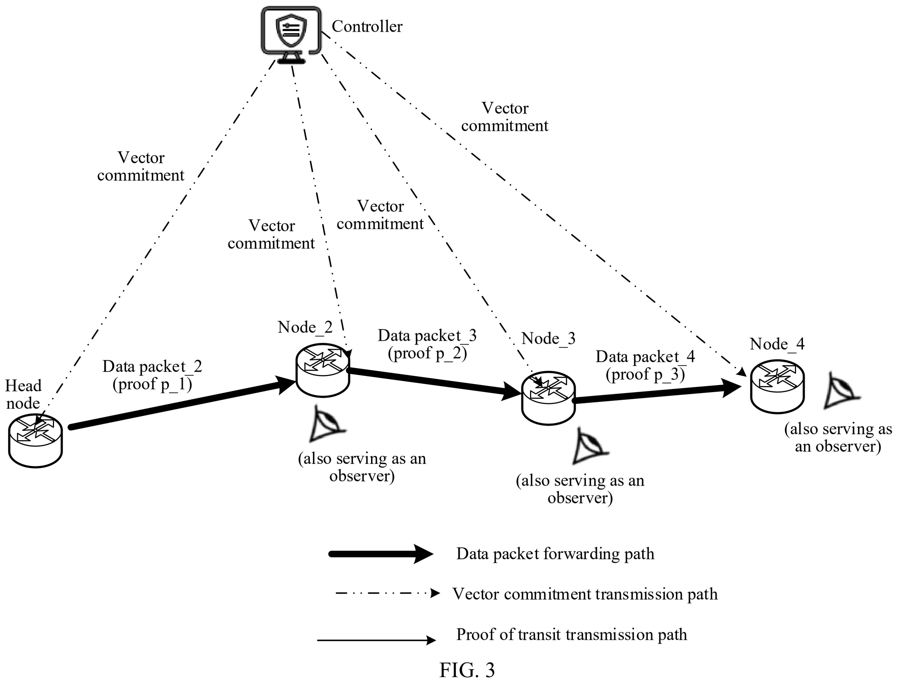

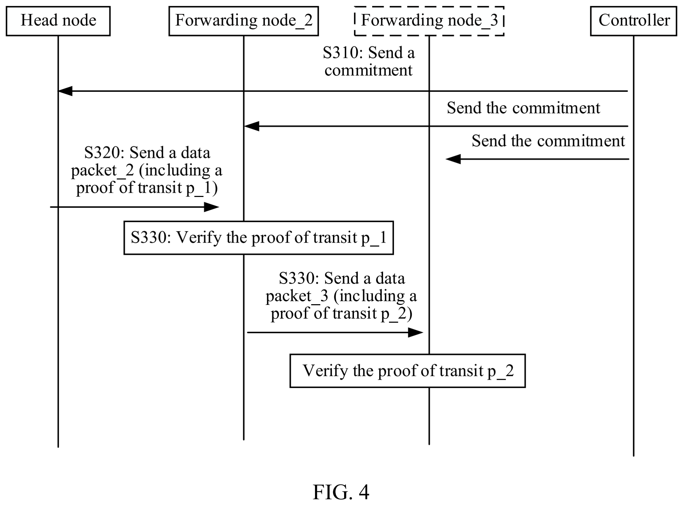

For example, refer to FIG. 3. A forwarding node_2, a forwarding node_3, and a forwarding node_4 in FIG. 3 are all verification nodes. The forwarding node_2 verifies a proof of transit p_1 of a head node in FIG. 3. The forwarding node_3 verifies a proof of transit p_2 of the forwarding node_2 in FIG. 3. The forwarding node_4 verifies a proof of transit p_3 of the forwarding node_3 in FIG. 3. For example, refer to FIG. 4. A forwarding node_2 and a forwarding node_3 in FIG. 4 are both verification nodes.

The proof of transit p_i is, for example, a single-node proof OP, or for another example, a multi-node proof MP. In addition, in a process in which the forwarding node_i processes the data packet, the forwarding node_i obtains the proof of transit p_i based on the location information of the forwarding node_i and the identity information of the forwarding node_i. The forwarding node_i sends the data packet_i+1 to the forwarding node_i+1, where the data packet_i+1 includes the proof of transit p_i. Because the sent data packet carries the proof of transit, the proof of transit is forwarded to the next node_i+1 together with the data packet along the path, so that the next node verifies the proof of transit p_i.

In a possible implementation, the forwarding node_i replaces the proof of transit p_i-1 carried in the data packet_i with the proof of transit p_i, to obtain the data packet_i+1. A proof of transit of a previous hop is replaced with a proof of transit of a current node, so that the packet does not need to store the proof of transit of each node that has been passed through, to avoid that a quantity of packet bytes occupied by the proof increases as a quantity of nodes increases, and save space of the packet. In addition, in the forwarding process, the data packet only needs to carry a proof of one node, and does not need to carry proofs of the plurality of nodes, so that a network resource that needs to be occupied for proof transmission is saved.

In another possible implementation, the forwarding node_i adds the proof of transit p_i to the data packet_i, to obtain the data packet_i+1.

In the OP sub-mode in the in-situ verification mode, the data packet optionally carries the identity information r_i-1 of the previous-hop node.

In the MP sub-mode in the in-situ verification mode, each forwarding node optionally learns of identity information of upstream nodes r_1 to r_i-1 on the control plane or by using another means.

FIG. 3 is a diagram of a proof of transit verification scenario in an in-situ verification mode according to an embodiment of this application. In the scenario shown in FIG. 3, an example in which a forwarding path includes four forwarding nodes is used for description. In the scenario shown in FIG. 3, the example in which the forwarding path includes the four forwarding nodes is used for description. There may be more or fewer forwarding nodes on the forwarding path. For example, there may be only two forwarding nodes on the forwarding path, or there are dozens of, hundreds of, or more forwarding nodes on the forwarding path.

FIG. 4 is a diagram of a proof of transit obtaining and verification method in an in-situ verification mode according to an embodiment of this application. The method in FIG. 4 includes the following S310 to S340. Optionally, FIG. 3 shows a network deployment scenario on which the method shown in FIG. 4 is based. A forwarding node_3 shown in FIG. 4 is an optional node device, and a forwarding path may alternatively include only a head node and a forwarding node_2.

S310: A controller sends a vector commitment.

In (a) in S310, the controller obtains location information of each node on the forwarding path and identity information of the node on the forwarding path.

In (b) in S310, the controller obtains the vector commitment based on the location information and the identity information of each node on the forwarding path.

In (b) in S310, the controller sends the vector commitment to each forwarding node on the forwarding path.

S320: The head node sends a data packet_2 to the 2nd node, where the data packet_2 includes a proof of transit p_1.

In (a) in S320, the head node obtains input data, where the input data includes a commitment C, an encrypted route table T whose length is N, and payload (payload) data.

In (b) in S320, the head node generates a data packet_1 based on the payload data, where the data packet_1 includes the payload data. In addition, the head node computes a single-node proof of transit OP_1 of the head node by using an open function; or the head node computes a multi-node proof of transit MP_1 of the head node by using a batch open function. The head node adds the single-node proof of transit OP_1 or the multi-node proof of transit MP_1 to a protocol packet header including a trusted-path identifier, and adds the protocol packet header to the data packet_1.

In addition, the head node decrypts a 1st route table entry in an encrypted route table T based on a key of the head node, to obtain an identifier of the 2nd node r_2; and the head node adds, to the data packet_1, a remaining encrypted route table T that is after the 1st route table entry and that is in the encrypted route table T, to obtain the data packet_2.

In (c) in S320, the head node sends the data packet_2 to the forwarding node_2 based on the identifier of the second node r_2, where the data packet 2 includes a protocol packet header. The protocol packet header includes a trusted-path identifier. The protocol packet header further includes the single-node proof of transit OP_1 or the multi-node proof of transit MP_1.

S330: A forwarding node_i verifies a proof of transit_i-1 carried in a data packet_i.

In (a) in S330, the forwarding node_i receives the data packet_i, where the data packet_i includes a protocol packet header, the protocol packet header includes a trusted-path identifier, and the protocol packet header further includes a single-node proof of transit OP_i-1 or a multi-node proof of transit MP_i-1. Optionally, the data packet_i further includes identity information r_i of the forwarding node_i and location information i of the forwarding node_i. Optionally, the data packet_i further includes identity information and location information of the node_1 to a node_i-1.

In (b) in S330, the node i verifies, based on an identity of a previous-hop node r_i-1, correctness of the single-node proof of transit OP_i-1 carried in the packet header in the data packet_i, to verify a data source. In another possible implementation, the node i verifies, based on identities of the nodes r_1 to r_i-1, correctness of the multi-node proof of transit MP_i-1 carried in the packet header in the data packet_i, to verify a data source. In addition, another aggregate proving manner, for example, a cryptography accumulator (accumulator), an aggregate signature, or a MAC tag, may alternatively be used in the data packet source verification step.

S340: When the verification on the proof of transit_i-1 succeeds, the forwarding node_i sends a data packet_i+1 to a next node r_i+1 based on an identifier of the next node r_i+1.

In (a) in S340, if the verification on the proof of transit_i-1 succeeds, the forwarding node i computes a single-node proof of transit OP_i by using the identity information r_i of the node i and the location information i of the forwarding node i on the forwarding path as an input. Alternatively, if the verification on the proof of transit_i-1 succeeds, the forwarding node i computes a multi-node proof of transit MP_i based on identity information of each forwarding node in the head node_1 to the forwarding node_i and location information of each forwarding node in the head node_1 to the forwarding node_i.

In (b) in S340, the forwarding node_i replaces the single-node proof of transit OP_i-1 in the packet header with the single-node proof of transit OP_i, to obtain the data packet_i+1; or the forwarding node_i replaces the multi-node proof of transit MP_i-1 in the packet header with the multi-node proof of transit MP_i, to obtain the data packet_i+1. Optionally, the forwarding node_i further decrypts, based on a key of the forwarding node_i, a route table entry corresponding to the forwarding node_i in the encrypted route table T, to obtain the identifier of the next node_i+1. In addition, the forwarding node_i replaces the encrypted route table T in the data packet_i with a remaining encrypted route table entry that is after the route table entry corresponding to the forwarding node_i and that is in the encrypted route table T, and adds the identity information r_i of the forwarding node_i to the data packet_i.

If the verification on the proof of transit_i-1 fails, the forwarding node i discards the data packet.

In (c) in S340, the forwarding node_i sends the data packet_i+1 to the next node r_i+1 based on the identifier of the next node r_i+1, where the data packet_i+1 includes a protocol packet header, and the protocol packet header includes a trusted-path identifier. The protocol packet header further includes the single-node proof of transit OP_i or the multi-node proof of transit MP_i.

In the in-situ verification mode, each forwarding node computes and discloses a proof of transit, so that an identity of each node is verified, hop-by-hop guaranteed security is provided, and security is high. In addition, the proof of transit can be included in the packet header in an in-situ manner, computation and communication costs are moderate, and protocol procedure complexity is moderate. This is a compromise solution.

Each forwarding node on the forwarding path repeatedly performs S330 and S340 until packet transmission ends.

Verification mode 3: Destination verification (final_only) mode

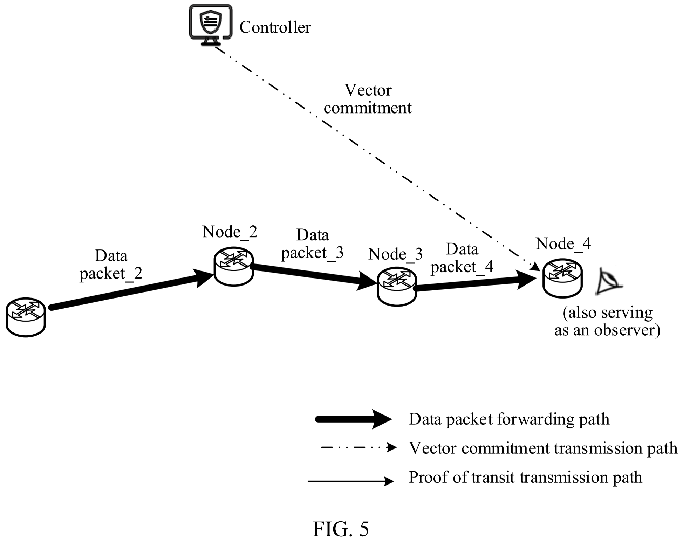

In the destination verification mode, a tail node on the forwarding path also serves as the observer. The tail node obtains a proof of transit based on location information of each forwarding node (including the tail node) on the forwarding path and identity information of the forwarding node. The tail node verifies the obtained proof of transit. For example, FIG. 5 is a diagram of a proof of transit verification scenario in a destination verification mode according to an embodiment of this application. In the scenario shown in FIG. 5, an example in which a forwarding path includes four forwarding nodes is used for description. A forwarding node_4 in FIG. 5 is a specific example of the tail node that serves as the verification node. There may be more or fewer forwarding nodes on the forwarding path. For example, there may be only two forwarding nodes on the forwarding path. In this case, a 2nd forwarding node (for example, a node_2 in FIG. 5) on the forwarding path serves as the verification node. Alternatively, there are dozens of, hundreds of, or more forwarding nodes on the forwarding path.

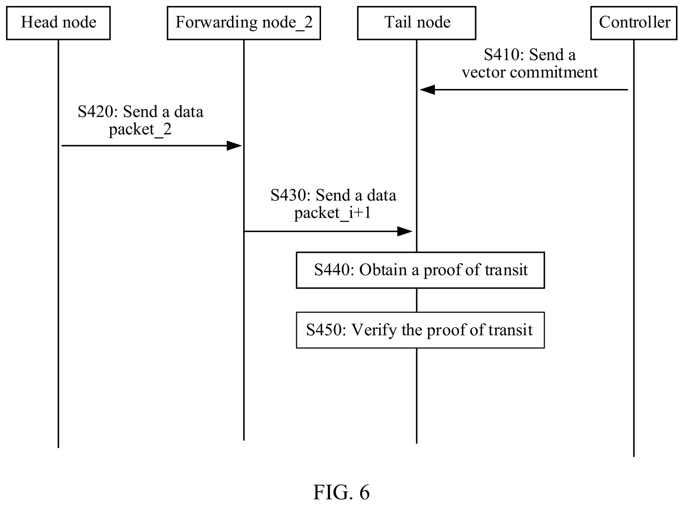

FIG. 6 is a diagram of a proof of transit obtaining and verification method in a destination verification mode according to an embodiment of this application. The method in FIG. 6 includes the following S410 to S440. Optionally, FIG. 5 shows a network deployment scenario on which the method shown in FIG. 6 is based.

In a possible implementation, a proof of transit processing procedure in the destination verification mode includes the following S410 to S440.

S410: A controller sends a vector commitment.

In (a) in S410, the controller obtains location information of each forwarding node on a forwarding path and identity information of the forwarding node on the forwarding path.

In (b) in S410, the controller obtains the vector commitment based on the location information of each forwarding node and the identity information of the forwarding node.

In (c) in S410, the controller sends the vector commitment to a tail node on the forwarding path.

S420: A head node sends a data packet 2 to a forwarding node_2.

In (a) in S420, the head node obtains input data, where the input data includes a commitment C, an encrypted route table T whose length is N, and payload (payload) data.

In (b) in S420, the head node generates a data packet_1 based on the payload data, where the data packet_1 includes the payload data; and the head node decrypts a $1^{st}$ route table entry in the encrypted route table T based on a key of the head node, to obtain an identifier of the $2^{nd}$ node r_2.

In (c) in S420, the head node sends the data packet 2 to the forwarding node_2 based on the identifier of the $2^{nd}$ node r_2, where the data packet 2 includes a protocol packet header, and the protocol packet header includes a trusted-path identifier, and further includes a single-node proof of transit OP_1 or a multi-node proof of transit MP_1.

S430: A forwarding node_i sends a data packet_i+1 to a next node r_i+1.

When the forwarding node_i forwards the data packet, there is no need to compute and verify a proof of transit, and a source of the data packet is verified in a manner other than the vector commitment. The forwarding node_i decrypts an $i^{th}$ route table entry in the encrypted route table T based on a key of the forwarding node_i, to obtain an identifier of the next node_i+1. In addition, the forwarding node_i adds, to a data packet_i, a remaining encrypted route table that is after the $i^{th}$ route table entry and that is in the route table T, to obtain the data packet_i+1. The forwarding node_i sends the data packet_i+1 to the next node r_i+1 based on the identifier of the next node r_i+1, where the data packet_i+1 includes a protocol packet header, and the protocol packet header includes a trusted-path identifier.

S440: The tail node obtains a multi-node proof of transit MP_N.

In (a) in S440, the tail node receives a data packet_N, where the data packet_N includes a protocol packet header, and the protocol packet header includes a trusted-path identifier. The protocol packet header includes a path P= (r_1, r_2, ..., r_N), where r_i is identity information of the forwarding node.

In (b) in S440, the tail node obtains the multi-node proof of transit MP_N based on identity information of each of the node_1 to a node r_N and location information of each of the node_1 to the node r_N, where the multi-node proof of transit MP_N is for proving that the node_1 is at a $1^{st}$ location on the forwarding path, the node_2 is at a $2^{nd}$ location on the forwarding path, ..., the node_i is located at an $i^{th}$ location on the forwarding path, ..., and the node_N is located at an $N^{th}$ location on the forwarding path.

S450: The tail node verifies the multi-node proof of transit MP_N.

The tail node obtains the multi-node proof of transit MP_N, the commitment C, and the path P=(r_1, r_2, ..., r_N). The tail node verifies the multi-node proof of transit MP_N by using a batch verify (batch verify) function based on a vector commitment mechanism, the commitment C, the location information of each node on the path P, and the identity information of each node on the path P, and performs batch verify(C, MP_N, P), that is, verifies that an identity of a node at each location i on the entire path is r_i.

Benefits achieved by using the destination verification mode include but are not limited to the following aspects: First, communication overheads are reduced. Because each-hop node on the forwarding path does not need to send a proof of transit to the verification node, packet generation and transmission overheads caused by sending the proof of transit by the forwarding node are reduced, and bandwidth occupied for transmission of the proof of transit in a network is also reduced.

Second, computation overheads are reduced. Because each-hop node except the tail node on the forwarding path does not need to compute and verify the proof of transit, and all order-preserving proofs of transit are computed and verified only at the tail node at a time, overall overheads of all devices on the forwarding path are small.

In a possible implementation, the forwarding node_i supports at least two verification modes, and the forwarding node_i determines a to-be-used verification mode based on a flag bit carried in the data packet.

For example, the data packet_i obtained by the forwarding node_i includes an identifier of the real-time verification mode, and the forwarding node_i sends the proof of transit p_i to the verification node in response to identifying the identifier that is of the real-time verification mode and that is carried in the data packet_i.

For example, the data packet_i obtained by the forwarding node_i includes an identifier of the in-situ verification mode, and the forwarding node_i obtains the data packet_i+1 based on the data packet_i and the proof of transit p_i in response to identifying the identifier that is of the in-situ verification mode and that is carried in the data packet_i. The data packet_i+1 includes the proof of transit p_i.

For example, the data packet_N obtained by the forwarding node_N includes an identifier of the destination verification mode. In response to identifying the identifier that is of the destination verification mode and that is carried in the data packet_N, the forwarding node_N obtains a proof of transit p_N based on the identity information of each of the forwarding node_1 to the forwarding node_N and the location information of each of the forwarding node_1 to the forwarding node_N, and verifies the proof of transit p_N.

A plurality of verification modes are supported, and the to-be-used verification mode is determined based on the flag bit in the data packet. The forwarding node may select an appropriate verification manner based on a specific requirement, to provide security and verification capabilities at different levels.

In another possible implementation, the forwarding node_i determines, based on a configuration of the control plane, a to-be-used verification mode. For example, the controller sends a mode identifier to the forwarding node_i. In response to that the mode identifier from the controller indicates the real-time verification mode, when obtaining the data packet, the forwarding node_i sends the proof of transit p_i to the verification node. In response to that the mode identifier from the controller indicates the in-situ verification mode, when obtaining the data packet, the forwarding node_i obtains the data packet_i+1 based on the data packet_i and the proof of transit p_i. The data packet_i+1 includes the proof of transit p_i. In response to that the mode identifier from the controller indicates the destination verification mode, when obtaining the data packet, the forwarding node_i obtains the proof of transit p_N based on the identity information of each of the forwarding node_1 to the forwarding node_N and the location information of each of the forwarding node_1 to the forwarding node_N, and verifies the proof of transit p_N.

The following describes the foregoing method by using examples with reference to two instances in specific application scenarios. In an instance 1, a KZG polynomial commitment-based service function chaining (service function chaining, SFC) trusted path protection mechanism is provided. In the instance 1, a service function chain is a specific example of a forwarding path, an SF or an SFC proxy is a specific example of a forwarding node. In the instance 1, an NSH is a specific example of a packet header that carries a vector commitment and a proof of transit. In the instance 1, SF_FROM is a specific example of identity information of the forwarding node. A KZG polynomial commitment is a specific example of a vector commitment. In an instance 2, an SRv6-oriented trusted path protection mechanism is provided. In the instance 2, a path indicated by a segment list is a specific example of a forwarding path. In the instance 2, a node (an SR endpoint) corresponding to a SID in the segment list is a specific example of a forwarding node, the SID is a specific example of identity information, and a SID of a node_i identifies an identity of the node_i. In the instance 2, an SRH is a specific example of a packet header that carries a vector commitment and a proof of transit.

Instance 1

KZG polynomial commitment-based service function chaining (SFC) trusted path protection mechanism

The service function chain is an ordered service function set, and guides traffic to undergo a service of a service function on demand and in order. Service function chaining is an important means of performing service processing on the traffic on demand and in order in an NFV virtual network. The service function chain is a path.

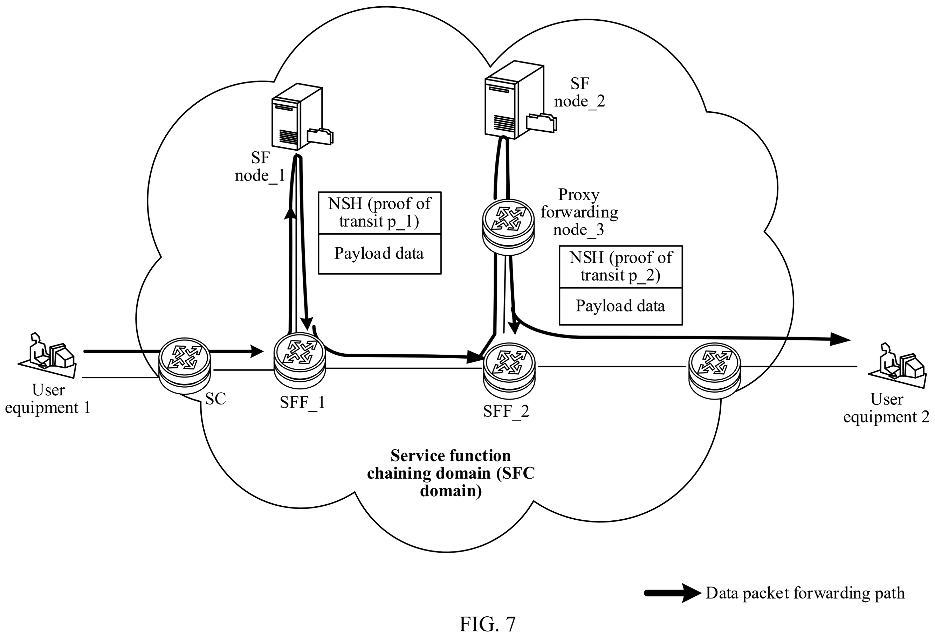

As shown in FIG. 7, a network device plays different roles in an entire service function chaining system based on different used functions. Roles in the service function chaining mainly include a classifier (service classifier, SC), a service function (service function, SF) node, a service function forwarder (Service function Forwarder, SFF) node, and an SFC proxy (SFC Proxy) node.

The classifier (SC) is located at a boundary ingress of an SFC domain. After a packet enters the SFC domain, traffic classification is performed first, and a service identifier is set and a service packet header is encapsulated.

The SF node is configured to provide a service processing service. The SF node includes but is not limited to a firewall (firewall, FW), a load balancer (load balancer, LB), an intrusion prevention system (intrusion prevention system, IPS), an application accelerator, network address translation (network address translation, NAT), a web application firewall (Web application firewall, WAF, also referred to as a website application-level intrusion prevention system), bandwidth control, virus detection, cloud storage, deep packet inspection (deep packet inspection, DPI), intrusion detection, a hypertext transfer protocol (hypertext transfer protocol, HTTP) header enrichment (HTTP header enrichment), and the like. In the service function chaining, the network traffic needs to pass through SF nodes in a specified sequence required by service logic, to implement a needed service.

Depending on whether the device identifies network service header (network service header, NSH) packet encapsulation, SF nodes may be classified into an NSH-aware SF (NSH-aware SF) node and an NSH-unaware SF (NSH-unaware SF) node. The NSH-aware SF node can identify and forward an NSH packet, but the NSH-unaware SF node cannot identify the NSH packet, and discards the NSH packet.

The SFF node is a device connected to an SF service function point. The SFF node identifies service flow information, and performs forwarding based on the service flow information.

The SFC proxy node is located between the SFF node and an NSH-unaware SF node associated with the SFF node, and is configured to delete or add NSH encapsulation information for the NSH-unaware SF.

In a service function chaining scenario, how to ensure that the traffic is forwarded based on a specified network path is a key technical problem. In this embodiment, the NSH-aware SF or the SFC Proxy is used as a forwarding node, the KZG polynomial commitment is used as a specific embodiment for constructing the vector commitment, and information related to a trusted path is carried by using the packet header NSH in the SFC.

The following uses an example to describe a format of the packet header NSH for carrying the information related to the trusted path.

The NSH is a packet header identifying an SFC protocol. The NSH satisfies a fixed format, and an extensible optional variable-length metadata (Optional Variable-Length Metadata, OVLM) data field is reserved. In this embodiment, a trusted-path packet header is implemented in OVLM.

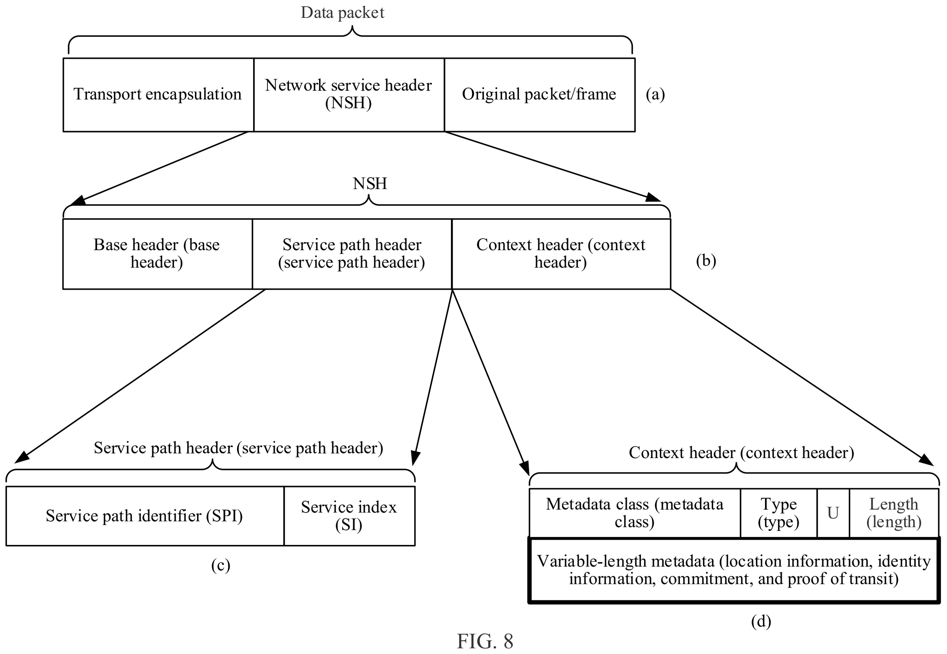

(a) in FIG. 8 shows an overall encapsulation format of a data packet in a service function chaining scenario. The data packet includes an original packet, transport encapsulation (transport encapsulation), and a network service header (NSH). The original packet (original packet) is a payload in the data packet, and the original packet includes carried service data. The transport layer encapsulation includes content of a transport layer protocol (such as TLS). The following uses an example to describe the format of the NSH.

As shown in (b) in FIG. 8, the NSH includes a 4-byte base header (base header) and a 4-byte service path header (service path header). The base header provides a basic identifier. The service path header (service path header) provides a path identifier and a location on a current path. Optionally, the NSH further includes a context header (context header). The context header (context header) includes an extensible optional variable-length metadata (Optional Variable-Length Metadata, OVLM) field.

As shown in (c) in FIG. 8, the service path header (service path header) includes a service index (service index, SI) and a service path identifier (service path identifier, SPI). The SPI occupies 24 bits. The service index (SI) indicates a current location of the data packet on the forwarding path, and the SI occupies eight bits. A format of the service path header (service path header) is shown in FIG. 8. In a possible implementation, an SF node_i obtains a value of an SI field carried in the service path header, uses the value of the SI field as a location_i of the current node, and computes a proof of transit p_i of the current node based on the location_i. The value of the SI ranges from 255 to 0, descending by 1. Therefore, $x\_i=256-SI$.

In a possible implementation, after the controller selects a trusted path, and computes a commitment C for the trusted path, the controller publicly stores a correspondence between the SPI and the commitment C in a blockchain or another distributed shared database, where the SPI is used as a primary key based on which the commitment C is searched for.

As shown in (d) in FIG. 8, the context header (context header) is for carrying a value related to the trusted path. The context header includes the commitment C, the proof of transit p_i, and the like. The context header includes a metadata class (metadata class) field, a type (type) field, a length (length) field, and a variable-length metadata (variable-length metadata) field. Variable-length metadata (variable-length metadata) is a variable-length field for carrying metadata related to a specific service or function. The length field indicates a length of the variable-length metadata (variable-length metadata) field. In a possible implementation, data related to the trusted path is carried by using the variable-length metadata field. For example, four types of data are carried by using the variable-length metadata field: the commitment, the proof of transit, identity information, and location information.

In the service function chaining scenario, all of the foregoing three proof of transit verification modes including the real-time verification (Postcard) mode, the in-situ verification (Passport) mode, and the destination verification (Final_only) mode may be used. In embodiments, the OP sub-mode in the in-situ verification mode with moderate efficiency and security is selected for analysis.

For the OP sub-mode in the in-situ verification mode, the variable-length metadata field in each data packet is added with a commitment, a proof of transit, an encrypted route table, and an identifier of a previous-hop SF node. For example, in the variable-length metadata (variable-length metadata) field shown in (d) in FIG. 8, a commitment field, a P field, an SF_TO_ENC field, and an SF_FROM field are added. A format of the variable-length metadata field is therefore as shown in the following table.

| Byte 0 | Byte 1 | Byte 2 | Byte 3 |
|---|---|---|---|
| elem_length | SF_IDENT_LENGTH | CIPHER_SUITE | curve_ID |
| commitment | | | |
| P | | | |
| SF_FROM (PLAINTEXT) | | | |
| SF_TO_ENC (ENCRYPTED) | | | |

The commitment field is for carrying a commitment. The P field is for carrying the proof of transit. Both the commitment and the proof of transit each are a G1 group element of a pairing friendly curve (Pairing Friendly Curve). Therefore, the commitment field and the P field each occupy a byte length (elem_length) of one element in the packet.

The pairing friendly curve (Pairing Friendly Curve) is a type of elliptic curve group, has a specific mathematical property, and is suitable for a pairing operation. In cryptography, the pairing (Pairing) operation refers to mapping of points on two elliptic curves to an element in a finite field. When a curve with a curve_ID=BLS-12381 is used, elem_length=48 bytes. In other words, the commitment field and the P field each are of 48 bytes.

The SF_FROM field is for carrying the identifier of the previous-hop SF node. The identifier that is of the previous-hop SF node and that is carried in the SF_FROM field is in a form of plaintext. In a possible implementation, the SF node_i receives an identifier that is of a previous-hop SF node_i-1 and that is sent by the previous-hop SF node, and writes the identifier of the previous-hop SF node to the SF_FROM field. In another possible implementation, the SF node_i receives an identifier of a previous-hop SF node from an SFC service layer, and writes the identifier of the previous-hop SF node to the SF_FROM field.

The SF_IDENT_LENGTH field indicates a length of the SF_FROM field. The SF_FROM field is, for example, in bytes.

The SF_TO_ENC field is for carrying the encrypted route table. For example, the SF_TO_ENC field includes an address of a next-hop SF node. An address of the next-hop SF node_i-1 is encrypted by using a key of the current SF node_i.

SF_TO_ENC_i=ENC_(sk_i, SF_TO || SF_TO_ENC_i+1). sk_i indicates a symmetric key of a node that is currently processing data. ENC indicates a symmetric encryption algorithm specified by using CIPHER_SUITE.

SF_TO_ENC_i=ENC_(sk_i, SF_TO || SF_TO_ENC_i+1) represents a process of encrypting SF_TO and SF_TO_ENC_i+1 when the current node (the node i) processes the data. Specifically, the node i encrypts SF_TO and SF_TO_ENC_i+1 as an input by using the symmetric key sk_i of the node i and the specified symmetric encryption algorithm (determined based on CIPHER_SUITE). The encryption result SF_TO_ENC_i is used as an encrypted route table for transmission of the next node (the node i+1).

SF_TO indicates an address of the next-hop SF node, and SF_TO_ENC_i+1 indicates an encrypted route table sent by the node_i to the node_i+1. The node i encrypts SF_TO and SF_TO_ENC_i+1 by using the symmetric key sk_i of the node i, and generates the encrypted route table SF_TO_ENC_i needed by the current node (the node i) to forward data to the next hop.

Through the foregoing process, information in the encrypted route table can be encrypted hop by hop in a transmission process, and data can be decrypted and accessed only when a corresponding symmetric key is available, so that each node can decrypt only next-hop information needed by the node, and security and confidentiality of encrypted routing are implemented.

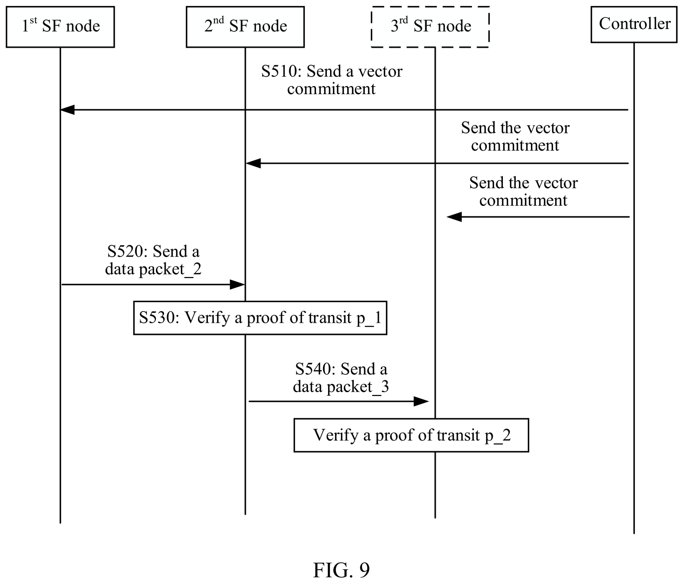

For example, refer to FIG. 9. Protocol steps in an in-situ verification mode include the following S510 to S540.

S510: A controller sends a vector commitment to a verification node.

In (a) in S510, the controller obtains input data, where the input data includes identity information of each SF node on a service function chain whose length is N and location information of the SF node, and the input data is, for example, a vector P=(r_1, r_2, ..., r_N) constituted by N SF nodes, where r_i indicates a unique identifier of an SF node.

In (b) in S510, the controller computes the vector commitment based on the input data. For a KZG polynomial commitment, the controller converts the vector P into N two-dimensional coordinate points <(1, r_1), (2, r_2), ..., (N, r_N)>, and the controller computes a Lagrange interpolation polynomial f(X) of the N points by using the following formula (1). In the formula (1), x_i represents location information of an SF node_i, and y_i represents identity information of the SF node_i.

$$f(X) = \sum_{i=1}^{n} y_i \prod_{j=0, j \neq i}^{n} \frac{X - x_j}{x_i - x_j} \quad \text{Formula (1)}$$

The controller computes a secret s by using the formula (2), to implement secret initialization. In the formula (2), g is a group generator.

$$s, [s^2], ..., [s^N], \ where \ [s^i] = g^{i*s} \quad \text{Formula (2)}$$

The controller computes the polynomial commitment C=Commit(f(X)) by using a formula (3), and fills the commitment C into a commitment field.

$$C_f = \sum_{1 \leq i \leq N} f_i[s^i] \quad \text{Formula (3)}$$

In addition, the controller computes an encrypted route table T of a forwarding path P=(r_1, r_2, ..., r_N).

In (c) in S510, the controller sends the commitment C and the encrypted route table T to each node on the forwarding path. The commitment C is a G1 group element whose length is 48 bytes.

S520: A 1st SF node on the forwarding path sends a data packet_2 and a proof of transit p_1.

In (a) in S520, the 1st SF node obtains input data, where the input data includes the commitment C, the encrypted route table T whose length is N, and payload (payload) data.

In (b) in S520, the 1st SF node generates a data packet_1 based on the payload data, where the data packet_1 includes the payload data; and the 1st SF node computes a proof of transit OP_1 of the 1st node by using the following formula (4) and an Open function.

$$OP_i = p[f(x_i) = y_i] = C_T \quad \text{Formula (4)}$$

C_T is a commitment of an auxiliary polynomial T_y(X) of an N-1 order. The auxiliary polynomial T_y(X) is determined based on the following formula (5).

$$T_y(X) = \frac{f(X) - y_i}{X - x_i} = \sum_{0 \le i \le N-1} t_i X_i \quad \text{Formula (5)}$$

A new coefficient is determined by using the following formula (6).

$$t_{N-1} = f_N; \quad t_j = f_{j+1} + x_i \cdot t_{j+1} \quad \text{Formula (6)}$$

The 1st SF node computes the proof of transit by using the following formula (7).

$$OP_i = [T_y(s)]_1 \quad \text{Formula (7)}$$

The 1st SF node fills the proof of transit into a P field in an NSH. The 1st SF node decrypts a 1st route table entry in the encrypted route table T based on a key of the 1st SF node, to obtain an identifier of a 2nd SF node. The 1st SF node fills identity information of the current node into an SF_FROM field in the NSH, fills a remaining encrypted route table into an SF_TO_ENC field in the NSH, and fills the commitment C into the commitment field in the NSH.

In (c) in S520, the 1st SF node sends the data packet_2 to the 2nd SF node, where the data packet_2 includes the NSH. An SPI field in the NSH includes a trusted-path identifier. The P field in the NSH further includes the single-node proof of transit OP_1 or a multi-node proof of transit MP_1. In addition, the 1st SF node sends the proof of transit p_1 to the verification node.

S530: The SF node_i receives a data packet_i.

In (a) in S530, the SF node_i receives the data packet_i, where the data packet_i includes an NSH, an SPI field in the NSH includes a trusted-path identifier, and the NSH further includes the identity information r_i of the SF node_i that is currently forwarding or processing the data packet and the location information i of the SF node_i. The location information of the SF node_i is obtained based on an SI.

In (b) in S530, the SF node_i verifies a source of the data packet. The SF node_i verifies the source of the data packet. The SF node_i verifies correctness of OP_i-1 in a data packet header based on an identity of a previous-hop node_i-1. A verification method is based on checking whether pairing in the following formula (8) holds.

$$e(OP_i, g_2^{s-y_i}) = e(C - g_1^{x_i}, g_2) \quad \text{Formula (8)}$$

The formula (8) is a proof of transit verification formula. e(G_1, G_2)->G_T is a public pairing function, and g_1 and g_2 are generators (both are pre-distributed public parameters/functions).

S540: When the verification succeeds, the SF node_i sends a data packet_i+1 to an identifier of a next SF node_i+1 based on the identifier of the next SF node _i+1.

In a possible implementation, in response to determining that pairing in formula (8) does not hold, the SF node_i determines that the verification on the proof of transit fails, and the SF node_i discards the data packet. In response to determining that pairing in the formula (8) holds, the SF node_i determines that the verification on the proof of transit succeeds, and the SF node_i computes a single-node proof of transit OP_i by using the formula (4) and by using the identity information r_i of the current node and a current location i of the current node on the path as an input. The SF node_i replaces the proof of transit OP_i-1 carried in the packet header with the new proof of transit OP_i computed by the SF node_i.

The SF node_i decrypts an ith route table entry in an encrypted route table T in the data packet_i based on a key of the SF node_i, to obtain the identifier of the next SF node_i+1; and adds, to an SF_TO_ENC field in the data packet_i, a remaining encrypted route table that is after the ith route table entry and that is in the encrypted route table T, to obtain the data packet _i+1.

Each SF node on the service chain repeatedly performs a process from S530 and S540 until transmission ends.

Instance 2

SRv6-oriented trusted path protection mechanism

SRv6 is segment routing (segment routing) that is based on an IPv6 forwarding plane. In the SRv6, a routing header (Segment Routing Header, SRH) is added to an IPv6 packet. The SRH includes an IPv6 address list segment list that records the forwarding path and an optional TLV (Type-Length-Value).

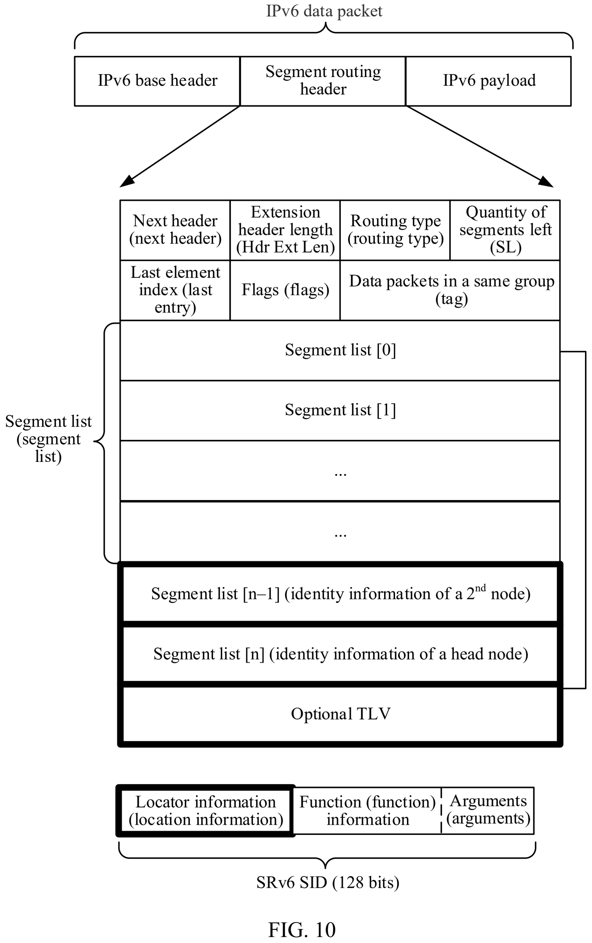

In a possible implementation, location information of a forwarding node is carried by using a SID. As shown in FIG. 10, the SID includes a locator (locator) field and a function (function) field. The locator field is for carrying the location information of the forwarding node. The locator field provides an IPv6 routing capability, and addressing and forwarding are implemented based on the locator field. Based on the locator field, the forwarding node_i uses an SRv6 protocol, to compute the location $x\_i$ of the forwarding node_i on the forwarding path.

The function field is for carrying and indicates a forwarding action to be performed by the forwarding node, and different forwarding behavior is represented by using different functions. A trusted-path identifier is extended in the function field. An arguments field is an optional field. The arguments field is a supplement to the function and is parameters corresponding to instruction execution. The parameters may contain information about a flow or a service, or any other related information. In a possible implementation, the arguments field in the SID carries a public parameter of a trusted path, so that the public parameter of the trusted path does not need to be pre-distributed on the control plane.

A plurality of SIDs are combined to form a segment list. The segment list indicates an IPv6 path obtained by sequentially arranging n IPv6 network nodes. During packet forwarding, the forwarding node determines the packet forwarding path P=(r_1, r_2, ..., r_N) based on the segment list field, a source address (Source Address, SA), and a destination address (Destination Address, DA).

After the data packet passes through the 1st half of the forwarding path, that is, after the packet passes through each of the node_1 to the node_i-1, the identity information (r_1, r_2, ..., r_i-1) of all of the node_1 to the node_i-1 is disclosed by using the SRH. In addition, in a data packet forwarding process, the identity information (r_1, r_2, ..., r_i-1) of all of the node_1 to the node_i-1 is carried in the SRH. In addition, identity information (r_i, r_i+1, ..., r_N) of all nodes that are on the path and that the data packet does not pass through is still hidden in the encrypted route table by using the SRH.

For example, when the data packet is forwarded to the node_i, a status of the SRv6 segment list is shown in the following table.

| |
|---|
| NULL |
| NULL |
| r_i-1 |
| ... |
| r_2 |
| r_1 |

For the selected forwarding path P=(r_1, r_2, ..., r_N), the head node adds a SID of the head node (which is a specific example of the identity information r_1 of the head node) to a segment list [N]. The segment list [N] is an innermost field (at a last row in the table) in the segment list. Adding to the segment list [N] is because a manner of reverse-order insertion for routing is used in the SRv6. The segment list [N] is for carrying the SID of the head node. The head node sets values of fields other than the segment list [N] in the segment list to null. In addition, the head node adds the encrypted route table T corresponding to P=(r_1, r_2, ..., r_N) to the TLV field in the SRH for storage.

In addition, for any node_i from the head node to the tail node, when the node_i obtains a data packet_i, the node_i obtains ciphertext of a SID (identity information of a next node_i+1) that is of the next node_i+1 on the forwarding path and that is carried in a TLV in an SRH in the data packet_i; and the node_i decrypts the ciphertext of the SID of the next node_i+1 based on a key of the node_i+1, to obtain a plaintext of the SID of the node_i+1. The node_i fills the SID of the node_i+1 into a segment list [N-i] in the data packet_i, to obtain a data packet_i+1. The node_i forwards the data packet_i+1 to the node_i+1.

In this manner, a total length of the segment list remains unchanged, and SIDs (identity information) that are in the segment list and that are of the node_1 to the node_i that the data packet has passed through during forwarding are disclosed. This provides a basis for subsequent multi-node proof of transit (MP) computation and verification. SIDs (identity information) that are in the segment list and that are of the node_i to the node_N that the data packet has not passed through during forwarding are null, to reduce a risk that identities of the node_i to the node_N are disclosed.

SRv6 is a flexible protocol that can carry path information and an address of a node on the path, and is suitable for implementing the MP sub-mode in the in-situ verification mode and the MP sub-mode in the destination verification mode.

For the MP sub-mode in the in-situ verification mode, a difference from the instance 1 is as follows: In the instance 1, an identifier (SF_FROM) of a previous node is added to a data packet, but in the instance 2, an identifier (SID) of a previous node does not need to be added to a TLV field because a segment list of each data packet has included the identifier (SID) of the previous node. Specifically, a commitment (commitment) field, a proof (P, specifically, multi-node proof) field, and an encrypted route table T (SF_TO_ENC) field are added to the TLV in the SRH in the data packet. The node identifier (SID) in the SRv6 is an IPv6 address, and the length of the IPv6 address is 128 bits. Therefore, no additional field needs to be added to the packet header to identify the length of the node identifier. Therefore, a packet header format is shown as follows.

| Byte 0 | Byte 1 | Byte 2 | Byte 3 |
|---|---|---|---|
| elem_length | CIPHER_SUITE | curve_ID | U |
| commitment | | | |
| P | | | |
| SF_TO_ENC (ENCRYPTED) | | | |

Both the commitment (commitment) and the proof of transit (P) each are a G1 group element of a pairing friendly curve (Pairing Friendly Curve). Therefore, the commitment (commitment) and the proof of transit (P) are represented by using a byte length (elem_length) of an element. When a curve with a curve_ID=BLS-12381 is used, lengths of the commitment (commitment) and the proof of transit (P) are both 48 bytes.

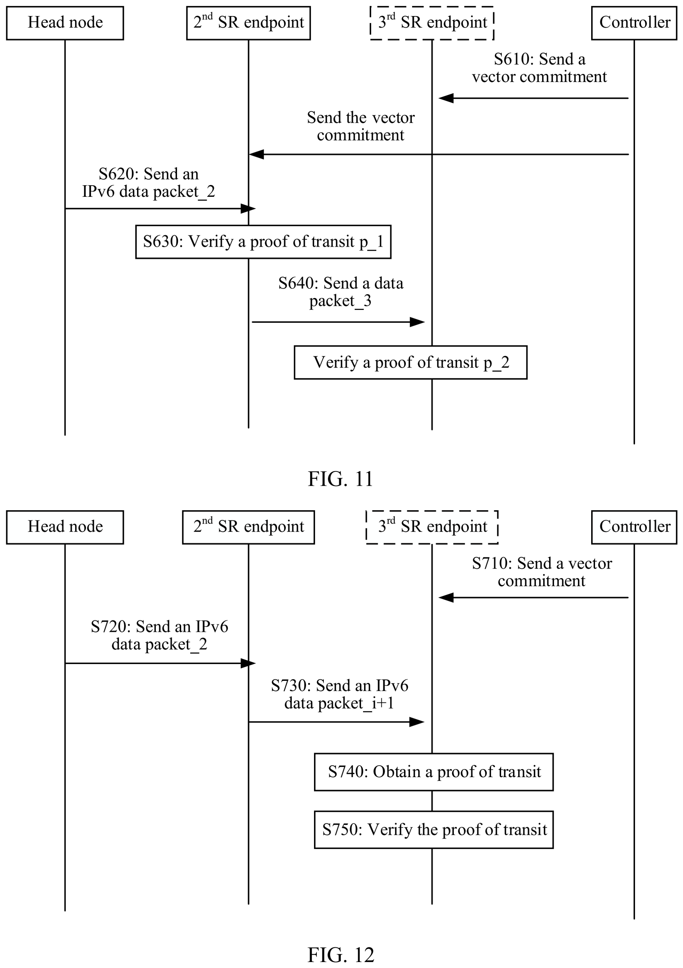

For example, refer to FIG. 11. Protocol steps in an in-situ verification mode include the following S610 to S640.

S610: A controller sends a vector commitment.

In (a) in S610, the controller obtains identity information of each SR endpoint on a forwarding path corresponding to a segment list and location information of the SR endpoint in the segment list.

In (b) in S610, the controller obtains the vector commitment based on the identity information of each SR endpoint and the location information of each SR endpoint, where the vector commitment indicates a correspondence between the identity information of each SR endpoint and the location information of each SR endpoint.

In (c) in S610, the vector commitment is sent to each SR endpoint other than a head node on the forwarding path corresponding to the segment list.

S620: The head node (a $1^{st}$ SR endpoint) on the forwarding path sends an IPv6 data packet_2 to a $2^{nd}$ SR endpoint on the forwarding path corresponding to the segment list, where a TLV in an SRH in the IPv6 data packet_2 includes a proof of transit of the head node.

The head node is, for example, a node corresponding to a last SID in the segment list. The $2^{nd}$ SR endpoint on the forwarding path is, for example, a node corresponding to a second last SID in the segment list.

In (a) in S620, the head node obtains input data, where the input data includes a commitment C, an encrypted route table T whose length is N, and payload data.

In (b) in S620, the head node generates a data packet_1 based on the payload data, where the data packet_1 includes the payload data.

The head node computes the proof of transit of the head node by using a batch open (BatchOpen) function or computes a single-node proof of transit by using an open function, and adds the proof of transit to a P field in a TLV in an SRH.

In addition, the head node decrypts, based on a key of the current node, a route table entry corresponding to the current node in the encrypted route table T, and obtains the SID of the next node r_2. In addition, the head node adds, to the data packet_1, a remaining encrypted route table T that is after a $1^{st}$ route table entry and that is in the encrypted route table T, the SID of the current node, and the SID of the next node r_2, to obtain the data packet_2.

In (c) in S620, the head node sends the data packet_2 to the $2^{nd}$ SR endpoint. The data packet_2 includes the SRH, and the SRH includes a trusted-path identifier and the proof of transit of the head node.

S630: An SR endpoint_i receives an IPv6 data packet_i.

The data packet_i includes an SRH, and the SRH includes a trusted-path identifier, identity information of each of the head node_1 to a head node_i, and location information of each of the head node_1 to the head node_i. The location information is, for example, a positive integer, for example, 1, 2, or 3, and the location information is obtained based on a locator in a SID.

S640: The SR endpoint_i sends a data packet_i+1 to a next node_i+1 based on an identifier of the next node_i+1.

In (a) in S640, the SR endpoint_i verifies a proof of transit p_i carried in the SRH in the IPv6 data packet_i, to verify a source of the IPv6 data packet_i. The SR endpoint_i obtains a multi-node proof of transit MP_i-1 carried in a packet header in the data packet_i. The SR endpoint_i verifies the multi-node proof of transit MP_i-1 based on identity information of each node in the SR endpoint_1 to an SR endpoint_i-1.

In (b) in S640, if the verification on the multi-node proof of transit MP_i-1 succeeds, the SR endpoint_i obtains a multi-node proof of transit MP_i based on the identity information of the node_1 to the node_i and the location information of the node_1 to the node_i. Location information x_i of the node_i and identity information y_i of the node_i are obtained from the segment list. The SR endpoint_i replaces the multi-node proof of transit MP_i-1 in the packet header in the data packet_i with the new multi-node proof of transit MP_i. In addition, the SR endpoint_i decrypts an ith route table entry in the encrypted route table T based on a key of the SR endpoint_i to obtain identity information of the next node _i+1. The SR endpoint_i fills, into the segment list, the identity information of the next node_i+1 and a remaining encrypted route table T that is after the ith route table entry and that is in the encrypted route table T, to obtain the data packet _i+1.

In (c) in S640, the SR endpoint_i sends the data packet_i+1 to the next node_i+1 based on the identifier of the next node_i+1, where the data packet_i+1 includes an SRH, and a TLV in the SRH includes the proof of transit of the SR endpoint_i.

If the verification on the multi-node proof of transit MP_i-1 fails, the SR endpoint_i discards the data packet_i.

Each SR endpoint on the forwarding path corresponding to the segment list repeatedly performs S630 to S640 until data packet transmission ends.

In an SRv6 scenario, in a possible implementation, a trusted-path identifier is carried by using a SID. For example, the trusted-path identifier is carried by using a function field in the SID. For another example, the trusted-path identifier is carried by using an arguments field in the SID.

In an example embodiment, the SR endpoint_i receives the data packet_i. The packet header in the data packet_i includes an IPv6 base header. A destination address field in the IPv6 base header includes the SID of the SR endpoint_i, and the SID of the SR endpoint_i includes the trusted-path identifier. The SR endpoint_i identifies content of the destination address field in the IPv6 base header; and in response to identifying that the destination address field in the IPv6 base header includes the SID of the current node and the SID includes the trusted-path identifier, the SR endpoint_i performs the proof of transit obtaining step. In a possible implementation, the SR endpoint_i stores a correspondence between the trusted-path identifier and a proof of transit computation instruction, searches the correspondence based on the identified trusted-path identifier, obtains the proof of transit computation instruction, and executes the proof of transit computation instruction, to obtain the single-node proof of transit or the multi-node proof of transit.

In the SRv6 scenario, it may alternatively be extended to use the destination verification mode to obtain and verify the proof of transit. Refer to FIG. 12. Proof of transit obtaining and verification steps in a destination verification mode include S710 to S750.

S710: A controller sends a vector commitment to a tail node (a last SR endpoint) on a forwarding path corresponding to a segment list. S710 is the same as S510 in Embodiment 1.

The controller computes a commitment (commitment) and a common parameter. For a computation manner, refer to the instance 1. The controller directly transfers the commitment (commitment) and the common parameter to the tail node.

S720: A head node sends an IPv6 data packet_2 to a 2nd SR endpoint.

S730: An SR endpoint_i receives an IPv6 data packet_i, and sends an IPv6 data packet_i+1 to a next node_i+1 based on an identifier of the next node_i+1.

S740: The tail node obtains a proof of transit.

In (a) in S740, the tail node obtains a data packet N including an SRH. The tail node obtains a path $P=(r\_1, r\_2, ..., r\_N)$ from the SRH. r_i is identity information of a forwarding node. In this embodiment, the identity information of the forwarding node is a SID.

In a possible implementation, the tail node obtains a SID that is of a node_i and that is carried in the SRH, and uses the SID as identity information of the node_i. The tail node determines an offset of the SID of the node_i relative to a SID of the head node, or uses the SID of the node_i as location information of the node_i.

In (b) in S740, the tail node obtains a multi-node proof of transit based on location information of each node on the forwarding path and identity information of the node on the forwarding path. For a method for computing the multi-node proof of transit, refer to the foregoing descriptions.

S750: The tail node verifies the proof of transit.

The tail node obtains the multi-node proof of transit MP_N, the commitment C, and the path $P=(r\_1, r\_2, ..., r\_N)$. The tail node verifies the multi-node proof of transit MP_N by using a batch verify (batch verify) function based on a vector commitment mechanism, the commitment C, the location information of each node on the path P, and the identity information of each node on the path P, and performs batch verify(C, MP_N, P), that is, verifies that an identity of a node at each location i on the entire path is r_i.

When the destination verification mode is used in SRv6, because the segment list carries the identity information of each node and the location information of the node, there is no need to perform modification on a data plane of an SRv6 protocol to carry the identity information and the location information of the node. For example, the commitment and common parameters are transferred to the tail node on an application layer plane or a control plane, and the tail node verifies the forwarding path based on existing information at a time.

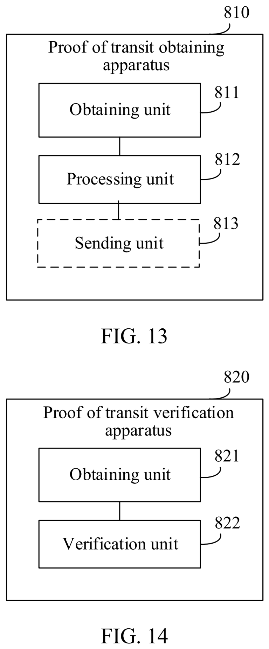

FIG. 13 is a diagram of a structure of a proof of transit obtaining apparatus 810 according to an embodiment of this application. The apparatus 810 includes an obtaining unit 811 and a processing unit 812.

The apparatus 810 is optionally disposed in the head node in FIG. 1. The obtaining unit 811 is configured to perform (a) in S220 in the method shown in FIG. 2. The processing unit 812 is configured to perform (b) in S220 in the method shown in FIG. 2. The apparatus 810 is optionally disposed in the forwarding node_2, the forwarding node_3, or the forwarding node_4 in FIG. 1. The obtaining unit 811 is configured to perform (a) in S230 in the method shown in FIG. 2. The processing unit 812 is configured to perform (b) in S230 in the method shown in FIG. 2. In some possible implementations, the apparatus 810 further includes a sending unit 813, configured to perform (c) in S220 or (c) in S230 in the method shown in FIG. 2.

The apparatus 810 is optionally disposed in the head node in FIG. 3. The obtaining unit 811 is configured to perform (a) in S320 in the method shown in FIG. 4. The processing unit 812 is configured to perform (a) in S320 in the method shown in FIG. 4. The apparatus 810 is optionally disposed in the forwarding node_2, the forwarding node_3, or the forwarding node_4 in FIG. 2. The obtaining unit 811 is configured to perform (a) in S330 in the method shown in FIG. 4. The processing unit 812 is configured to perform (b) in S340 in the method shown in FIG. 4. In some possible implementations, the apparatus 810 further includes a sending unit 813, configured to perform (c) in S340 in the method shown in FIG. 4.

The apparatus 810 is optionally disposed in the forwarding node_4 in FIG. 5. The obtaining unit 811 is configured to perform S440 in the method shown in FIG. 6. The processing unit 812 is configured to perform S450.

The apparatus 810 is optionally disposed in the SF node_1, the SF node_2, or the proxy (the forwarding node_3) in FIG. 7. The obtaining unit 811 is configured to perform (a) in S520 in the method shown in FIG. 9. The processing unit 812 is configured to perform (b) in S520 in the method shown in FIG. 9. The sending unit 813 is configured to perform (c) in S520 in the method shown in FIG. 9.

The apparatus 810 is optionally disposed in the head node in FIG. 11. The obtaining unit 811 is configured to perform (a) in S620 in the method shown in FIG. 11. The processing unit 812 is configured to perform (b) in S620 in the method shown in FIG. 11.

The apparatus 810 is optionally disposed in the 2nd SR endpoint or the 3rd SR endpoint in FIG. 11. The obtaining unit 811 is configured to perform (a) in S640 in the method shown in FIG. 11. The processing unit 812 is configured to perform (b) in S640 in the method shown in FIG. 11. The sending unit 813 is configured to perform S640 in the method shown in FIG. 11.

The apparatus embodiment in FIG. 13 is merely an example. For example, division into the units is merely logical function division, and may be other division during actual implementation. For example, a plurality of units or components may be combined or integrated into another system, or some features may be ignored or not performed. Functional units in embodiments of this application may be integrated into one processing unit 812, each of the units may exist alone physically, or two or more units may be integrated into one unit.

All or some of the units in the proof of transit obtaining apparatus 810 are implemented by using software, hardware, firmware, or any combination thereof.

For implementation details of the units in the proof of transit obtaining apparatus 810 and an interaction process between the proof of transit obtaining apparatus 810 and another device, refer to the descriptions in the foregoing method embodiments. Details are not described herein again.

With reference to a computing device 900 described hereinafter, the following describes some possible implementations of implementing the functional units in the proof of transit obtaining apparatus 810 by using hardware or software.

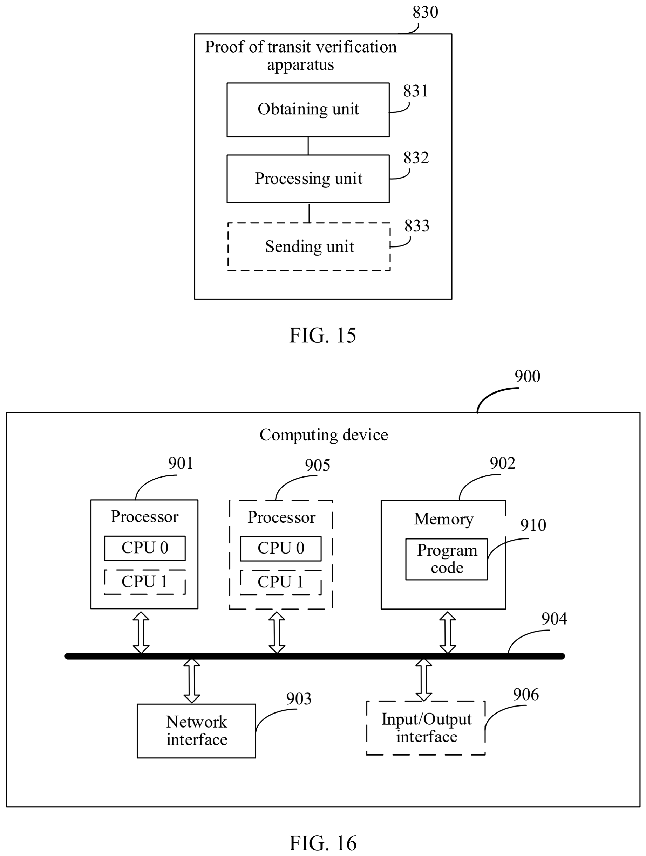

When the software is used for implementation, for example, the processing unit 812 and the obtaining unit 811 are implemented by a software functional unit generated by reading, by at least one processor 901 in FIG. 16, program code stored in a memory 902.

When hardware is used for implementation, for example, the units in FIG. 13 are implemented by different hardware in a computing device, respectively. For example, the processing unit 812 is implemented by some processing resources (for example, one or two cores in a multi-core processor) in at least one processor 901 in FIG. 16, or completed by a programmable device like a field-programmable gate array (field-programmable gate array, FPGA) or a coprocessor. The sending unit 813 is implemented by a network interface 903 in FIG. 16.

FIG. 14 is a diagram of a structure of a proof of transit verification apparatus 820 according to an embodiment of this application. The proof of transit verification apparatus 820 includes an obtaining unit 821 and a verification unit 822.

The apparatus 820 is optionally disposed in the verification node (the observer) in FIG. 1. The obtaining unit 821 is configured to perform (a) in the method S240 shown in FIG. 2. The verification unit 822 is configured to perform (b) in S240 in the method shown in FIG. 2.

The apparatus 820 is optionally disposed in the forwarding node_2, the forwarding node_3, or the forwarding node_4 in FIG. 3. The obtaining unit 821 is configured to perform (a) in S330 in the method shown in FIG. 4. The verification unit 822 is configured to perform (b) in S330 in the method shown in FIG. 4.

**EP 4 716 176 A1**

The apparatus 820 is optionally disposed in the forwarding node_4 in FIG. 5. The obtaining unit 821 is configured to perform S440 in the method shown in FIG. 6. The verification unit 822 is configured to perform S450.

The apparatus 820 is optionally disposed in the SF node_2 or the proxy (the forwarding node_3) in FIG. 7. The obtaining unit 821 is configured to perform (a) in S530 in the method shown in FIG. 9. The verification unit 822 is configured to perform (b) in S530 in the method shown in FIG. 9.

The apparatus 820 is optionally disposed in the 2nd SR endpoint or the 3rd SR endpoint in FIG. 11. The obtaining unit 821 is configured to perform S630 in the method shown in FIG. 11. The verification unit 822 is configured to perform (a) in S640 in the method shown in FIG. 11.

The apparatus embodiment in FIG. 14 is merely an example. For example, division into the units is merely logical function division, and may be other division during actual implementation. For example, a plurality of units or components may be combined or integrated into another system, or some features may be ignored or not performed. Functional units in embodiments of this application may be integrated into one processing unit, each of the units may exist alone physically, or two or more units may be integrated into one unit.

All or some of the units in the proof of transit verification apparatus 820 are implemented by using software, hardware, firmware, or any combination thereof.

For implementation details of the units in the proof of transit verification apparatus 820 and an interaction process between the proof of transit verification apparatus 820 and another device, refer to the descriptions in the foregoing method embodiments. Details are not described herein again.

With reference to a computing device 900 described hereinafter, the following describes some possible implementations of implementing the functional units in the proof of transit verification apparatus 820 by using hardware or software.

When the software is used for implementation, for example, the verification unit 822 are implemented by a software functional unit generated by reading, by at least one processor 901 in FIG. 16, program code stored in a memory 902.

When hardware is used for implementation, for example, the units in FIG. 14 are implemented by different hardware in a computing device, respectively. For example, the verification unit 822 is implemented by some processing resources (for example, one or two cores in a multi-core processor) in at least one processor 901 in FIG. 16, or completed by a programmable device like a field-programmable gate array (field-programmable gate array, FPGA) or a coprocessor. The obtaining unit 821 is implemented by a network interface 903 in FIG. 16.

FIG. 15 is a diagram of a structure of a proof of transit verification apparatus 830 according to an embodiment of this application. The proof of transit verification apparatus 830 includes an obtaining unit 831 and a processing unit 832.

The apparatus 830 is optionally disposed in the controller in FIG. 1. The obtaining unit 831 is configured to perform (a) in S210 in the method shown in FIG. 2. The processing unit 832 is configured to perform (b) in S210 in the method shown in FIG. 2. Optionally, the apparatus 830 further includes a sending unit 833, and the sending unit 833 is configured to perform (c) in S210.

The apparatus 830 is optionally disposed in the controller in FIG. 3. The obtaining unit 831 is configured to perform (a) in S310 in the method shown in FIG. 4. The processing unit 832 is configured to perform (b) in S310 in the method shown in FIG. 4. The sending unit 833 is configured to perform (c) in S310.

The apparatus 830 is optionally disposed in the controller in FIG. 5. The obtaining unit 831 is configured to perform (a) in S410 in the method shown in FIG. 6. The processing unit 832 is configured to perform (b) in S410. The sending unit 833 is configured to perform (c) in S410.

Optionally, the obtaining unit 831 is configured to perform (a) in S510 in the method shown in FIG. 9. The processing unit 832 is configured to perform (b) in S510 in the method shown in FIG. 9. The sending unit 833 is configured to perform (c) in S510.

The apparatus 830 is optionally disposed in the controller in FIG. 11. The obtaining unit 831 is configured to perform (a) in S610 in the method shown in FIG. 11. The processing unit 832 is configured to perform (b) in S610 in the method shown in FIG. 11. The sending unit 833 is configured to perform (c) in S610.

The apparatus embodiment in FIG. 15 is merely an example. For example, division into the units is merely logical function division, and may be other division during actual implementation. For example, a plurality of units or components may be combined or integrated into another system, or some features may be ignored or not performed. Functional units in embodiments of this application may be integrated into one processing unit, each of the units may exist alone physically, or two or more units may be integrated into one unit.

All or some of the units in the proof of transit verification apparatus 830 are implemented by using software, hardware, firmware, or any combination thereof.

For implementation details of the units in the proof of transit verification apparatus 830 and an interaction process between the proof of transit verification apparatus 830 and another device, refer to the descriptions in the foregoing method embodiments. Details are not described herein again.

With reference to a computing device 900 described hereinafter, the following describes some possible implementations of implementing the functional units in the proof of transit verification apparatus 830 by using hardware or software.

When the software is used for implementation, for example, the obtaining unit 831 and the processing unit 832 are implemented by a software functional unit generated by reading, by at least one processor 901 in FIG. 16, program code stored in a memory 902.

When hardware is used for implementation, for example, the units in FIG. 15 are implemented by different hardware in a computing device, respectively. For example, the processing unit 832 is implemented by some processing resources (for example, one or two cores in a multi-core processor) in at least one processor 901 in FIG. 16, or completed by a programmable device like a field-programmable gate array (field-programmable gate array, FPGA) or a coprocessor. The obtaining unit 831 is implemented by a network interface 903 in FIG. 16.

FIG. 16 is a diagram of a structure of a computing device 900 according to an embodiment of this application.

The computing device 900 includes at least one processor 901, a memory 902, and at least one network interface 903.

The processor 901 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits for implementing the solutions in this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The memory 902 is, for example, a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be for carrying or storing expected program code in a form of instructions or a data structure and that can be accessed by a computer. However, the memory 902 is not limited thereto. Optionally, the memory 902 exists independently, and is connected to the processor 901 through an internal connection 904. Alternatively, the memory 902 is optionally integrated with the processor 901.

The network interface 903 is configured to communicate with another device or a communication network by using any apparatus like a transceiver. The network interface 903 includes, for example, at least one of a wired network interface or a wireless network interface. The wired network interface is, for example, an ethernet interface. The ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 901 includes one or more CPUs, such as a CPU 0 and a CPU 1 shown in FIG. 16.

In some embodiments, the computing device 900 optionally includes a plurality of processors, such as the processor 901 and a processor 905 shown in FIG. 16. Each of these processors is, for example, a single-core processor (single-CPU) or a multi-core processor (multi-CPU). The processor herein is optionally one or more devices, circuits, and/or processing cores configured to process data (for example, computer program instructions).

In some embodiments, the computing device 900 further includes the internal connection 904. The processor 901, the memory 902, and the at least one network interface 903 are connected through the internal connection 904. The internal connection 904 includes a path for transferring information between the foregoing components. Optionally, the internal connection 904 is a board or a bus. Optionally, the internal connection 904 is classified into an address bus, a data bus, a control bus, and the like.

In some embodiments, the computing device 900 further includes an input/output interface 906. The input/output interface 906 is connected to the internal connection 904.

Optionally, the processor 901 implements the methods in the foregoing embodiments by reading program code stored in the memory 902, or the processor 901 implements the methods in the foregoing embodiments by using internally stored program code. When the processor 901 implements the methods in the foregoing embodiments by reading the program code stored in the memory 902, the memory 902 stores program code 910 that implements the methods provided in embodiments of this application.

For more details of implementing the foregoing functions by the processor 901, refer to the descriptions in the foregoing method embodiments. Details are not described herein again.

Embodiments in this specification are all described in a progressive manner. For same or similar parts in embodiments, refer to each other. Each embodiment focuses on a difference from other embodiments.

That A refers to B means that A is the same as B or that A is a simple variant of B.

In the specification and claims in embodiments of this application, the terms "first", "second", and the like are for distinguishing between different objects, but are not for describing a particular order of the objects, and cannot be understood as an indication or an implication of relative importance. For example, the first proof of transit and the second proof of transit are for distinguishing between different proofs of transit, but are not for describing a particular order of the proofs of transit, and cannot be understood as that the first proof of transit is more important than the second proof of transit.

Information (including but not limited to user equipment information, user personal information, and the like), data (including but not limited to data for analysis, stored data, displayed data, and the like), and a signal in embodiments of this application are all authorized by a user or fully authorized by all parties, and collection, use, and processing of related data need to comply with related laws, regulations, and standards of related countries and regions. For example, all the identity information in this application are obtained with full authorization.

In embodiments of this application, unless otherwise specified, "at least one" means one or more, and "a plurality of" means two or more. For example, the plurality of forwarding nodes are two or more forwarding nodes.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instruction is loaded and executed on a computer, all or some of the procedures or functions described in embodiments of this application are generated. The computer may be a general-purpose computer, a dedicated computer, a computer network, or other programmable apparatuses. The computer instruction may be stored in a computer-readable storage medium, or may be transmitted from one computer-readable storage medium to another computer-readable storage medium. For example, the computer instruction may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk (SSD)), or the like.

The foregoing embodiments are merely for describing the technical solutions in this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. However, these modifications or replacements do not make the essence of the corresponding technical solutions depart from the scope of the technical solutions in embodiments of this application.

**Claims**

1. A proof of transit obtaining method, wherein the method comprises:

   obtaining, by a first forwarding node, a first data packet, wherein a forwarding path of the first data packet comprises at least two forwarding nodes, and the at least two forwarding nodes comprise the first forwarding node;
   obtaining, by the first forwarding node, location information of the first forwarding node and identity information of the first forwarding node, wherein the location information of the first forwarding node indicates a first location of the first forwarding node on the forwarding path, and the identity information of the first forwarding node indicates an identity of the first forwarding node; and
   obtaining, by the first forwarding node, a first proof of transit based on the location information of the first forwarding node and the identity information of the first forwarding node, wherein the first proof of transit is for proving that the first forwarding node is at the first location on the forwarding path.

2. The method according to claim 1, wherein the at least two forwarding nodes further comprise a second forwarding node, the second forwarding node is an upstream node of the first forwarding node on the forwarding path, and obtaining, by the first forwarding node, the first proof of transit based on the location information of the first forwarding node and the identity information of the first forwarding node comprises:
   obtaining, by the first forwarding node, the first proof of transit based on the location information of the first forwarding node, the identity information of the first forwarding node, location information of the second forwarding node, and identity information of the second forwarding node, wherein the location information of the second forwarding node indicates a second location of the second forwarding node on the forwarding path, and the identity information of the second forwarding node indicates an identity of the second forwarding node.

3. The method according to claim 2, wherein the second forwarding node comprises at least one of a 1st forwarding node on the forwarding path to a previous forwarding node of the first forwarding node on the forwarding path.

4. The method according to claim 2 or 3, wherein after obtaining, by the first forwarding node, the first proof of transit based on the location information of the first forwarding node and the identity information of the first forwarding node, the method further comprises:
verifying, by the first forwarding node, the first proof of transit based on a vector commitment, the location information of the first forwarding node, the identity information of the first forwarding node, the location information of the second forwarding node, and the identity information of the second forwarding node, wherein the vector commitment indicates a correspondence between locations of the at least two forwarding nodes and identities of the at least two forwarding nodes.

5. The method according to any one of claims 1 to 3, wherein after obtaining, by the first forwarding node, the first proof of transit based on the location information of the first forwarding node and the identity information of the first forwarding node, the method further comprises:

obtaining, by the first forwarding node, a second data packet based on the first data packet and the first proof of transit, wherein the first data packet comprises payload data, and the second data packet comprises the first proof of transit and the payload data; and
sending, by the first forwarding node, the second data packet to a third forwarding node, wherein the third forwarding node is a next node of the first forwarding node on the forwarding path.

6. The method according to claim 5, wherein the first data packet further comprises a second proof of transit, and obtaining, by the first forwarding node, the second data packet based on the first data packet and the first proof of transit comprises:

replacing, by the first forwarding node, the second proof of transit in the first data packet with the first proof of transit, to obtain the second data packet; or
adding, by the first forwarding node, the first proof of transit to the first data packet, to obtain the second data packet.

7. The method according to claim 5 or 6, wherein the second data packet further comprises a vector commitment, and the vector commitment indicates a correspondence between the location of the first forwarding node and the identity of the first forwarding node and a correspondence between the location of the second forwarding node and the identity of the second forwarding node.

8. The method according to claim 7, wherein the second data packet comprises an internet protocol version 6 IPv6 extension header, and the IPv6 extension header comprises the first proof of transit and the vector commitment;

the second data packet comprises a network service header NSH, the NSH comprises a metadata field, and the metadata field comprises the first proof of transit and the vector commitment;
the second data packet comprises a multi-protocol label switching MPLS header, and the MPLS header comprises the first proof of transit and the vector commitment;
the second data packet comprises a virtual extensible local area network VXLAN header, and the VXLAN header comprises the first proof of transit and the vector commitment; or
the second data packet comprises an internet protocol security IPsec header, and the IPsec header comprises the first proof of transit and the vector commitment.

9. The method according to claim 8, wherein the IPv6 extension header comprises a segment routing header SRH, the SRH comprises a first type-length-value TLV and a second TLV, the first TLV in the SRH comprises the first proof of transit, and the second TLV in the SRH comprises the vector commitment;

the IPv6 extension header comprises an application-aware networking APN packet header, the APN packet header comprises an application-aware networking identifier APN ID, and the APN ID comprises the first proof of transit and the vector commitment;

the IPv6 extension header comprises a destination options header DOH, the DOH comprises a first TLV and a second TLV, the first TLV in the DOH comprises the first proof of transit, and the second TLV in the DOH comprises the vector commitment; or
the IPv6 extension header comprises a hop-by-hop options header HBH, the HBH comprises a first TLV and a second TLV, the first TLV in the HBH comprises the first proof of transit, and the second TLV in the HBH comprises the vector commitment.

10. The method according to any one of claims 5 to 9, wherein the first data packet comprises a first encrypted route table entry, and sending, by the first forwarding node, the second data packet to the third forwarding node comprises:

decrypting, by the first forwarding node, the first encrypted route table entry by using a key of the first forwarding node, to obtain an identifier of the third forwarding node; and sending, by the first forwarding node, the second data packet to the third forwarding node based on the identifier of the third forwarding node; or
decrypting, by the first forwarding node, the first encrypted route table entry by using a key of the first forwarding node, to obtain an egress interface of the first forwarding node; and sending, by the first forwarding node, the second data packet based on the egress interface of the first forwarding node, wherein the egress interface of the first forwarding node is configured to communicate with the third forwarding node.

11. The method according to any one of claims 5 to 10, wherein the second data packet comprises a second encrypted route table entry, the second encrypted route table entry is obtained through encryption based on a key of the third forwarding node, and the second encrypted route table entry indicates a forwarding subpath, within the forwarding path, from the third forwarding node to a fifth forwarding node.

12. The method according to claim 11, wherein the second encrypted route table entry comprises at least one of node identifier ciphertext or egress interface ciphertext, the node identifier ciphertext is ciphertext obtained by encrypting an identifier of the fifth forwarding node based on the key of the third forwarding node, the egress interface ciphertext is ciphertext obtained by encrypting an identifier of an egress interface of the third forwarding node based on the key of the third forwarding node, and the egress interface of the third forwarding node is configured to communicate with the fifth forwarding node.

13. The method according to any one of claims 1 to 3, wherein the first data packet comprises a second proof of transit, and obtaining, by the first forwarding node, the first data packet comprises: receiving, by the first forwarding node, the first data packet from the second forwarding node, wherein the second forwarding node is the upstream node of the first forwarding node on the forwarding path; and
the method further comprises: verifying, by the first forwarding node, the second proof of transit based on a vector commitment, the identity information of the second forwarding node, and the location information of the second forwarding node, wherein the vector commitment indicates a correspondence between the location of the first forwarding node and the identity of the first forwarding node and a correspondence between the location of the second forwarding node and the identity of the second forwarding node.

14. The method according to claim 13, wherein verifying, by the first forwarding node, the second proof of transit based on the vector commitment, the identity information of the second forwarding node, and the location information of the second forwarding node comprises:
verifying, by the first forwarding node, the second proof of transit based on the vector commitment, the identity information of the second forwarding node, the location information of the second forwarding node, identity information of a fourth forwarding node, and location information of the fourth forwarding node, wherein the fourth forwarding node comprises at least one of the head node on the forwarding path to a previous forwarding node of the second forwarding node on the forwarding path.

15. The method according to claim 13 or 14, wherein after verifying, by the first forwarding node, the second proof of transit based on the vector commitment, the identity information of the second forwarding node, and the location information of the second forwarding node, the method further comprises:

in response to determining that the verification on the second proof of transit fails, discarding, by the first forwarding node, the first data packet, or outputting alert information; or
in response to determining that the verification on the second proof of transit succeeds, forwarding, by the first forwarding node, the first data packet.

16. The method according to any one of claim 4, claims 7 to 9, or claims 13 to 15, wherein the vector commitment comprises at least one of a KZG polynomial commitment, a fast Reed-Solomon interactive oracle proof FRI commitment, a succinct non-interactive argument of knowledge SNARK proof, an RSA accumulator, an FC function commitment, a Pedersen commitment, a Merkle tree Merkle tree commitment, or a Verkle tree commitment.

17. The method according to any one of claims 1 to 3, wherein after obtaining, by the first forwarding node, the first proof of transit based on the location information of the first forwarding node and the identity information of the first forwarding node, the method further comprises:
    sending, by the first forwarding node, the first proof of transit to a verification node.

18. The method according to any one of claims 1 to 17, wherein a packet header in the first data packet comprises a trusted-path identifier, the trusted-path identifier indicates to obtain a proof of transit, and obtaining, by the first forwarding node, the first proof of transit based on the location information of the first forwarding node and the identity information of the first forwarding node comprises:
    in response to identifying the trusted-path identifier in the first data packet, obtaining, by the first forwarding node, the first proof of transit based on the location information of the first forwarding node and the identity information of the first forwarding node.

19. The method according to claim 18, wherein the packet header in the first data packet comprises an IPv6 base header, a destination address field in the IPv6 base header comprises a segment identifier SID of the first forwarding node, and the SID of the first forwarding node comprises the trusted-path identifier.

20. The method according to claim 19, wherein the SID of the first forwarding node comprises a function field, and the function field comprises the trusted-path identifier; or
    the SID of the first forwarding node comprises an arguments field, and the arguments field comprises the trusted-path identifier.

21. The method according to any one of claims 1 to 20, wherein the identity information of the first forwarding node comprises at least one of an address, a certificate, a public key, the segment identifier SID, a multi-protocol label switching MPLS label, an access control token token, a router identifier router ID, a host name, or identity information obtained through encryption based on the key of the first forwarding node.

22. The method according to claim 21, wherein the identity information obtained through encryption based on the key of the first forwarding node comprises at least one of a signature, a message authentication code MAC tag, a zero-knowledge NIZK proof, or a Sigma protocol proof.

23. The method according to any one of claims 1 to 22, wherein the forwarding path comprises a service function chain, and the at least one forwarding node comprises a service function SF node on the service function chain;

    the forwarding path comprises a segment list segment list path, and the at least two forwarding nodes comprise a segment routing SR endpoint on the segment list path; or
    the forwarding path comprises a label switched path, and the at least two forwarding nodes comprise a label switching router LSR on the label switched path.

24. A proof of transit verification method, wherein the method comprises:

    obtaining, by a verification node, a vector commitment, identity information of a first forwarding node, location information of the first forwarding node, and a first proof of transit, wherein the location information of the first forwarding node indicates a first location of the first forwarding node on a forwarding path, the forwarding path comprises at least two forwarding nodes, the at least two forwarding nodes comprise the first forwarding node, the identity information of the first forwarding node indicates an identity of the first forwarding node, the vector commitment indicates a correspondence between the location of the first forwarding node and the identity of the first forwarding node, and the first proof of transit is for proving that the first forwarding node is at the first location on the forwarding path; and
    verifying, by the verification node, the first proof of transit based on the vector commitment, the identity information of the first forwarding node, and the location information of the first forwarding node.

25. The method according to claim 24, wherein the at least two forwarding nodes further comprise a second forwarding node, the second forwarding node is an upstream node of the first forwarding node on the forwarding path, and verifying, by the verification node, the first proof of transit based on the vector commitment, the identity information of the first forwarding node, and the location information of the first forwarding node comprises:
verifying, by the verification node, the first proof of transit based on the vector commitment, the location information of the first forwarding node, the identity information of the first forwarding node, location information of the second forwarding node, and identity information of the second forwarding node, wherein the vector commitment further indicates a correspondence between a location of the second forwarding node and an identity of the second forwarding node.

26. A proof of transit verification method, wherein the method comprises:

obtaining, by a controller, identity information of a first forwarding node, location information of the first forwarding node, identity information of a second forwarding node, and location information of the second forwarding node, wherein the identity information of the first forwarding node indicates an identity of the first forwarding node, the location information of the first forwarding node indicates a location of the first forwarding node on a forwarding path, the identity information of the second forwarding node indicates an identity of the second forwarding node, the location information of the second forwarding node indicates a location of the second forwarding node on the forwarding path, and the forwarding path comprises the first forwarding node and the second forwarding node; and

obtaining, by the controller, a vector commitment based on the identity information of the first forwarding node, the location information of the first forwarding node, the identity information of the second forwarding node, and the location information of the second forwarding node, wherein the vector commitment indicates a correspondence between the location of the first forwarding node and the identity of the first forwarding node and a correspondence between the location of the second forwarding node and the identity of the second forwarding node, and the vector commitment is for verifying a proof of transit.

27. The method according to claim 26, wherein after obtaining, by the controller, the vector commitment based on identity information of the at least two forwarding nodes and location information of the at least two forwarding nodes, the method further comprises:

sending, by the controller, the vector commitment to the first forwarding node, the second forwarding node, or a verification node; or
storing, by the controller, a correspondence between an identifier of the forwarding path and the vector commitment in a database.

28. A proof of transit obtaining apparatus, wherein the apparatus is disposed on a first forwarding node, and comprises:

an obtaining unit, configured to: obtain a first data packet, wherein a forwarding path of the first data packet comprises at least two forwarding nodes, and the at least two forwarding nodes comprise the first forwarding node; and obtain location information of the first forwarding node and identity information of the first forwarding node, wherein the location information of the first forwarding node indicates a first location of the first forwarding node on the forwarding path, and the identity information of the first forwarding node indicates an identity of the first forwarding node; and
a processing unit, configured to obtain a first proof of transit based on the location information of the first forwarding node and the identity information of the first forwarding node, wherein the first proof of transit is for proving that the first forwarding node is at the first location on the forwarding path.

29. The apparatus according to claim 28, wherein the at least two forwarding nodes further comprise a second forwarding node, the second forwarding node is an upstream node of the first forwarding node on the forwarding path, and the processing unit is configured to obtain the first proof of transit based on the location information of the first forwarding node, the identity information of the first forwarding node, location information of the second forwarding node, and identity information of the second forwarding node, wherein the location information of the second forwarding node indicates a second location of the second forwarding node on the forwarding path, and the identity information of the second forwarding node indicates an identity of the second forwarding node.

30. The apparatus according to claim 28 or 29, wherein the processing unit is further configured to verify the first proof of transit based on a vector commitment, the location information of the first forwarding node, the identity information of the first forwarding node, the location information of the second forwarding node, and the identity information of the second forwarding node, wherein the vector commitment indicates a correspondence between locations of the at least two forwarding nodes and identities of the at least two forwarding nodes.

31. The apparatus according to any one of claims 28 to 30, wherein the obtaining unit is further configured to obtain, for the first forwarding node, a second data packet based on the first data packet and the first proof of transit, wherein the first data packet comprises payload data, and the second data packet comprises the first proof of transit and the payload data; and the apparatus further comprises a sending unit, configured to send the second data packet, wherein the third forwarding node is a next node of the first forwarding node on the forwarding path.

32. The apparatus according to claim 31, wherein the first data packet comprises a first encrypted route table entry, and the sending unit is configured to: decrypt the first encrypted route table entry by using a key of the first forwarding node, to obtain an identifier of the third forwarding node; and send, for the first forwarding node, the second data packet to the third forwarding node based on the identifier of the third forwarding node; or decrypt the first encrypted route table entry by using a key of the first forwarding node, to obtain an egress interface of the first forwarding node; and send, for the first forwarding node, the second data packet based on the egress interface of the first forwarding node, wherein the egress interface of the first forwarding node is configured to communicate with the third forwarding node.

33. The apparatus according to claim 31 or 32, wherein the first data packet comprises a second proof of transit, and the obtaining unit is configured to receive the first data packet from the second forwarding node, wherein the second forwarding node is the upstream node of the first forwarding node on the forwarding path; and the processing unit is further configured to verify the second proof of transit based on the vector commitment, the identity information of the second forwarding node, and the location information of the second forwarding node, wherein the vector commitment indicates a correspondence between the location of the first forwarding node and the identity of the first forwarding node and a correspondence between the location of the second forwarding node and the identity of the second forwarding node.

34. The apparatus according to claim 33, wherein the processing unit is further configured to: in response to determining that the verification on the second proof of transit fails, discard the first data packet, or output alert information; or in response to determining that the verification on the second proof of transit succeeds, indicate the sending unit to forward the first data packet.

35. The apparatus according to claim 28 or 29, wherein the apparatus further comprises a sending unit, configured to send the first proof of transit to a verification node.

36. A proof of transit verification apparatus, wherein the apparatus comprises:

an obtaining unit, configured to obtain a vector commitment, identity information of a first forwarding node, location information of the first forwarding node, and a first proof of transit, wherein the location information of the first forwarding node indicates a first location of the first forwarding node on a forwarding path, the forwarding path comprises at least two forwarding nodes, the at least two forwarding nodes comprise the first forwarding node, the identity information of the first forwarding node indicates an identity of the first forwarding node, the vector commitment indicates a correspondence between the location of the first forwarding node and the identity of the first forwarding node, and the first proof of transit is for proving that the first forwarding node is at the first location on the forwarding path; and
a verification unit, configured to verify the first proof of transit based on the vector commitment, the identity information of the first forwarding node, and the location information of the first forwarding node.

37. The apparatus according to claim 36, wherein the at least two forwarding nodes further comprise a second forwarding node, the second forwarding node is an upstream node of the first forwarding node on the forwarding path, and the verification unit is configured to verify the first proof of transit based on the vector commitment, the location information of the first forwarding node, the identity information of the first forwarding node, location information of the second forwarding node, and identity information of the second forwarding node, wherein the vector commitment further indicates a correspondence between a location of the second forwarding node and an identity of the second forwarding node.

38. A proof of transit verification apparatus, wherein the apparatus comprises:

an obtaining unit, configured to obtain identity information of a first forwarding node, location information of the first forwarding node, identity information of a second forwarding node, and location information of the second forwarding node, wherein the identity information of the first forwarding node indicates an identity of the first forwarding node, the location information of the first forwarding node indicates a location of the first forwarding node on a forwarding path, the identity information of the second forwarding node indicates an identity of the second forwarding node, the location information of the second forwarding node indicates a location of the second forwarding node on the forwarding path, and the forwarding path comprises the first forwarding node and the second forwarding node; and

a processing unit, configured to obtain a vector commitment based on the identity information of the first forwarding node, the location information of the first forwarding node, the identity information of the second forwarding node, and the location information of the second forwarding node, wherein the vector commitment indicates a correspondence between the location of the first forwarding node and the identity of the first forwarding node and a correspondence between the location of the second forwarding node and the identity of the second forwarding node, and the vector commitment is for verifying a proof of transit.

39. The apparatus according to claim 38, wherein the apparatus further comprises:

a sending unit, configured to send, for the controller, the vector commitment to the first forwarding node, the second forwarding node, or a verification node; or

a storage unit, configured to store a correspondence between an identifier of the forwarding path and the vector commitment in a database.

40. A computing device, wherein the computing device comprises a processor, the processor is coupled to a memory, the memory stores at least one computer program instruction, and the at least one computer program instruction is loaded and executed by the processor, to enable the computing device to implement the method according to any one of claims 1 to 23.

41. A computing device, wherein the computing device comprises a processor, the processor is coupled to a memory, the memory stores at least one computer program instruction, and the at least one computer program instruction is loaded and executed by the processor, to enable the computing device to implement the method according to claim 24 or 25.

42. A computing device, wherein the computing device comprises a processor, the processor is coupled to a memory, the memory stores at least one computer program instruction, and the at least one computer program instruction is loaded and executed by the processor, to enable the computing device to implement the method according to claim 26 or 27.

43. A network system, wherein the system comprises the apparatus according to any one of claims 28 to 35, the apparatus according to claim 36 or 37, and the apparatus according to claim 38 or 39; or the system comprises the device according to claim 40, the device according to claim 41, and the device according to claim 42.

44. A computer-readable storage medium, wherein the storage medium stores at least one instruction; and when the instruction is run on a computer, the computer is enabled to perform the method according to any one of claims 1 to 27.

45. A computer program product, wherein the computer program product comprises one or more computer program instructions; and when the computer program instruction is loaded and run by a computer, the computer is enabled to perform the method according to any one of claims 1 to 27.

FIG. 1

FIG. 2

FIG. 3

| Head node | Forwarding node_2 | Forwarding node_3 | Controller |
|---|---|---|---|

S310: Send a
commitment

Send the commitment

Send the commitment

S320: Send a data
packet_2 (including a
proof of transit p_1)

S330: Verify the proof of transit p_1

S330: Send a data
packet_3 (including a
proof of transit p_2)

Verify the proof of transit p_2

FIG. 4

FIG. 5

Head node      Forwarding node_2      Tail node      Controller

S410: Send a
vector commitment

S420: Send a data
packet_2

S430: Send a data
packet_i+1

S440: Obtain a proof of transit

S450: Verify the proof of transit

FIG. 6

FIG. 7

EP 4 716 176 A1

Data packet

| Transport encapsulation | Network service header (NSH) | Original packet/frame | (a) |

NSH

| Base header (base header) | Service path header (service path header) | Context header (context header) | (b) |

Service path header (service path header)

| Service path identifier (SPI) | Service index (SI) |

(c)

Context header (context header)

| Metadata class (metadata class) | Type (type) | U | Length (length) |

| Variable-length metadata (location information, identity information, commitment, and proof of transit) |

(d)

FIG. 8

1st SF node     2nd SF node     3rd SF node     Controller

S510: Send a vector commitment

Send the vector commitment

Send the vector commitment

S520: Send a data packet_2

S530: Verify a proof of transit p_1

S540: Send a data packet_3

Verify a proof of transit p_2

FIG. 9

IPv6 data packet

| IPv6 base header | Segment routing header | IPv6 payload |
|---|---|---|

| Next header (next header) | Extension header length (Hdr Ext Len) | Routing type (routing type) | Quantity of segments left (SL) |
|---|---|---|---|
| Last element index (last entry) | Flags (flags) | Data packets in a same group (tag) | |

Segment list (segment list)

| Segment list [0] |
|---|
| Segment list [1] |
| ... |
| ... |
| Segment list [n–1] (identity information of a 2$^{nd}$ node) |
| Segment list [n] (identity information of a head node) |
| Optional TLV |

| Locator information (location information) | Function (function) information | Arguments (arguments) |
|---|---|---|

SRv6 SID (128 bits)

FIG. 10

Head node | 2nd SR endpoint | 3rd SR endpoint | Controller

S610: Send a vector commitment

Send the vector commitment

S620: Send an IPv6 data packet_2

S630: Verify a proof of transit p_1

S640: Send a data packet_3

Verify a proof of transit p_2

FIG. 11

Head node | 2nd SR endpoint | 3rd SR endpoint | Controller

S710: Send a vector commitment

S720: Send an IPv6 data packet_2

S730: Send an IPv6 data packet_i+1

S740: Obtain a proof of transit

S750: Verify the proof of transit

FIG. 12

810

Proof of transit obtaining
apparatus

Obtaining unit · 811

Processing unit · 812

Sending unit · 813

**FIG. 13**

820

Proof of transit verification
apparatus

Obtaining unit · 821

Verification unit · 822

**FIG. 14**

830

Proof of transit verification
apparatus

Obtaining unit — 831

Processing unit — 832

Sending unit — 833

FIG. 15

900

Computing device

901 Processor
CPU 0
CPU 1

905 Processor
CPU 0
CPU 1

902 Memory
Program code — 910

904

Network interface — 903

Input/Output interface — 906

FIG. 16

## INTERNATIONAL SEARCH REPORT

| | |
|---|---|
| International application No. | |
| | **PCT/CN2024/089064** |

**A. CLASSIFICATION OF SUBJECT MATTER**

H04L45/74(2022.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, USTXT, EPTXT, WOTXT, CNKI, 3GPP, IETF: 证明, 签名, 令牌, 身份, ID, 标识, 位置, 地址, 关联, 绑定, 转发, 路由, 链路, 通信, 向量, 承诺, 按序, 逐跳, attestation, proof, signature, token, identity, ID, location, address, association, bind, forward, rout, link, communication, vector, commitment, sequence, hop

**C. DOCUMENTS CONSIDERED TO BE RELEVANT**

| Category* | Citation of document, with indication, where appropriate, of the relevant passages | Relevant to claim No. |
|---|---|---|
| A | US 2019260667 A1 (TELEFONICA, S.A.) 22 August 2019 (2019-08-22)<br>entire document | 1-45 |
| A | CN 108667626 A (SHAANXI NORMAL UNIVERSITY et al.) 16 October 2018 (2018-10-16)<br>entire document | 1-45 |
| A | CN 106066958 A (INTERNATIONAL BUSINESS MACHINES CORP.) 02 November 2016 (2016-11-02)<br>entire document | 1-45 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 July 2024** | **09 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
**Information on patent family members**

</div>

| International application No. |
| --- |
| **PCT/CN2024/089064** |

| Patent document cited in search report | | | Publication date (day/month/year) | Patent family member(s) | | | Publication date (day/month/year) |
| --- | --- | --- | --- | --- | --- | --- | --- |
| US | 2019260667 | A1 | 22 August 2019 | EP | 3528430 | A1 | 21 August 2019 |
|  |  |  |  | EP | 3528430 | B1 | 10 May 2023 |
|  |  |  |  | ES | 2950584 | T3 | 11 October 2023 |
|  |  |  |  | US | 11057293 | B2 | 06 July 2021 |
| CN | 108667626 | A | 16 October 2018 | CN | 108667626 | B | 03 March 2020 |
| CN | 106066958 | A | 02 November 2016 | JP | 2016208510 | A | 08 December 2016 |
|  |  |  |  | JP | 6691420 | B2 | 28 April 2020 |
|  |  |  |  | US | 2016316365 | A1 | 27 October 2016 |
|  |  |  |  | US | 9578505 | B2 | 21 February 2017 |
|  |  |  |  | US | 2017055154 | A1 | 23 February 2017 |
|  |  |  |  | US | 9763092 | B2 | 12 September 2017 |
|  |  |  |  | CN | 106066958 | B | 12 October 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310784326

- CN 202310892814X